(19) Europäisches Patentamt
European Patent Office
Office européen des brevets

(11) EP 4 648 385 A1

(12) **EUROPEAN PATENT APPLICATION**
published in accordance with Art. 153(4) EPC

(43) Date of publication:
**12.11.2025 Bulletin 2025/46**

(21) Application number: **24744135.5**

(22) Date of filing: **10.01.2024**

(51) International Patent Classification (IPC):
***H04L 65/60*** *(2022.01)*

(52) Cooperative Patent Classification (CPC):
**G06T 9/00; H04L 65/60; H04L 65/80; H04L 67/10; H04L 67/5651**

(86) International application number:
**PCT/CN2024/071553**

(87) International publication number:
**WO 2024/152959 (25.07.2024 Gazette 2024/30)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.01.2023 CN 202310084789**

(71) Applicant: **Huawei Technologies Co., Ltd.**
**Shenzhen, Guangdong 518129 (CN)**

(72) Inventors:
- **LIN, Zehui**
  **Shenzhen, Guangdong 518129 (CN)**
- **TANG, Mengxiao**
  **Shenzhen, Guangdong 518129 (CN)**
- **WEI, Rong**
  **Shenzhen, Guangdong 518129 (CN)**
- **CAI, Kangying**
  **Shenzhen, Guangdong 518129 (CN)**
- **WANG, Jingye**
  **Shenzhen, Guangdong 518129 (CN)**

(74) Representative: **Eisenführ Speiser**
**Patentanwälte Rechtsanwälte PartGmbB**
**Johannes-Brahms-Platz 1**
**20355 Hamburg (DE)**

# (54) END-CLOUD COLLABORATION SYSTEM, ENCODING METHOD, DECODING METHOD AND ELECTRONIC DEVICE

(57) Embodiments of this application provide a device-cloud collaboration system, an encoding and decoding method, and an electronic device. The device-cloud collaboration system includes a server and a terminal device. The server is configured to: perform a first-phase operation of graphics processing, to generate original data of an intermediate result of graphics processing of a current frame; determine first difference data of the intermediate result based on the original data of the intermediate result and simulation data corresponding to the intermediate result; encode the first difference data of the intermediate result, to obtain a bitstream; and send the bitstream. The terminal device is configured to: receive the bitstream; decode the bitstream, to obtain second difference data of the intermediate result; determine reconstructed data of the intermediate result based on the second difference data of the intermediate result and the simulation data corresponding to the intermediate result; and perform a second-phase operation of graphics processing based on the reconstructed data of the intermediate result, to generate digital content for displaying. In this application, a compression bit rate can be reduced while picture display quality is ensured. In this way, better device-cloud collaboration effect is achieved.

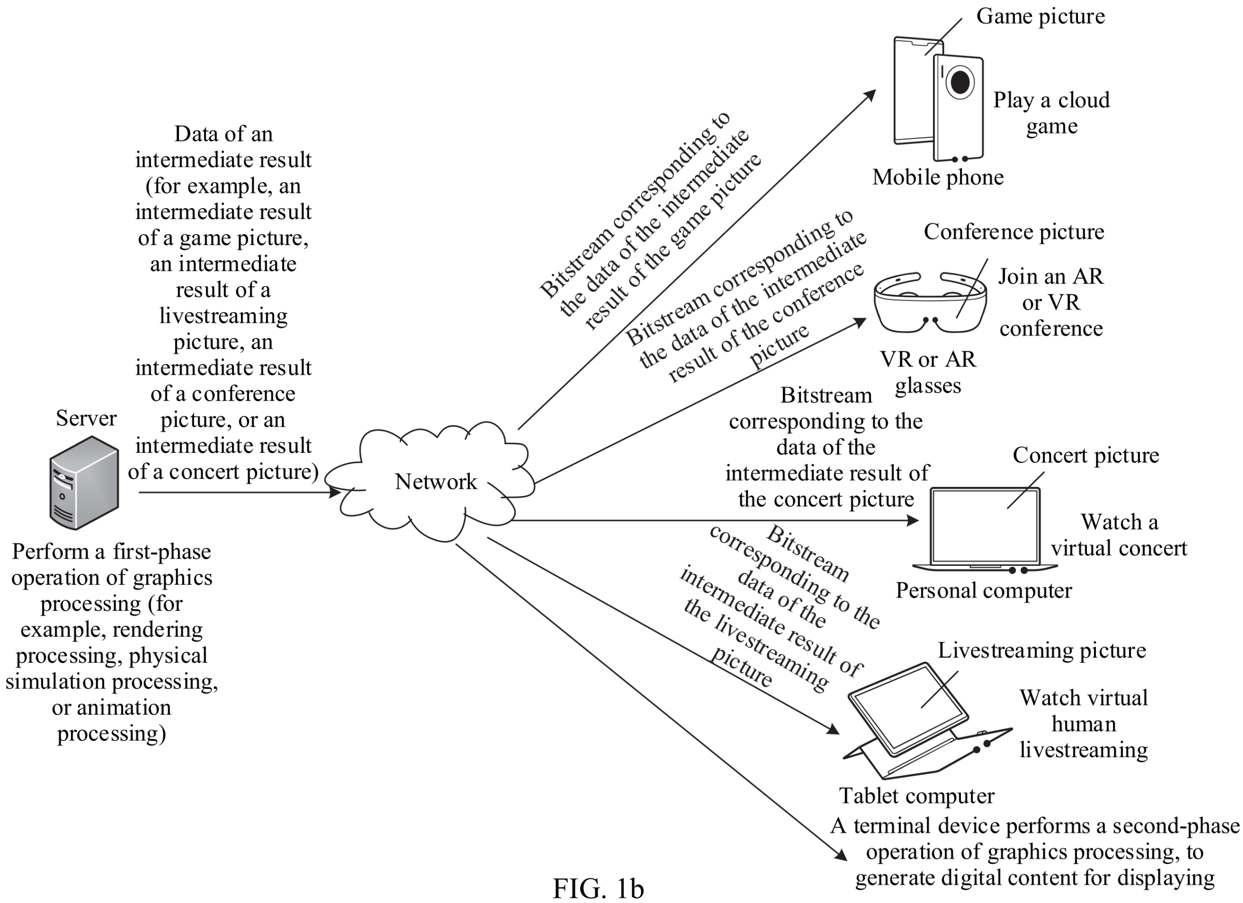
Game picture
Play a cloud game
Mobile phone
Bitstream corresponding to the data of the intermediate result of the game picture
Data of an intermediate result (for example, an intermediate result of a game picture, an intermediate result of a livestreaming picture, an intermediate result of a conference picture, or an intermediate result of a concert picture)
Conference picture
Join an AR or VR conference
Bitstream corresponding to the data of the intermediate result of the conference picture
VR or AR glasses
Server
Bitstream corresponding to the data of the intermediate result of the concert picture
Concert picture
Network
Watch a virtual concert
Personal computer
Perform a first-phase operation of graphics processing (for example, rendering processing, physical simulation processing, or animation processing)
Bitstream corresponding to the data of the intermediate result of the livestreaming picture
Livestreaming picture
Watch virtual human livestreaming
Tablet computer
A terminal device performs a second-phase operation of graphics processing, to generate digital content for displaying

FIG. 1b

## Description

This application claims priority to Chinese Patent Application No. 202310084789.2, filed with the China National Intellectual Property Administration on January 17, 2023 and entitled "DEVICE-CLOUD COLLABORATION SYSTEM, ENCODING AND DECODING METHOD, AND ELECTRONIC DEVICE", which is incorporated herein by reference in its entirety.

## TECHNICAL FIELD

Embodiments of this application relate to the field of graphics processing, and in particular, to a device-cloud collaboration system, an encoding and decoding method, and an electronic device.

## BACKGROUND

In many scenarios (for example, games and virtual reality (Virtual Reality, VR)/augmented reality (Augmented Reality, AR)), graphics processing methods such as rendering (Rendering), physical simulation (physical simulation), and animation (animation) need to be used to generate a picture, so that the obtained picture is more realistic. This improves user experience. Graphics processing such as rendering, physical simulation, and animation requires strong computing power. However, due to limitations of objective physical conditions such as a device size and power consumption, computing power of a terminal-side device is usually far weaker than that of a cloud-side server. Therefore, graphics processing algorithms such as rendering, physical simulation, and animation are usually deployed on the cloud-side server, the cloud-side server performs graphics processing such as rendering, physical simulation, and animation, and then compresses and sends a picture/video obtained through graphics processing to the terminal-side device, and the terminal-side device performs displaying.

However, a large amount of bandwidth needs to be occupied for transmission of the picture generated through graphics processing such as rendering, physical simulation, and animation. This is one of major costs of an application carrier that is currently involved in graphics processing such as rendering, physical simulation, and animation. Therefore, to reduce bandwidth, the cloud-side server may only encode and transmit an intermediate result of graphics processing requiring high computing overheads to the terminal-side device, and then the terminal-side device can obtain a high-quality picture by performing simple graphics processing on the intermediate result of graphics processing obtained through decoding. This is device-cloud collaborative picture processing. Compared with direct transmission of the picture generated through graphics processing, device-cloud collaborative graphics processing can greatly save bandwidth and reduce operation costs while achieving similar display effect.

**In** the conventional technology, the intermediate result of graphics processing is usually directly encoded. This manner results in a large amount of encoded data and low encoding efficiency.

## SUMMARY

This application provides a device-cloud collaboration system, an encoding and decoding method, and an electronic device, to resolve the foregoing technical problem. According to the encoding method, a compression rate of an intermediate result generated in a graphics processing process can be increased, and therefore, encoding efficiency is improved.

According to a first aspect, an embodiment of this application provides a device-cloud synchronization system. The device-cloud collaboration system includes a server and a terminal device.

The server (for example, a cloud server) is configured to: perform a first-phase operation of graphics processing, to generate original data of an intermediate result of graphics processing of a current frame; determine first difference data of the intermediate result based on the original data of the intermediate result and simulation data corresponding to the intermediate result; encode the first difference data of the intermediate result, to obtain a bitstream; and send the bitstream to the terminal device.

The terminal device is configured to: receive the bitstream; decode the bitstream, to obtain second difference data of the intermediate result corresponding to the current frame; generate reconstructed data of the intermediate result based on the second difference data of the intermediate result and the simulation data corresponding to the intermediate result; and perform a second-phase operation of graphics processing based on the reconstructed data of the intermediate result, to generate digital content for displaying.

The simulation data may also be referred to as pre-baked data, and is data that is generated in a baking process and that is used in a real-time graphics processing process. Therefore, because the simulation data corresponding to the intermediate result has strong correlation with the original data of the intermediate result, and the difference data determined based on the simulation data corresponding to the intermediate result and the original data of the intermediate result may have many values of 0 or small values, a data amount of the bitstream obtained by encoding the difference data is smaller than that obtained by directly encoding the original data of the intermediate result. Therefore, in a case of same quality, the solution provided in this application can reduce a compression bit rate (that is, high encoding efficiency), thereby reducing consumption of transmission bandwidth and storage space of the terminal-side device, reducing frame freezing, and improving user experience.

For example, an application scenario of the device-cloud collaboration system in this application may include but is not limited to a cloud game, a VR or AR conference, virtual human livestreaming, a virtual concert, and the like. This is not limited in this application.

For example, one or more types of graphics processing are used in a device-cloud collaboration process in this application. Graphics processing may include but is not limited to rendering (Rendering) processing, physical simulation (physical simulation) processing, animation (animation) processing, and the like. This is not limited in this application.

For example, rendering processing, physical simulation processing, and animation processing are used in a device-cloud collaborative cloud game process. For another example, rendering processing is used in a device-cloud collaborative VR or AR conference process. For another example, rendering processing and physical simulation processing are used in a device-cloud collaborative virtual human livestreaming process. For another example, rendering processing is used in a device-cloud collaborative virtual concert process.

For example, graphics processing may include a first phase and a second phase. The first phase is used to generate data of the intermediate result, and the second phase is used to generate, based on the data of the intermediate result generated in the first phase, the digital content for displaying. In a device-cloud collaboration scenario, the server is configured to: perform the first-phase operation of graphics processing, to generate data of the intermediate result (referred to as the original data of the intermediate result); and transmit, to the terminal device, the bitstream obtained by encoding the data of the intermediate result. The terminal device receives and decodes the bitstream, to obtain the reconstructed data of the intermediate result; and then performs the second-phase operation of graphics processing based on the reconstructed data of the intermediate result, to generate the digital content for displaying.

Rendering processing: A DDGI process is used as an example.

In a first phase (generating data of the intermediate result), according to a DDGI algorithm, each probe samples illumination and distance information in an environment, and generates corresponding illumination sample map data and distance sample map data. In a second phase (generating the digital content for displaying based on the data of the intermediate result generated in the first phase), real-time rendering and coloring are performed on a scene based on the illumination sample map data and the distance sample map data that are generated in the first phase, to generate a frame of picture that is finally used for display.

Physical simulation processing:

In a first phase, physical calculation is performed on states such as displacement and rotation of a physically simulated object according to a physical simulation algorithm, and state data of the physically simulated object is generated. In a second phase, state information such as displacement and rotation of the physically simulated object in a scene is updated based on the state data of the physically simulated object generated in the first phase, and finally the state information is drawn and displayed on a screen.

Animation processing:

In a first phase, a skeleton location and a direction of an animation character are calculated according to a motion rule of the animation character, and skeleton location data and direction data of the character in the current frame are generated. In a second phase: A posture of the animation character in the current frame is determined based on the skeleton location data and the direction data of the character in the current frame, and finally the posture is drawn and displayed on the screen.

For example, the data of the intermediate result may be data that is generated in the graphics processing process and that is used to generate data content for displaying. Data that is generated in a rendering processing process and that is used to generate data content for displaying may be referred to as data of an intermediate rendering result. Data that is generated in a physical simulation processing process and that is used to generate the data content for displaying may be referred to as data of an intermediate physical simulation result. Data that is generated in an animation process and that is used to generate the data content for displaying may be referred to as data of an intermediate animation result.

Optionally, after performing the first-phase operation of graphics processing, the server may continue to perform the second-phase operation of graphics processing, or may stop performing graphics processing. This is not limited in this application.

In a possible implementation, the server performs the first-phase operation and the second-phase operation of graphics processing, and generates the digital content for displaying. In this case, the server may not display the digital content for displaying. In a possible implementation, the server performs only the first-phase operation of graphics processing. In this case, the server does not generate the digital content for displaying, and generates only the original data of the intermediate result in the first-phase operation process of graphics processing. That is, the original data of the intermediate result may be data generated in the process in which the server performs the first-phase operation and the second-phase operation of graphics processing, or may be data generated in the process in which the server performs the first-phase operation of graphics processing. This is not limited in this application. In this application, description is provided by using an example in which the original data of the intermediate result is the data generated in the process of the first-phase operation of graphics processing of the server.

It should be understood that, that the device-cloud collaboration system includes the server and the terminal device may mean that the device-cloud collaboration system includes the server (that is, a hardware part) and/or an application (that is, a software part) deployed on the server, and the terminal device (that is, a hardware part) and/or an application (that is, a software part) deployed on the terminal device. When the device-cloud collaboration system is applied to the following scenarios: a cloud game, a VR or AR conference, virtual human livestreaming, and a virtual concert, corresponding applications may be a cloud game program, a VR or AR conference program, a virtual human livestreaming program, or a virtual concert program.

For example, a life cycle of the program may include a program development phase (which may also be referred to as digital asset production) and a program running phase.

For example, a life cycle of the cloud game program may include a game program development phase (that is, a process in which a game developer develops a game) and a game program running phase (which may also be referred to as a game running phase, that is, a process in which a user plays the game via the terminal device).

For another example, a life cycle of the VR or AR conference program may include a VR or AR conference program development phase (that is, a process in which a VR or AR conference program developer develops the VR or AR conference program) and a VR or AR conference program running phase (that is, a process in which a plurality of users join a VR or AR conference via terminal devices).

For another example, a life cycle of the virtual human livestreaming program may include a virtual human livestreaming program development phase (that is, a process in which a virtual human livestreaming program developer develops the virtual human livestreaming program) and a virtual human livestreaming program running phase (that is, a real-time livestreaming process).

For another example, a life cycle of the virtual concert program may include a virtual concert program development phase (that is, a process in which a virtual concert program developer develops the virtual concert program) and a virtual concert program running phase (that is, a concert process).

For example, in the program development phase, an application is developed on a development device, to obtain an application on a server side and an application on a terminal device side. An application development process may include but is not limited to: producing a model, producing an animation, setting a physical simulation parameter, setting a rendering parameter, writing a rendering algorithm, generating simulation data, writing application code (for example, game program code, VR or AR conference program code, virtual human livestreaming program code, and virtual concert program code), and the like. This is not limited in this application.

For example, after the application on the server side developed in the program development phase is deployed on the server, and the application on the terminal device side is deployed on the terminal device, the device-cloud collaboration system may be started, to enter the program running phase in this case. In the program running phase, device-cloud collaborative graphics processing may be performed in real time. For example, device-cloud collaborative rendering processing, device-cloud collaborative physical simulation processing, and device-cloud collaborative animation processing may be performed in real time.

For example, the process of deploying the application on the server side on the server may include: deploying, on the server, the model, the animation, the physical simulation parameter, the rendering parameter, the rendering algorithm, the simulation data, and the application code on the server side that are produced in the program development phase. The process of deploying the application on the terminal device side on the terminal device may include: deploying, on the terminal device, the model, the animation, the physical simulation parameter, the rendering parameter, the rendering algorithm, the simulation data, and the application code on the terminal device side that are produced in the program development phase. In other words, the server and the terminal device have synchronized the simulation data before entering the program running phase.

For example, the development device may be a third-party device independent of the server and the terminal device that are included in the device-cloud collaboration system, or may be the server included in the device-cloud collaboration system. This is not limited in this application. In this application, description is provided by using an example in which the development device is the third-party device independent of the server and the terminal device that are included in the device-cloud collaboration system.

It should be understood that the reconstructed data of the intermediate result and the original data of the intermediate result include data of a same type, and various types of data may be the same or different. When the server performs lossy encoding on the original data of the intermediate result, the reconstructed data of the intermediate result obtained by the terminal device is different from the original data of the intermediate result encoded by the server. When the server performs lossless encoding on the original data of the intermediate result, the reconstructed data of the intermediate result obtained by the terminal device is the same as the original data of the intermediate result encoded by the server.

It should be understood that, when the server performs the lossy encoding on the original data of the intermediate result, the reconstructed data of the intermediate result is close to the original data of the intermediate result, and even the original data of the intermediate result is basically restored.

It should be understood that, in the process of performing graphics processing, the terminal device does not need to generate the reconstructed data of the intermediate result, that is, does not need to perform the first-phase operation of graphics processing, and directly performs the second-phase operation of graphics processing based on the reconstructed data of the intermediate result, to generate the digital content for displaying. That is, the terminal device performs only a part of processing operations included in graphics processing. Compared with a manner in which a central server directly transmits the digital content for displaying, the device-cloud collaboration can greatly save bandwidth, reduce operation costs, and improve user experience while achieving similar display effect.

It should be understood that, in the program running phase, when the server performs the first-phase operation and the second-phase operation of graphics processing, to generate the digital content for displaying, if the server performs lossy encoding on the original data of the intermediate result, the digital content for displaying generated by the server is different from the digital content for displaying generated by the terminal device. If the server performs lossless encoding on the original data of the intermediate result, the digital content for displaying generated by the server is the same as the digital content for displaying generated by the terminal device.

For example, the digital content for displaying may include but is not limited to a picture, a video, and the like. This is not limited in this application.

For example, in the cloud game scenario, the digital content for displaying may include a game picture. In the VR or AR conference scenario, the digital content for displaying may include a conference picture. In the virtual concert scenario, the digital content for displaying may include a concert picture. In the virtual human livestreaming scenario, the digital content for displaying may include a livestreaming picture.

According to the first aspect, the simulation data corresponding to the intermediate result is generated by a third-party device.

The server is further configured to receive the simulation data corresponding to the intermediate result.

The terminal device is further configured to receive the simulation data corresponding to the intermediate result.

The third-party device may be a development device.

According to any one of the first aspect or the foregoing implementations of the first aspect, the simulation data corresponding to the intermediate result is generated by the server.

The server is further configured to send the simulation data corresponding to the intermediate result.

The terminal device is further configured to receive the simulation data corresponding to the intermediate result.

According to any one of the first aspect or the foregoing implementations of the first aspect, the simulation data corresponding to the intermediate result is data generated by simulating graphics processing in advance.

For example, a simulation data generation process (which may also be referred to as baking, that is, a pre-baked data generation process) may be as follows: In the program development phase, when a factor of real-time user interaction is excluded, data required in the program running phase is pre-calculated by simulating graphics processing in the program running phase, and a pre-calculation result is stored for real-time use in graphics processing in the program running phase. The stored data may be referred to as the simulation data. For example, in the simulation data generation process, some parameters that require more computing power than those in graphics processing in the program running phase may be used, to improve precision of the simulation data, for example, higher calculating precision, a higher calculating granularity, or a longer running time.

For example, one or more frames of simulation data may be generated in the simulation data generation process, and the simulation data corresponding to the intermediate result (that is, the simulation data corresponding to the intermediate result corresponding to the current frame) may be all or a part of the simulation data generated in the simulation data generation process. A graphics processing module (for example, a graphics processing unit (Graphics Processing Unit, GPU) or a network processor (Neural-network Processing Unit, NPU)) of the server has a capability of learning of the simulation data corresponding to the intermediate result corresponding to the current frame.

It should be understood that one frame may be a picture at one moment (for example, when graphics processing is rendering processing, one frame of simulation data may be a pre-baked map at one moment), or may be data of another type (other than a picture) at one moment (for example, when graphics processing is particle simulation processing, one frame of simulation data may be state information of a particle at one moment; when graphics processing is rigid body simulation processing, one frame of simulation data may be state information of a rigid body at one moment; when graphics processing is elastic body simulation processing, one frame of simulation data may be state information of a spring at one moment; or when graphics processing is animation processing, one frame of simulation data may be a skeleton location and a skeleton direction at one moment).

According to any one of the first aspect or the foregoing implementations of the first aspect, the server is specifically configured to calculate a residual between the simulation data corresponding to the intermediate result and the original data of the intermediate result, to obtain the first difference data of the intermediate result.

In this way, because the original data of the intermediate result has the strong correlation with the simulation data corresponding to the intermediate result, a data amount of the bitstream obtained by encoding residual data between the original data of the intermediate result and the simulation data corresponding to the intermediate result is smaller than that obtained by directly encoding the original data of the intermediate result. Therefore, encoding efficiency is higher. Scenarios such as a game, a VR conference, and livestreaming have a high real-time requirement. The solution provided in this application can reduce the data amount of the bitstream, thereby reducing a bandwidth requirement in real-time transmission, reducing frame freezing, improving user experience, and reducing operation costs of an activity organizer.

In addition, when graphics processing is rendering processing, in the conventional technology in which residual data between original data of an intermediate result corresponding to a previous frame and the original data of the intermediate result corresponding to the current frame is encoded, because original data of an intermediate result corresponding to each frame includes a part that cannot be pre-calculated under impact of user interaction and a part that can be pre-calculated without the impact of the user interaction, the residual data between the original data of the intermediate result corresponding to the previous frame and the original data of the intermediate result corresponding to the current frame includes residual data of the part that cannot be pre-calculated under the impact of the user interaction and residual data of the part that can be pre-calculated without the impact of the user interaction, but the difference data between the simulation data corresponding to the intermediate result corresponding to the current frame and the original data of the intermediate result corresponding to the current frame includes only the residual data of the part that cannot be pre-calculated under the impact of the user interaction. It can be learned that, in this application, a data amount of the encoded residual data is smaller, and a data amount of the bitstream obtained by encoding the residual data is smaller. This can improve encoding efficiency.

Next, when graphics processing is rendering processing, an error is introduced in a process of generating the original data of the intermediate result corresponding to the previous frame, however, in a simulation data generation process, no error is introduced or an introduced error is small, so that a data amount of the encoded difference data can be reduced, and a data amount of the bitstream obtained by encoding the difference data is smaller. This can improve encoding efficiency.

According to any one of the first aspect or the foregoing implementations of the first aspect, the server is specifically configured to: predict the intermediate result based on the simulation data corresponding to the intermediate result, to obtain predicted data of the intermediate result; and calculate a residual between the original data of the intermediate result and the predicted data of the intermediate result, to obtain the first difference data of the intermediate result.

Because a data amount of the simulation data is large, a large amount of memory is occupied. A plurality of frames of simulation data with a large time interval are generated in the simulation data generation process, to reduce memory occupation. The predicted data of the intermediate result selected from interpolated data obtained by performing interpolation based on a plurality of frames of simulation data corresponding to the intermediate result corresponding to the current frame is closer to the original data of the intermediate result corresponding to the current frame in time than the simulation data corresponding to the intermediate result corresponding to the current frame. Therefore, the predicted data of the intermediate result has stronger correlation with the original data of the intermediate result corresponding to the current frame. In this way, difference data between the original data of the intermediate result corresponding to the current frame and the predicted data of the intermediate result is less than the difference data between the original data of the intermediate result corresponding to the current frame and the simulation data corresponding to the intermediate result corresponding to the current frame. Further, compared with the foregoing method of determining the first difference data of the intermediate result corresponding to the current frame by calculating the residual between the simulation data corresponding to the intermediate result corresponding to the current frame and the original data of the intermediate result corresponding to the current frame, this manner of determining the first difference data can improve encoding efficiency to a greater extent.

According to any one of the first aspect or the foregoing implementations of the first aspect, the terminal device is specifically configured to perform summation on the second difference data of the intermediate result and the simulation data corresponding to the intermediate result, to obtain the reconstructed data of the intermediate result.

According to any one of the first aspect or the foregoing implementations of the first aspect, the terminal device is specifically configured to: predict the intermediate result based on the simulation data corresponding to the intermediate result, to obtain the predicted data of the intermediate result; and perform summation on the predicted data of the intermediate result and the second difference data of the intermediate result, to obtain the reconstructed data of the intermediate result.

It should be understood that any one of the first aspect or the implementations of the first aspect is a step performed in a program running phase.

According to a second aspect, an embodiment of this application provides an encoding method. The method includes: performing a first-phase operation of graphics processing, to generate original data of an intermediate result of graphics processing of a current frame; determining first difference data of the intermediate result based on the original data of the intermediate result and simulation data corresponding to the intermediate result; encoding the first difference data of the intermediate result, to obtain a bitstream; and sending the bitstream.

According to the second aspect, determining the first difference data of the intermediate result based on the original data of the intermediate result and the simulation data corresponding to the intermediate result includes: calculating a residual between the original data of the intermediate result and the simulation data corresponding to the intermediate result, to obtain the first difference data of the intermediate result.

According to any one of the second aspect or the foregoing implementations of the second aspect, determining the first difference data of the intermediate result based on the original data of the intermediate result and the simulation data corresponding to the intermediate result includes:

predicting the intermediate result based on the simulation data corresponding to the intermediate result, to obtain predicted data of the intermediate result; and calculating a residual between the original data of the intermediate result and the predicted data of the intermediate result, to obtain the first difference data of the intermediate result.

According to any one of the second aspect or the foregoing implementations of the second aspect, the method further includes: receiving the simulation data corresponding to the intermediate result, where the simulation data corresponding to the intermediate result is generated by a third-party device.

According to any one of the second aspect or the foregoing implementations of the second aspect, the method further includes: generating the simulation data corresponding to the intermediate result, and sending the simulation data corresponding to the intermediate result.

According to any one of the second aspect or the foregoing implementations of the second aspect, the simulation data corresponding to the intermediate result is data generated by simulating graphics processing in advance.

According to any one of the second aspect or the foregoing implementations of the second aspect, a device-cloud collaboration system is applied to any one of the following scenarios: a cloud game, a VR or AR conference, virtual human livestreaming, and a virtual concert.

For technical effect corresponding to any one of the second aspect and the implementations of the second aspect, refer to the description of the technical effect corresponding to any one of the first aspect and the implementations of the first aspect. Details are not described herein again.

According to any one of the second aspect or the foregoing implementations of the second aspect, determining the first difference data of the intermediate result based on the original data of the intermediate result and the simulation data corresponding to the intermediate result includes: extracting first sub-data from the original data of the intermediate result, to obtain the first difference data of the intermediate result, where the first sub-data is data that is in the original data of the intermediate result and whose value is different from a value of data at a corresponding location in the simulation data corresponding to the intermediate result. The method further includes: writing location description information of the first sub-data into the bitstream, where the location description information is used to determine a location of the first sub-data in the original data of the intermediate result.

For example, it is assumed that the original data of the intermediate result is [A, B, C, D, E], and the simulation data corresponding to the intermediate result is [A, B, C, D, F]. In this case, the first sub-data is [E].

A data amount of the bitstream obtained by encoding the first sub-data is smaller than that obtained by encoding the original data of the intermediate result in the conventional technology. This can improve encoding efficiency.

In a possible implementation, the location description information may be information about the location of the first sub-data in the original data of the intermediate result. For example, in the foregoing example, location description information of the first sub-data [E] is "5", and "5" indicates a $5^{th}$ location in the original data of the intermediate result.

In a possible implementation, the location description information may be information about a location of other data (data other than the first sub-data in the original data of the intermediate result) in the original data of the intermediate result. For example, in the original data of the intermediate result, a target location of data whose value is different from a value of data at a corresponding location in the simulation data corresponding to the intermediate result may be determined; and data at a location other than the target location in the original data of the intermediate result is replaced with a placeholder. For example, in the foregoing example, the original data of the intermediate result is [A, B, C, D, E], and the simulation data corresponding to the intermediate result is [A, B, C, D, F]. If the placeholder is "0", [0, 0, 0, 0, E] is obtained through placeholder replacement, where [E] is the first sub-data, and [0, 0, 0, 0] is the location description information. In this case, both the first sub-data and the location description information may be encoded.

According to any one of the second aspect or the foregoing implementations of the second aspect, determining the first difference data of the intermediate result based on the original data of the intermediate result and the simulation data corresponding to the intermediate result includes: predicting the intermediate result based on the simulation data corresponding to the intermediate result, to obtain predicted data of the intermediate result; and extracting second sub-data from the original data of the intermediate result, to obtain the first difference data of the intermediate result, where the second sub-data is data that is in the original data of the intermediate result and whose value is different from a value of data at a corresponding location in the predicted data of the intermediate result. The method further includes: writing location description information of the second sub-data into the bitstream, where the location description information is used to determine a location of the second sub-data in the original data of the intermediate result.

According to any one of the second aspect or the foregoing implementations of the second aspect, the simulation data corresponding to the intermediate result is a plurality of frames of simulation data. Predicting the intermediate result based on the simulation data corresponding to the intermediate result, to obtain the predicted data of the intermediate result includes: performing interpolation based on the plurality of frames of simulation data corresponding to the intermediate result, to obtain interpolated data; and selecting the predicted data of the intermediate result from the interpolated data. In this way, simulation data that is close to the original data of the intermediate result corresponding to the current frame in time can be quickly determined through interpolation.

According to any one of the second aspect or the foregoing implementations of the second aspect, graphics processing is physical simulation processing, the simulation data corresponding to the intermediate result is initial state information of a physically simulated object, and the original data of the intermediate result is current state information of the physically simulated object. Predicting the intermediate result based on the simulation data corresponding to the intermediate result, to obtain the predicted data of the intermediate result includes: performing state prediction based on the initial state information of the physically simulated object, to generate current predicted state information of the physically simulated object; and determining the predicted data of the intermediate result based on the current predicted state information of the physically simulated object.

According to any one of the second aspect or the foregoing implementations of the second aspect, the method further includes: writing identification information of the simulation data corresponding to the intermediate result into the bitstream. In this way, the terminal device can learn of the simulation data corresponding to the intermediate result, to subsequently determine the reconstructed data of the intermediate result.

According to any one of the second aspect or the foregoing implementations of the second aspect, graphics processing includes any one of the following: rendering processing, physical simulation processing, or animation processing.

It should be understood that any one of the second aspect or the implementations of the second aspect is a step performed in a program running phase.

According to a third aspect, an embodiment of this application provides a decoding method. The method includes: receiving a bitstream, where the bitstream includes encoded data of first difference data of an intermediate result corresponding to a current frame, the first difference data indicates a difference between original data of the intermediate result and simulation data corresponding to the intermediate result, and the original data of the intermediate result is generated by a server by performing a first-phase operation of graphics processing; decoding the bitstream, to obtain second difference data of the intermediate result corresponding to the current frame; generating reconstructed data of the intermediate result based on the second difference data of the intermediate result and the simulation data corresponding to the intermediate result; and performing a second-phase operation of graphics processing based on the reconstructed data of the intermediate result, to generate digital content for displaying.

It should be noted that "indicating" in the first difference data indicating the difference between the original data of the intermediate result and the simulation data corresponding to the intermediate result may be a direct indication, or may be an indirect indication. When "indicating" is the indirect indication, in an implementation, the first difference data indicates a difference between the original data of the intermediate result and predicted data corresponding to the intermediate result. The predicted data corresponding to the intermediate result is obtained through prediction based on the simulation data corresponding to the intermediate result.

According to the third aspect, the method further includes: receiving the simulation data corresponding to the intermediate result, where the simulation data corresponding to the intermediate result is generated by a third-party device and/or the server.

According to any one of the third aspect or the foregoing implementations of the third aspect, the simulation data corresponding to the intermediate result is data generated by simulating graphics processing in advance.

According to any one of the third aspect or the foregoing implementations of the third aspect, a device-cloud collaboration system is applied to any one of the following scenarios: a cloud game, a VR or AR conference, virtual human livestreaming, and a virtual concert.

According to any one of the third aspect or the foregoing implementations of the third aspect, generating the reconstructed data of the intermediate result based on the second difference data of the intermediate result and the simulation data corresponding to the intermediate result includes: performing summation on the second difference data of the intermediate result and the simulation data corresponding to the intermediate result, to obtain the reconstructed data of the intermediate result.

According to any one of the third aspect or the foregoing implementations of the third aspect, generating the reconstructed data of the intermediate result based on the second difference data of the intermediate result and the simulation data corresponding to the intermediate result includes: extracting, based on location description information obtained from the bitstream, third sub-data from the simulation data corresponding to the intermediate result; and splicing the third sub-data and the second difference data of the intermediate result, to obtain the reconstructed data of the intermediate result.

For example, a location of the third sub-data in the simulation data corresponding to the intermediate result corresponding to the current frame is different from a location of first sub-data in the original data of the intermediate result corresponding to the current frame. The location of the third sub-data in the simulation data corresponding to the intermediate result corresponding to the current frame is a location, other than the location corresponding to the first sub-data, in the simulation data corresponding to the intermediate result corresponding to the current frame.

For example, it is assumed that the original data of the intermediate result corresponding to the current frame is [A, B, C, D, E], the simulation data corresponding to the intermediate result corresponding to the current frame is [A, B, C, D, F], and a location, corresponding to the first sub-data, in the simulation data corresponding to the intermediate result corresponding to the current frame is a $5^{th}$ location. In this case, the extracted third sub-data is [A, B, C, D].

According to any one of the third aspect or the foregoing implementations of the third aspect, generating the reconstructed data of the intermediate result based on the second difference data of the intermediate result and the simulation data corresponding to the intermediate result includes: predicting the intermediate result based on the simulation data corresponding to the intermediate result, to obtain predicted data of the intermediate result; and determining the reconstructed data of the intermediate result based on the predicted data of the intermediate result and the second difference data of the intermediate result.

According to any one of the third aspect or the foregoing implementations of the third aspect, the simulation data corresponding to the intermediate result is a plurality of frames of simulation data. Predicting the intermediate result based on the simulation data corresponding to the intermediate result, to obtain the predicted data of the intermediate result includes: performing interpolation based on the plurality of frames of simulation data corresponding to the intermediate result, to obtain interpolated data; and selecting the predicted data of the intermediate result from the interpolated data.

According to any one of the third aspect or the foregoing implementations of the third aspect, graphics processing is physical simulation processing, the simulation data corresponding to the intermediate result is initial state information of a physically simulated object, and the reconstructed data of the intermediate result is current state information of the physically simulated object. Predicting the intermediate result based on the simulation data corresponding to the intermediate result, to obtain the predicted data of the intermediate result includes: performing state prediction based on the initial state information of the physically simulated object, to generate current predicted state information of the physically simulated object; and determining the predicted data of the intermediate result based on the current predicted state information of the physically simulated object.

According to any one of the third aspect or the foregoing implementations of the third aspect, determining the reconstructed data of the intermediate result based on the predicted data of the intermediate result and the second difference data of the intermediate result includes: performing summation on the predicted data of the intermediate result and the second difference data of the intermediate result, to obtain the reconstructed data of the intermediate result.

According to any one of the third aspect or the foregoing implementations of the third aspect, determining the reconstructed data of the intermediate result based on the predicted data of the intermediate result and the second difference data of the intermediate result includes: extracting fourth sub-data from the predicted data of the intermediate result based on location description information obtained from the bitstream; and splicing the fourth sub-data and the second difference data of the intermediate result, to obtain the reconstructed data of the intermediate result.

For example, a location of the fourth sub-data in the predicted data of the intermediate result is different from a location of second sub-data in the original data of the intermediate result corresponding to the current frame. The location of the fourth sub-data in the predicted data of the intermediate result is a location, other than the location corresponding to the second sub-data, in the predicted data of the intermediate result.

According to any one of the third aspect or the foregoing implementations of the third aspect, the method further includes: determining, based on identification information obtained from the bitstream, the simulation data corresponding to the intermediate result, that is, determining the simulation data corresponding to the intermediate result corresponding to the current frame.

It should be understood that a terminal device may alternatively determine, in another manner, the simulation data corresponding to the intermediate result corresponding to the current frame. For example, a graphics processing module of the terminal device has a capability of learning of the simulation data corresponding to the intermediate result corresponding to the current frame, and the graphics processing module of the terminal device can determine the simulation data corresponding to the intermediate result corresponding to the current frame. For another example, the terminal device may send a request to the server, to obtain the identification information of the simulation data corresponding to the intermediate result corresponding to the current frame. This is not limited in this application.

According to any one of the third aspect or the foregoing implementations of the third aspect, graphics processing includes any one of the following: rendering processing, physical simulation processing, or animation processing.

It should be understood that any one of the third aspect or the implementations of the third aspect is a step performed in a program running phase.

Any one of the third aspect and the implementations of the third aspect corresponds to any one of the second aspect and the implementations of the second aspect. For technical effect corresponding to any one of the third aspect and the implementations of the third aspect, refer to the technical effect corresponding to any one of the second aspect and the implementations of the second aspect. Details are not described herein again.

According to a fourth aspect, an embodiment of this application provides a device-cloud collaboration system. The device-cloud collaboration system includes a server and a terminal device.

The server is configured to: perform a first-phase operation of graphics processing, to generate original data of an intermediate result of graphics processing of a current frame; determine a reference frame of the current frame based on simulation data corresponding to the intermediate result; determine residual data of the intermediate result based on the reference frame and the original data of the intermediate result; encode the residual data of the intermediate result, to obtain a bitstream; and send the bitstream to the terminal device.

The terminal device is configured to: receive the bitstream; parse the bitstream, to obtain the residual data of the intermediate result corresponding to the current frame; determine the reference frame of the current frame based on the simulation data corresponding to the intermediate result; perform reconstruction based on the reference frame and the residual data of the intermediate result, to obtain reconstructed data of the intermediate result; and perform a second-phase operation of graphics processing based on the reconstructed data of the intermediate result, to generate digital content for displaying.

In this way, because the original data of the intermediate result has strong correlation with the simulation data corresponding to the intermediate result, a data amount of the bitstream obtained by encoding the original data of the intermediate result based on the simulation data corresponding to the intermediate result as the reference frame is smaller than that obtained by directly encoding the original data of the intermediate result. Therefore, encoding efficiency is higher.

In addition, when graphics processing is rendering processing, a data amount of the residual data of the intermediate result is less than a data amount of residual data between original data of an intermediate result corresponding to a previous frame and the original data of the intermediate result corresponding to the current frame. Therefore, this application has higher encoding efficiency than the conventional technology in which the residual data between the original data of the intermediate result corresponding to the previous frame and the original data of the intermediate result corresponding to the current frame is encoded.

Next, when graphics processing is rendering processing, an error is introduced in a process of generating original data of an intermediate result corresponding to each frame, however, in a simulation data generation process, no error is introduced or an introduced error is small, so that a data amount of encoded difference data can be reduced, and a data amount of the bitstream obtained by encoding difference data is smaller. This can improve encoding efficiency.

Next, for a case in which the current frame is a key frame (namely, an I frame) (or the current frame is not a frame in a video sequence, and is an independent frame of picture), in the conventional technology, intra encoding is performed on original data of an intermediate result corresponding to the key frame, however, in this application, inter encoding is performed on the original data of the intermediate result corresponding to the key frame. Therefore, in this application, an amount of encoded data is smaller, a data amount of the bitstream obtained through encoding is smaller, and encoding efficiency is higher.

It should be understood that the fourth aspect is a step performed in a program running phase.

According to the fourth aspect, the simulation data corresponding to the intermediate result is generated by a third-party device.

The server is further configured to receive the simulation data corresponding to the intermediate result.

The terminal device is further configured to receive the simulation data corresponding to the intermediate result.

According to any one of the fourth aspect or the foregoing implementations of the fourth aspect, the simulation data corresponding to the intermediate result is generated by the server.

The server is further configured to send the simulation data corresponding to the intermediate result.

The terminal device is further configured to receive the simulation data corresponding to the intermediate result.

According to any one of the fourth aspect or the foregoing implementations of the fourth aspect, the simulation data corresponding to the intermediate result is data generated by simulating graphics processing in advance.

According to any one of the fourth aspect or the foregoing implementations of the fourth aspect, the device-cloud collaboration system is applied to any one of the following scenarios: a cloud game, a VR or AR conference, virtual human livestreaming, and a virtual concert.

According to a fifth aspect, an embodiment of this application provides an encoding method. The encoding method includes: performing a first-phase operation of graphics processing, to generate original data of an intermediate result of graphics processing of a current frame; determining a reference frame of the current frame based on simulation data corresponding to the intermediate result; determining residual data of the intermediate result based on the reference frame and original data of the intermediate result; encoding the residual data of the intermediate result, to obtain a bitstream; and sending the bitstream.

For technical effect of the fifth aspect, refer to the descriptions of the technical effect of the fourth aspect. Details are not described herein again.

It should be noted that the current frame may be all content of the current frame, or may be partial content of the current frame. For example, in an encoding/decoding process, after the current frame is divided into a plurality of blocks, prediction and entropy encoding/entropy decoding are performed on each block. In this case, a to-be-encoded/to-be-decoded current block may be considered as the current frame, and the reference frame of the current block is determined according to the method in this application. When a block is considered as the current frame to be encoded/decoded, different reference frames may be used for different blocks in a frame in which the block is located, so that better encoding/decoding effect is achieved for each block. In this application, to-be-encoded content is the intermediate result of the current frame. In this case, after the intermediate result is divided into blocks, a corresponding reference frame may be determined for each block according to the method in this application.

According to the fifth aspect, the method further includes: receiving the simulation data corresponding to the intermediate result, where the simulation data corresponding to the intermediate result is generated by a third-party device.

According to any one of the fifth aspect or the foregoing implementations of the fifth aspect, the method further includes: generating the simulation data corresponding to the intermediate result, and sending the simulation data corresponding to the intermediate result.

According to any one of the fifth aspect or the foregoing implementations of the fifth aspect, the simulation data corresponding to the intermediate result is data generated by simulating graphics processing in advance.

According to any one of the fifth aspect or the foregoing implementations of the fifth aspect, a device-cloud collaboration system is applied to any one of the following scenarios: a cloud game, a VR or AR conference, virtual human livestreaming, and a virtual concert.

According to any one of the fifth aspect or the foregoing implementations of the fifth aspect, determining the reference frame of the current frame based on simulation data corresponding to the intermediate result includes: using the simulation data corresponding to the intermediate result as the reference frame of the current frame.

According to any one of the fifth aspect or the foregoing implementations of the fifth aspect, determining the reference frame of the current frame based on simulation data corresponding to the intermediate result includes: predicting the intermediate result based on the simulation data corresponding to the intermediate result, to obtain predicted data of the intermediate result; and using the predicted data of the intermediate result as the reference frame of the current frame.

According to any one of the fifth aspect or the foregoing implementations of the fifth aspect, determining the reference frame of the current frame based on simulation data corresponding to the intermediate result includes: determining a first rate-distortion loss corresponding to a case in which when the simulation data corresponding to the intermediate result is the reference frame, inter prediction is performed on the original data of the intermediate result corresponding to the current frame; determining a second rate-distortion loss corresponding to a case in which when original data of an intermediate result corresponding to an encoded frame is the reference frame, inter prediction is performed on the original data of the intermediate result corresponding to the current frame; and when the first rate-distortion loss is less than or equal to the second rate-distortion loss, using the simulation data corresponding to the intermediate result as the reference frame of the current frame.

For example, when the first rate-distortion loss is greater than the second rate-distortion loss, the original data of the intermediate result corresponding to the encoded frame is used as the reference frame of the current frame.

For example, the original data of the intermediate result corresponding to the current frame may be divided into a plurality of data blocks (which may also be referred to as to-be-encoded blocks or coding units). For one of the plurality of data blocks, inter prediction may be performed on a first data block based on the simulation data corresponding to the intermediate result corresponding to the current frame, to obtain a prediction block 1; and inter prediction is performed on the first data block based on the original data of the intermediate result corresponding to the encoded frame, to determine a prediction block 2 corresponding to the first data block. Then the first rate-distortion loss is determined based on the prediction block 1 and data of the first data block, and the second rate-distortion loss is determined based on the prediction block 2 and data of the first data block. When the first rate-distortion loss is less than or equal to the second rate-distortion loss, the simulation data corresponding to the intermediate result corresponding to the current frame is selected as the reference frame of the current frame. Correspondingly, the prediction block 1 is selected as a prediction block of the first data block. When the first rate-distortion loss is greater than the second rate-distortion loss, the original data of the intermediate result corresponding to the encoded frame is selected as the reference frame of the current frame. Correspondingly, the prediction block 2 is selected as a prediction block of the first data block.

In this way, an optimal reference frame can be selected from the simulation data corresponding to the intermediate result corresponding to the current frame and the original data of the intermediate result corresponding to the encoded frame.

For example, the residual data includes a plurality of residual blocks, and the plurality of residual blocks one-to-one correspond to the plurality of data blocks. When the first rate-distortion loss is less than or equal to the second rate-distortion loss, a residual between the prediction block 1 and the data of the first data block may be calculated, to obtain a residual block corresponding to the first data block. For example, when the first rate-distortion loss is greater than the second rate-distortion loss, a residual between the prediction block 2 and the data of the first data block may be calculated, to obtain a residual block corresponding to the first data block.

That is, for different data blocks in the original data of the intermediate result corresponding to the current frame, prediction blocks may be selected from different reference frames. In this way, a residual may be calculated each time based on data of each data block and a prediction block whose data is most similar to the data of the data block, so that a data amount of the residual block can be reduced, and a data amount of the bitstream obtained by encoding the residual data can be reduced. This further improves encoding efficiency.

According to any one of the fifth aspect or the foregoing implementations of the fifth aspect, determining the reference frame of the current frame based on simulation data corresponding to the intermediate result includes: determining a third rate-distortion loss corresponding to a case in which when the predicted data of the intermediate result is the reference frame, inter prediction is performed on the original data of the intermediate result corresponding to the current frame; determining a second rate-distortion loss corresponding to a case in which when original data of an intermediate result corresponding to an encoded frame is the reference frame, inter prediction performed, on the original data of the intermediate result corresponding to the current frame; and when the third rate-distortion loss is less than or equal to the second rate-distortion loss, using the predicted data of the intermediate result as the reference frame of the current frame.

For example, when the third rate-distortion loss is greater than the second rate-distortion loss, the original data of the intermediate result corresponding to the encoded frame is determined as the reference frame.

For example, the original data of the intermediate result corresponding to the current frame may be divided into a plurality of data blocks (which may also be referred to as to-be-encoded blocks or coding units). For one of the plurality of data blocks, inter prediction may be performed on a first data block based on the predicted data of the intermediate result, to determine a prediction block 3 corresponding to the first data block; and inter prediction is performed on the first data block based on the original data of the intermediate result corresponding to the encoded frame, to determine a prediction block 2 corresponding to the first data block. Then the third rate-distortion loss is determined based on the prediction block 3 and data of the first data block, and the second rate-distortion loss is determined based on the prediction block 2 and the data of the first data block. When the third rate-distortion loss is less than or equal to the second rate-distortion loss, the predicted data of the intermediate result is selected as the reference frame of the current frame. Correspondingly, the prediction block 3 is selected as a prediction block of the first data block. When the third rate-distortion loss is greater than the second rate-distortion loss, the original data of the intermediate result corresponding to the encoded frame is selected as the reference frame of the current frame. Correspondingly, the prediction block 2 is selected as a prediction block of the first data block.

In this way, an optimal reference frame can be selected from the simulation data corresponding to the intermediate result and the original data of the intermediate result corresponding to the encoded frame.

For example, when the third rate-distortion loss is less than or equal to the second rate-distortion loss, a residual between the prediction block 3 and the data of the first data block may be calculated, to obtain a residual block corresponding to the first data block.

For example, when the third rate-distortion loss is greater than the second rate-distortion loss, a residual between the prediction block 2 and the data of the first data block may be calculated, to obtain a residual block corresponding to the first data block.

It should be understood that, when the first rate-distortion loss is the smallest in the first rate-distortion loss, the second rate-distortion loss, and the third rate-distortion loss, the simulation data corresponding to the intermediate result corresponding to the current frame may be used as the reference frame. When the second rate-distortion loss is the smallest in the first rate-distortion loss, the second rate-distortion loss, and the third rate-distortion loss, the original data of the intermediate result corresponding to the encoded frame may be used as the reference frame. When the third rate-distortion loss is the smallest in the first rate-distortion loss, the second rate-distortion loss, and the third rate-distortion loss, the predicted data of the intermediate result may be used as the reference frame.

According to any one of the fifth aspect or the foregoing implementations of the fifth aspect, graphics processing includes any one of the following: rendering processing, physical simulation processing, or animation processing.

It should be understood that any one of the fifth aspect or the implementations of the fifth aspect is a step performed in a program running phase.

According to a sixth aspect, an embodiment of this application provides a decoding method. The decoding method includes: receiving a bitstream, where the bitstream includes encoded data of residual data of an intermediate result corresponding to a current frame, the residual data of the intermediate result indicates a difference between original data of the intermediate result and a reference frame corresponding to the current frame, and the original data of the intermediate result is generated by a server by performing a first-phase operation of graphics processing; parsing the bitstream, to obtain the residual data of the intermediate result corresponding to the current frame; determining the reference frame of the current frame based on simulation data corresponding to the intermediate result; performing reconstruction based on the reference frame and the residual data of the intermediate result, to obtain reconstructed data of the intermediate result; and performing a second-phase operation of graphics processing based on the reconstructed data of the intermediate result, to generate digital content for displaying.

According to the sixth aspect, the method further includes: receiving the simulation data corresponding to the intermediate result, where the simulation data corresponding to the intermediate result is generated by a third-party device and/or the server.

According to any one of the sixth aspect or the foregoing implementations of the sixth aspect, the simulation data corresponding to the intermediate result is data generated by simulating graphics processing in advance.

According to any one of the sixth aspect or the foregoing implementations of the sixth aspect, a device-cloud collaboration system is applied to any one of the following scenarios: a cloud game, a VR or AR conference, virtual human livestreaming, and a virtual concert.

According to any one of the sixth aspect or the foregoing implementations of the sixth aspect, determining the reference frame of the current frame based on the simulation data corresponding to the intermediate result corresponding to the current frame includes: when a reference frame identifier obtained by parsing the bitstream is a first preset identifier, using the simulation data corresponding to the intermediate result as the reference frame.

According to any one of the sixth aspect or the foregoing implementations of the sixth aspect, determining the reference frame of the current frame based on the simulation data corresponding to the intermediate result corresponding to the current frame includes: when a reference frame identifier obtained by parsing the bitstream is a second preset identifier, predicting the intermediate result based on the simulation data corresponding to the intermediate result, to obtain predicted data of the intermediate result; and using the predicted data of the intermediate result as the reference frame.

It should be understood that, when the reference frame identifier is a frame identifier of a decoded frame, reconstructed data of an intermediate result of the decoded frame may be determined as the reference frame.

According to any one of the sixth aspect or the foregoing implementations of the sixth aspect, the residual data includes a plurality of residual blocks, the reconstructed data of the intermediate result includes data of a plurality of data blocks, and the plurality of residual blocks one-to-one correspond to the plurality of data blocks. Performing reconstruction based on the reference frame and the residual data, to obtain reconstructed data of the intermediate result corresponding to the current frame includes: for a first data block in the plurality of data blocks, performing inter prediction on the first data block based on the reference frame, to determine a prediction block corresponding to the first data block; and performing summation on the prediction block corresponding to the first data block and the residual block corresponding to the first data block, to obtain data of the first data block.

According to any one of the sixth aspect or the foregoing implementations of the sixth aspect, graphics processing includes any one of the following: rendering processing, physical simulation processing, or animation processing.

It should be understood that any one of the sixth aspect or the implementations of the sixth aspect is a step performed in a program running phase.

According to a seventh aspect, an embodiment of this application provides an encoding apparatus. The encoding apparatus includes:

a first graphics processing module, configured to perform a first-phase operation of graphics processing, to generate original data of an intermediate result of graphics processing of a current frame;
an encoding module, configured to: determine first difference data of the intermediate result based on the original data of the intermediate result and simulation data corresponding to the intermediate result; and encode the first difference data of the intermediate result, to obtain a bitstream; and
a communication module, configured to send the bitstream.

It should be understood that the encoding apparatus in the seventh aspect may be configured to perform the step in any one of the second aspect or the implementations of the second aspect.

According to an eighth aspect, an embodiment of this application provides a decoding apparatus. The decoding apparatus includes:

a communication module, configured to receive a bitstream, where the bitstream includes encoded data of first difference data of an intermediate result corresponding to a current frame, the first difference data indicates a difference between original data of the intermediate result and simulation data corresponding to the intermediate result, and the original data of the intermediate result is generated by a server by performing a first-phase operation of graphics processing;

a decoding module, configured to: decode the bitstream, to obtain second difference data of the intermediate result corresponding to the current frame; and generate reconstructed data of the intermediate result based on the second difference data of the intermediate result and the simulation data corresponding to the intermediate result; and

a second graphics processing module, configured to perform a second-phase operation of graphics processing based on the reconstructed data of the intermediate result, to generate digital content for displaying.

It should be understood that the decoding apparatus in the eighth aspect may be configured to perform the step in any one of the third aspect or the implementations of the third aspect.

According to a ninth aspect, an embodiment of this application provides an encoding apparatus. The encoding apparatus includes:

a first graphics processing module, configured to perform a first-phase operation of graphics processing, to generate original data of an intermediate result of graphics processing of a current frame;

an encoding module, configured to: determine a reference frame of the current frame based on simulation data corresponding to the intermediate result; determine residual data of the intermediate result based on the reference frame and the original data of the intermediate result; and encode the residual data of the intermediate result, to obtain a bitstream; and

a communication module, configured to send the bitstream.

It should be understood that the encoding apparatus in the ninth aspect may be configured to perform the step in any one of the fifth aspect or the implementations of the fifth aspect.

According to a tenth aspect, an embodiment of this application provides a decoding apparatus. The decoding apparatus includes:

a communication module, configured to receive a bitstream, where the bitstream includes encoded data of residual data of an intermediate result corresponding to a current frame, the residual data of the intermediate result indicates a difference between original data of the intermediate result and a reference frame corresponding to the current frame, and the original data of the intermediate result is generated by a server by performing a first-phase operation of graphics processing;

a decoding module, configured to: parse the bitstream, to obtain the residual data of the intermediate result corresponding to the current frame; determine the reference frame of the current frame based on simulation data corresponding to the intermediate result; and perform reconstruction based on the reference frame and the residual data of the intermediate result, to obtain reconstructed data of the intermediate result; and

a second graphics processing module, configured to perform a second-phase operation of graphics processing based on the reconstructed data of the intermediate result, to generate digital content for displaying.

It should be understood that the decoding apparatus in the tenth aspect may be configured to perform the step in any one of the sixth aspect or the implementations of the sixth aspect.

According to an eleventh aspect, an embodiment of this application provides a server, including a memory and a processor. The memory is coupled to the processor. The memory stores program instructions. When the program instructions are executed by the processor, the server is enabled to perform the encoding method according to any one of the second aspect or the possible implementations of the second aspect, or the server is enabled to perform the encoding method according to any one of the fifth aspect or the possible implementations of the fifth aspect.

Any one of the eleventh aspect and the implementations of the eleventh aspect corresponds to any one of the second aspect and the implementations of the second aspect. For technical effect corresponding to any one of the eleventh aspect and the implementations of the eleventh aspect, refer to the technical effect corresponding to any one of the second aspect and the implementations of the second aspect. Details are not described herein again.

Any one of the eleventh aspect and the implementations of the eleventh aspect corresponds to any one of the fifth aspect and the implementations of the fifth aspect. For technical effect corresponding to any one of the eleventh aspect and the implementations of the eleventh aspect, refer to the technical effect corresponding to any one of the fifth aspect and the implementations of the fifth aspect. Details are not described herein again.

According to a twelfth aspect, an embodiment of this application provides a terminal device, including a memory and a processor. The memory is coupled to the processor. The memory stores program instructions. When the program instructions are executed by the processor, the terminal device is enabled to perform the decoding method according to any one of the third aspect or the possible implementations of the third aspect, or the terminal device is enabled to perform the decoding method according to any one of the sixth aspect or the possible implementations of the sixth aspect.

Any one of the twelfth aspect and the implementations of the twelfth aspect corresponds to any one of the third aspect and the implementations of the third aspect. For technical effect corresponding to any one of the twelfth aspect and the implementations of the twelfth aspect, refer to the technical effect corresponding to any one of the third aspect and the implementations of the third aspect. Details are not described herein again.

Any one of the twelfth aspect and the implementations of the twelfth aspect corresponds to any one of the sixth aspect and the implementations of the sixth aspect. For technical effect corresponding to any one of the twelfth aspect and the implementations of the twelfth aspect, refer to the technical effect corresponding to any one of the sixth aspect and the implementations of the sixth aspect. Details are not described herein again.

According to a thirteenth aspect, an embodiment of this application provides a chip, including one or more interface circuits and one or more processors. The interface circuit is configured to receive a signal from a memory of a server device, and send the signal to the processor, where the signal includes computer instructions stored in the memory. When the processor executes the computer instructions, the server is enabled to perform the encoding method according to any one of the second aspect or the possible implementations of the second aspect, or the server is enabled to perform the encoding method according to any one of the fifth aspect or the possible implementations of the fifth aspect.

Any one of the thirteenth aspect and the implementations of the thirteenth aspect corresponds to any one of the second aspect and the implementations of the second aspect. For technical effect corresponding to any one of the thirteenth aspect and the implementations of the thirteenth aspect, refer to the technical effect corresponding to any one of the second aspect and the implementations of the second aspect. Details are not described herein again.

Any one of the thirteenth aspect and the implementations of the thirteenth aspect corresponds to any one of the fifth aspect and the implementations of the fifth aspect. For technical effect corresponding to any one of the thirteenth aspect and the implementations of the thirteenth aspect, refer to the technical effect corresponding to any one of the fifth aspect and the implementations of the fifth aspect. Details are not described herein again.

According to a fourteenth aspect, an embodiment of this application provides a chip, including one or more interface circuits and one or more processors. The interface circuit is configured to receive a signal from a memory of a terminal device, and send the signal to the processor, where the signal includes computer instructions stored in the memory. When the processor executes the computer instructions, the terminal device is enabled to perform the decoding method according to any one of the third aspect or the possible implementations of the third aspect, or the terminal device is enabled to perform the decoding method according to any one of the sixth aspect or the possible implementations of the sixth aspect.

Any one of the fourteenth aspect and the implementations of the fourteenth aspect corresponds to any one of the third aspect and the implementations of the third aspect. For technical effect corresponding to any one of the fourteenth aspect and the implementations of the fourteenth aspect, refer to the technical effect corresponding to any one of the third aspect and the implementations of the third aspect. Details are not described herein again.

Any one of the fourteenth aspect and the implementations of the fourteenth aspect corresponds to any one of the sixth aspect and the implementations of the sixth aspect. For technical effect corresponding to any one of the fourteenth aspect and the implementations of the fourteenth aspect, refer to the technical effect corresponding to any one of the sixth aspect and the implementations of the sixth aspect. Details are not described herein again.

According to a fifteenth aspect, an embodiment of this application provides a computer-readable storage medium. The computer-readable storage medium stores a computer program. When the computer program is run on a computer or a processor, the computer or the processor is enabled to perform the encoding method according to any one of the second aspect or the possible implementations of the second aspect, or the computer or the processor is enabled to perform the encoding method according to any one of the fifth aspect or the possible implementations of the fifth aspect.

Any one of the fifteenth aspect and the implementations of the fifteenth aspect corresponds to any one of the second aspect and the implementations of the second aspect. For technical effect corresponding to any one of the fifteenth aspect and the implementations of the fifteenth aspect, refer to the technical effect corresponding to any one of the second aspect and the implementations of the second aspect. Details are not described herein again.

Any one of the fifteenth aspect and the implementations of the fifteenth aspect corresponds to any one of the fifth aspect and the implementations of the fifth aspect. For technical effect corresponding to any one of the fifteenth aspect and the implementations of the fifteenth aspect, refer to the technical effect corresponding to any one of the fifth aspect and the implementations of the fifth aspect. Details are not described herein again.

According to a sixteenth aspect, an embodiment of this application provides a computer-readable storage medium. The computer-readable storage medium stores a computer program. When the computer program is run on a computer or a processor, the computer or the processor is enabled to perform the decoding method according to any one of the third aspect or the possible implementations of the third aspect, or the computer or the processor is enabled to perform the decoding method according to any one of the sixth aspect or the possible implementations of the sixth aspect.

Any one of the sixteenth aspect and the implementations of the sixteenth aspect corresponds to any one of the third aspect and the implementations of the third aspect. For technical effect corresponding to any one of the sixteenth aspect and the implementations of the sixteenth aspect, refer to the technical effect corresponding to any one of the third aspect and the implementations of the third aspect. Details are not described herein again.

Any one of the sixteenth aspect and the implementations of the sixteenth aspect corresponds to any one of the sixth aspect and the implementations of the sixth aspect. For technical effect corresponding to any one of the sixteenth aspect and the implementations of the sixteenth aspect, refer to the technical effect corresponding to any one of the sixth aspect and the implementations of the sixth aspect. Details are not described herein again.

According to a seventeenth aspect, an embodiment of this application provides a computer program product. The computer program product includes compute instructions. When the compute instructions are executed by a computer or a processor, the computer or the processor is enabled to perform the encoding method according to any one of the second aspect or the possible implementations of the second aspect, or the computer or the processor is enabled to perform the encoding method according to any one of the fifth aspect or the possible implementations of the fifth aspect.

Any one of the seventeenth aspect and the implementations of the seventeenth aspect corresponds to any one of the second aspect and the implementations of the second aspect. For technical effect corresponding to any one of the seventeenth aspect and the implementations of the seventeenth aspect, refer to the technical effect corresponding to any one of the second aspect and the implementations of the second aspect. Details are not described herein again.

Any one of the seventeenth aspect and the implementations of the seventeenth aspect corresponds to any one of the fifth aspect and the implementations of the fifth aspect. For technical effect corresponding to any one of the seventeenth aspect and the implementations of the seventeenth aspect, refer to the technical effect corresponding to any one of the fifth aspect and the implementations of the fifth aspect. Details are not described herein again.

According to an eighteenth aspect, an embodiment of this application provides a computer program product. The computer program product includes compute instructions. When the compute instructions are executed by a computer or a processor, the computer or the processor is enabled to perform the decoding method according to any one of the third aspect or the possible implementations of the third aspect, or the computer or the processor is enabled to perform the decoding method according to any one of the sixth aspect or the possible implementations of the sixth aspect.

Any one of the eighteenth aspect and the implementations of the eighteenth aspect corresponds to any one of the third aspect and the implementations of the third aspect. For technical effect corresponding to any one of the eighteenth aspect and the implementations of the eighteenth aspect, refer to the technical effect corresponding to any one of the third aspect and the implementations of the third aspect. Details are not described herein again.

Any one of the eighteenth aspect and the implementations of the eighteenth aspect corresponds to any one of the sixth aspect and the implementations of the sixth aspect. For technical effect corresponding to any one of the eighteenth aspect and the implementations of the eighteenth aspect, refer to the technical effect corresponding to any one of the sixth aspect and the implementations of the sixth aspect. Details are not described herein again.

## BRIEF DESCRIPTION OF DRAWINGS

FIG. 1a is a diagram of an example of a device-cloud collaboration framework;

FIG. 1b is a diagram of an example of a device-cloud collaboration application scenario;

FIG. 1c is a diagram of an example of a structure of a device-cloud collaboration system;

FIG. 2a is a diagram of an example of a pre-baked map;

FIG. 2b is a diagram of an example in which a spherical surface is expanded into a two-dimensional plane;

FIG. 3a is a diagram of an example of an encoding process;

FIG. 3b is a diagram of an example of an encoding process in a cloud game scenario;

FIG. 3c is a diagram of an example of an encoding process in a virtual human livestreaming scenario;

FIG. 3d is a diagram of an example of an encoding process in a virtual concert scenario;

FIG. 3e is a diagram of an example of an encoding process in a VA or AR conference scenario;

FIG. 4a is a diagram of an example of a decoding process;

FIG. 4b is a diagram of an example of a decoding process in a cloud game scenario;

FIG. 4c is a diagram of an example of a decoding process in a virtual human livestreaming scenario;

FIG. 4d is a diagram of an example of a decoding process in a virtual concert scenario;

FIG. 4e is a diagram of an example of a decoding process in a VA or AR conference scenario;

FIG. 5a is a diagram of an example of a device-cloud collaboration system framework;

FIG. 5b is a diagram of an example of an encoding process;

FIG. 6 is a diagram of an example of a decoding process;

FIG. 7a is a diagram of an example of a device-cloud collaboration system framework;

FIG. 7b is a diagram of an example of an encoding process;

FIG. 8 is a diagram of an example of a decoding process;

FIG. 9 is a diagram of an example of an encoding process;

FIG. 10 is a diagram of an example of a decoding process;

FIG. 11a is a diagram of an example of an encoding process;

FIG. 11b is a diagram of an example of an encoding process in a cloud game scenario;

FIG. 11c is a diagram of an example of an encoding process in a virtual human livestreaming scenario;

FIG. 11d is a diagram of an example of an encoding process in a virtual concert scenario;

FIG. 11e is a diagram of an example of an encoding process in a VA or AR conference scenario;

FIG. 12a is a diagram of an example of a decoding process;

FIG. 12b is a diagram of an example of a decoding process in a cloud game scenario;

FIG. 12c is a diagram of an example of a decoding process in a virtual human livestreaming scenario;

FIG. 12d is a diagram of an example of a decoding process in a virtual concert scenario;

FIG. 12e is a diagram of an example of a decoding process in a VA or AR conference scenario;

FIG. 13a is a diagram of an example of a device-cloud collaboration system framework;

FIG. 13b is a diagram of an example of an encoding process;

FIG. 14 is a diagram of an example of a decoding process;

FIG. 15a is a diagram of an example of a device-cloud collaboration system framework;

FIG. 15b is a diagram of an example of an encoding process;

FIG. 16 is a diagram of an example of a decoding process; and

FIG. 17 is a diagram of an example of a structure of an apparatus.

## DESCRIPTION OF EMBODIMENTS

The following clearly and completely describes the technical solutions in embodiments of this application with reference to accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.
The term "and/or" in this specification describes only an association relationship for associated objects and indicates that three relationships may exist. For example, A and/or B may indicate the following three cases: Only A exists, both A and B exist, and only B exists.
In the specification and claims in embodiments of this application, the terms "first", "second", and the like are intended to distinguish between different objects but do not indicate a particular order of the objects. For example, a first target object and a second target object are used to distinguish between different target objects, but are not used to describe a particular order of the target objects.
In embodiments of this application, the word "example", "for example", or the like is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.
In descriptions of embodiments of this application, unless otherwise stated, "a plurality of" means two or more than two. For example, a plurality of processing units are two or more processing units, and a plurality of systems are two or more systems.
FIG. 1a is a diagram of an example of a device-cloud collaboration framework. For example, an application scenario of the device-cloud collaboration framework in this application may include but is not limited to a cloud game, a VR or AR conference, virtual human livestreaming, a virtual concert, and the like. This is not limited in this application.
For example, one or more types of graphics processing are used in a device-cloud collaboration process in this application. Graphics processing may include but is not limited to rendering (Rendering) processing, physical simulation (physical simulation) processing, animation (animation) processing, and the like. This is not limited in this application.
FIG. 1b is a diagram of an example of a device-cloud collaboration application scenario. A network in FIG. 1b includes but is not limited to a wired network and a wireless network (for example, a cellular network or a Wi-Fi (Wireless Fidelity, Wireless Fidelity) network). This is not limited in this application.
Refer to FIG. 1b. For example, a server may perform a first-phase operation of graphics processing (for example, rendering processing, physical simulation processing, or animation processing), to generate data of an intermediate result (for example, an intermediate result of a game picture, an intermediate result of a livestreaming picture, an intermediate result of a conference picture, or an intermediate result of a concert picture), and then may encode the data of the intermediate result, to obtain a corresponding bitstream (for example, a bitstream corresponding to data of the intermediate result of the game picture, a bitstream corresponding to data of the intermediate result of the conference picture, a bitstream corresponding to data of the intermediate result of the concert picture, or a bitstream corresponding to data of the intermediate result of the livestreaming picture).
For example, in a scenario in which a mobile phone is used to play a cloud game, the server may send, to the mobile phone through the network, the bitstream corresponding to the data of the intermediate result of the game picture. In this way, the mobile phone may obtain the game picture through decoding, and display the game picture.
For example, in a scenario in which AR or AR glasses are used to join an AR or AR conference, the server may send, to the AR or AR glasses through the network, the bitstream corresponding to the data of the intermediate result of the conference picture. In this way, the AR or AR glasses may obtain the conference picture through decoding, and display the conference picture.
For example, in a scenario in which a personal computer is used to watch a virtual concert, the server may send, to the personal computer through the network, the bitstream corresponding to the data of the intermediate result of the concert picture. In this way, the personal computer may obtain the concert picture through decoding, and display the concert picture.
For example, in a scenario in which a tablet computer is used to watch virtual human livestreaming, the server may send, to the tablet computer through the network, the bitstream corresponding to the data of the intermediate result of the livestreaming picture. In this way, the tablet computer may obtain the livestreaming picture through decoding, and display the livestreaming picture.
For example, rendering processing, physical simulation processing, and animation processing are used in a device-cloud collaborative cloud game process. For another example, rendering processing is used in a device-cloud collaborative VR or AR conference process. For another example, rendering processing and physical simulation processing are used in a device-cloud collaborative virtual human livestreaming process. For another example, rendering processing is used in a device-cloud collaborative virtual concert process.

For example, rendering processing may be a process of displaying a three-dimensional model in a three-dimensional scene on a two-dimensional plane. There may be a plurality of rendering processing algorithms, for example, a dynamic diffuse global illumination (Dynamic Diffuse Global Illumination, DDGI) algorithm.

For example, physical simulation processing is a technology in which a computer is used to simulate a physical phenomenon in a real world, to generate more vivid effect of interacting with the world in an animation or a game. Physical simulation processing may include rigid body simulation processing (which may be used to simulate rotation, translation, and the like of a rigid object), elastic body simulation processing (which may be used to simulate motion, deformation, and the like of an elastic object), cloth simulation processing, and fluid simulation processing. In a possible implementation, elastic body simulation processing may be implemented via a spring system. In a possible implementation, cloth simulation processing and fluid simulation processing may be implemented via a particle system. The particle system is a common physical simulation processing method, divides a physically simulated object into several particles, and calculates an interaction force between the particles in the physically simulated object and physical performance of the physically simulated object under an external force according to a physical law, to obtain a motion state, complying with the physical law, of the physically simulated object. Therefore, the particle system is widely applied to dynamic effect simulation of water, smoke, and hair.

For example, animation processing may be generating an animation of a model by assigning an interconnected skeleton to the model and changing a skeleton orientation and a skeleton location.

Based on the device-cloud collaboration framework in FIG. 1a, this application provides a device-cloud collaboration system that may be shown in FIG. 1c.

FIG. 1c is a diagram of an example of a structure of the device-cloud collaboration system. The device-cloud collaboration system shown in FIG. 1c may include a server and a terminal device.

Refer to FIG. 1c. For example, the server may be the central server in FIG. 1a. The server may be a single server, or may be a server cluster. This is not limited in this application. A specific implementation form of the server in this application may be a cloud server, a physical (independent) server, a cluster server, or the like. This is not limited in this application. When the server is used in different scenarios, the server in this application may also be referred to as a game server, a video server, a livestreaming server, a VR or AR conference server, a virtual server, and the like based on the scenarios in which the server is used. This is not limited in this application.

Refer to FIG. 1c. For example, the terminal device includes but is not limited to a personal computer (Personal Computer, PC), a computer workstation, a smartphone, a tablet computer, a server, an intelligent camera, an intelligent vehicle, another type of cellular phone, a media consumption device, a wearable device (such as an AR helmet or VR glasses), a set-top box, a game console, and the like. This is not limited in this application.

It should be understood that, that the device-cloud collaboration system includes the server and the terminal device may mean that the device-cloud collaboration system includes the server (that is, a hardware part) and/or an application (that is, a software part) deployed on the server, and the terminal device (that is, a hardware part) and/or an application (that is, a software part) deployed on the terminal device. When the device-cloud collaboration system is applied to the following scenarios: a cloud game, a VR or AR conference, virtual human livestreaming, and a virtual concert, corresponding applications may be a cloud game program, a VR or AR conference program, a virtual human livestreaming program, or a virtual concert program.

For example, a life cycle of the program may include a program development phase and a program running phase.

For example, a life cycle of the cloud game program may include a game program development phase (that is, a process in which a game developer develops a game) and a game program running phase (which may also be referred to as a game running phase, that is, a process in which a user plays the game via the terminal device). For another example, a life cycle of the VR or AR conference program may include a VR or AR conference program development phase (that is, a process in which a VR or AR conference program developer develops the VR or AR conference program) and a VR or AR conference program running phase (that is, a process in which a plurality of users join a VR or AR conference via terminal devices). For another example, a life cycle of the virtual human livestreaming program may include a virtual human livestreaming program development phase (that is, a process in which a virtual human livestreaming program developer develops the virtual human livestreaming program) and a virtual human livestreaming program running phase (that is, a real-time livestreaming process). For another example, a life cycle of the virtual concert program may include a virtual concert program development phase (that is, a process in which a virtual concert program developer develops the virtual concert program) and a virtual concert program running phase (that is, a concert process).

For example, in the program development phase, an application is developed on a development device, to obtain an application on a server side and an application on a terminal device side. An application development process may include but is not limited to: producing a model, producing an animation, setting a physical simulation parameter, setting a rendering parameter, writing a rendering algorithm, generating simulation data (the simulation data may also be referred to as pre-baked data), writing application code (for example, game program code, VR or AR conference program code, virtual human livestreaming program code, and virtual concert program code), and the like. This is not limited in this application.

For example, after the application on the server side developed in the program development phase is deployed on the server, and the application on the terminal device side is deployed on the terminal device, the device-cloud collaboration system may be started, to enter the program running phase in this case. In the program running phase, device-cloud collaborative graphics processing may be performed in real time. For example, device-cloud collaborative rendering processing, device-cloud collaborative physical simulation processing, and device-cloud collaborative animation processing may be performed in real time.

For example, the process of deploying the application on the server side on the server may include: deploying, on the server, the model, the animation, the physical simulation parameter, the rendering parameter, the rendering algorithm, the simulation data, and the application code on the server side that are produced in the program development phase. The process of deploying the application on the terminal device side on the terminal device may include: deploying, on the terminal device, the model, the animation, the physical simulation parameter, the rendering parameter, the rendering algorithm, the simulation data, and the application code on the terminal device side that are produced in the program development phase. In other words, the server and the terminal device have synchronized the simulation data before entering the program running phase.

In a possible implementation, both the simulation data and other data produced in the program development phase may be encapsulated in an application installation package, and the terminal device may obtain the simulation data in advance by downloading and installing an application corresponding to the application installation package.

In a possible implementation, the application installation package does not include the simulation data. In this case, after installing/updating the application, the terminal device may send a request to the server when starting the application for the first time. The server may deliver simulation data corresponding to the request to the terminal device. In this way, the terminal device may also obtain the simulation data in advance.

It should be understood that a manner of sharing (or synchronizing) the simulation data with the terminal device is not limited in this application.

For example, the development device may be a third-party device independent of the server and the terminal device that are included in the device-cloud collaboration system, or may be the server included in the device-cloud collaboration system. This is not limited in this application. In this application, description is provided by using an example in which the development device is the third-party device independent of the server and the terminal device that are included in the device-cloud collaboration system.

For example, a simulation data generation process (which may also be referred to as baking, that is, a pre-baked data generation process) may be as follows: In the program development phase, when a factor of real-time user interaction is excluded, data required in the program running phase is pre-calculated by simulating graphics processing in the program running phase, and a pre-calculation result is stored for real-time use in graphics processing in the program running phase. The stored data may be referred to as the simulation data. For example, in the simulation data generation process, some parameters that require more computing power than those in graphics processing in the program running phase may be used, to improve precision of the simulation data, for example, higher calculating precision, a higher calculating granularity, or a longer running time.

In this application, in addition to a part of data that cannot be pre-calculated under impact of user interaction, data of an intermediate result corresponding to each frame generated in a process of performing graphics processing to generate each frame of digital content for displaying (the digital content for displaying may include but is not limited to a picture, a video, audio, or the like, and this is not limited in this application) in the program running phase further includes a part of data that can be pre-calculated without the impact of the user interaction, that is, simulation data corresponding to each frame. It can be learned that the data of the intermediate result corresponding to each frame has strong correlation with the simulation data corresponding to the frame. Further, in this application, the data of the intermediate result corresponding to each frame may be encoded based on the simulation data corresponding to the frame, to reduce a data amount of a bitstream obtained through encoding. This improves encoding efficiency.

The data of the intermediate result may be data that is generated in the graphics processing process and that is used to generate data content for displaying. Data that is generated in a rendering processing process and that is used to generate the data content for displaying may be referred to as data of an intermediate rendering result. Data that is generated in a physical simulation processing process and that is used to generate the data content for displaying may be referred to as data of an intermediate physical simulation result. Data that is generated in an animation process and that is used to generate the data content for displaying may be referred to as data of an intermediate animation result.

Refer to FIG. 1a again. For example, in the program running phase (for example, a game running process), the central server (for example, the game server) may perform graphics processing; encode, based on simulation data corresponding to the current frame, data of an intermediate result corresponding to the current frame obtained through graphics processing (hereinafter referred to as original data of the intermediate result), to obtain a bitstream; and then send the bitstream to terminal devices such as a mobile phone, a personal computer (Personal Computer, PC), VR glasses, an AR helmet, a tablet computer, and another terminal device via edge servers.

For example, graphics processing may include a first phase and a second phase. The first phase is used to generate data of the intermediate result, and the second phase is used to generate, based on the data of the intermediate result generated in the first phase, the digital content for displaying.

It should be noted that, in a possible implementation, the server performs a first-phase operation and a second-phase operation of graphics processing, and generates the digital content for displaying. In this case, the server may not display the digital content for displaying. In a possible implementation, the server performs only a first-phase operation of graphics processing. In this case, the server does not generate the digital content for displaying, and generates only the original data of the intermediate result in the first-phase operation process of graphics processing. That is, the original data of the intermediate result may be data generated in the process in which the server performs the first-phase operation and the second-phase operation of graphics processing, or may be data generated in the process in which the server performs the first-phase operation of graphics processing. This is not limited in this application. In this application, description is provided by using an example in which the original data of the intermediate result is the data generated in the process of the first-phase operation of graphics processing of the server.

Still refer to FIG. 1a. For example, after receiving the bitstream, the terminal device may decode the bitstream based on the simulation data corresponding to the current frame, to obtain reconstructed data of the intermediate result corresponding to the current frame; and then perform the second-phase operation of graphics processing based on the reconstructed data of the intermediate result corresponding to the current frame, to generate the digital content for displaying of the current frame.

It should be understood that the reconstructed data of the intermediate result and the original data of the intermediate result include data of a same type, and various types of data may be the same or different. When the server performs lossy encoding on the original data of the intermediate result, the reconstructed data of the intermediate result obtained by the terminal device is different from the original data of the intermediate result encoded by the server. When the server performs lossless encoding on the original data of the intermediate result, the reconstructed data of the intermediate result obtained by the terminal device is the same as the original data of the intermediate result encoded by the server.

It should be understood that, in the process of performing graphics processing, the terminal device does not need to generate the reconstructed data of the intermediate result, that is, does not need to perform the first-phase operation of graphics processing, and directly performs the second-phase operation of graphics processing based on the reconstructed data of the intermediate result, to generate the digital content for displaying. That is, the terminal device performs only a part of processing operations included in graphics processing. Compared with a manner in which a central server directly transmits the digital content for displaying, the device-cloud collaboration can greatly save bandwidth, reduce operation costs, and improve user experience while achieving similar display effect.

It should be understood that, in the program running phase, when the server performs the first-phase operation and the second-phase operation of graphics processing, to generate the digital content for displaying, if the server performs lossy encoding on the original data of the intermediate result, the digital content for displaying generated by the server is different from the digital content for displaying generated by the terminal device. If the server performs lossless encoding on the original data of the intermediate result, the digital content for displaying generated by the server is the same as the digital content for displaying generated by the terminal device.

Refer to FIG. 1c again. For example, the server may include a first graphics processing module, an encoding module, and a first communication module. It should be understood that FIG. 1c is merely an example of this application, and the server in this application may include more or fewer modules than that shown in FIG. 1c. This is not limited in this application.

For example, the first graphics processing module may be configured to perform the first-phase operation of graphics processing, to obtain the original data of the intermediate result corresponding to the current frame. The first graphics processing module includes but is not limited to a GPU (Graphics Processing Unit, graphics processing unit), an NPU (Neural-network Processing Unit, network processor), and the like.

For example, the encoding module may be configured to encode, based on the simulation data corresponding to the current frame, the original data of the intermediate result corresponding to the current frame, to obtain the bitstream.

For example, the first communication module may be configured to communicate with another electronic device, for example, may send the bitstream output by the encoding module to the terminal device.

Still refer to FIG. 1c. For example, the terminal device may include a second communication module, a second graphics processing module, a decoding module, and a displaying module. It should be understood that FIG. 1c is merely an example of this application, and the terminal device in this application may include more or fewer modules than that shown in FIG. 1c. This is not limited in this application.

For example, the second communication module may be configured to communicate with another electronic device, for example, receive the bitstream sent by the server.

For example, the decoding module may be configured to decode the bitstream based on the simulation data corresponding to the current frame, to obtain the original data of the intermediate result corresponding to the current frame.

For example, the second graphics processing module may be configured to perform the second-phase operation of graphics processing based on the reconstructed data of the intermediate result corresponding to the current frame, to generate the digital content for displaying. The second graphics processing module includes but is not limited to a GPU, an NPU, and the like.

For example, the displaying module may be configured to display the digital content for displaying output by the second graphics processing module.

In a possible implementation, the encoding module may include a video encoder, and the decoding module may include a video decoder. It should be understood that video coding standards used by the video encoder and the video decoder are not limited in this application. For example, the video coding standards may include but are not limited to H.264/AVC (Advanced Video Coding, advanced video coding), H.265/HEVC (High Efficiency Video Coding, high efficiency video coding), H.266/VVC (Versatile Video Coding, versatile video coding), AV1 (AOMedia Video 1, where "AOMedia" is a video coding standard developed by the Alliance for Open Media), AVS2 (second-generation audio and video coding standard), AVS3 (a third-generation audio and video coding standard), and extended standards of these video coding standards; and may further include new video coding standards and extended standards that are generated with development of video coding technologies.

In a possible implementation, the encoding module may include another encoder (the another encoder may be an encoder other than the video encoder, namely, an encoder (for example, an entropy encoder) implemented according to an encoding algorithm (for example, entropy encoding) other than a video encoding algorithm). The decoding module may include another decoder (the another decoder may be a decoder other than the video decoder, namely, a decoder (for example, an entropy decoder) implemented according to a decoding algorithm (for example, entropy decoding) other than a video decoding algorithm).

For example, different types of graphics processing correspond to different simulation data generation processes and different generated simulation data. An example in which graphics processing is rendering processing, physical simulation processing, and animation processing is used below for describing a simulation data generation process and simulation data that correspond to rendering processing, a simulation data generation process and simulation data that correspond to physical simulation processing, and a simulation data generation process and a simulation data process that correspond to animation processing.

(1) Graphics processing is rendering processing.

For example, the simulation data generation process corresponding to rendering processing may be as follows: In a program development phase, when a factor of real-time user interaction is excluded, data (for example, illumination data in a scene) that has a high calculating requirement in a rendering processing process in a program running phase is pre-calculated according to the rendering processing process, and a result is stored for use in the rendering processing process in the program running phase. For example, the simulation data may be stored data generated by pre-calculating scene information required in the rendering processing process, for example, the illumination data generated by pre-calculating illumination required in the rendering processing process.

For example, the simulation data may be a pre-baked map.

For example, a rendering algorithm is a DDGI algorithm. For example, to simulate coloring effect, obtained after light is reflected for a plurality of times in a three-dimensional scene, on an object in the three-dimensional scene (the coloring effect may be determined based on illumination data, visibility data, and the like), in the process of generating the simulation data based on the scene information in the three-dimensional scene, a plurality of probes are placed in the three-dimensional scene, and the probes are used to detect an ambient environment, to obtain first probe data; and then a pre-baked map is generated based on the first probe data. The first probe data includes but is not limited to the illumination data, the visibility data, and the like.

For example, after the plurality of probes are placed in the three-dimensional scene, each probe may detect a probe-centered ambient environment, that is, detect features of a probe-centered ambient object in the three-dimensional scene, and record these features as environment data of the probe. The environmental data may include illumination data, color data, visibility data, a normal direction, texture coordinates, material information, and the like. The illumination data may be used to describe emergent illumination of objects around the probe. The visibility data may be used to describe distribution of distances between the probe and the objects around the probe (which may also be referred to as depth distribution), and may include but is not limited to distance data, a variance of the distance data, a square of the distance data, and the like. This is not limited in this application.

The first probe data is data obtained through calculation in spherical coordinates. The first probe data may be expanded into a two-dimensional plane, to obtain two-dimensional data (that is, a two-dimensional picture); and the two-dimensional picture is determined as a pre-baked map, as shown in FIG. 2a.

FIG. 2b is a diagram of an example in which a spherical surface is expanded into a two-dimensional plane.

Refer to FIG. 2b. For example, in (1) in FIG. 2b, one sphere represents one probe, and first probe data of the probe may be considered as data distributed on the spherical surface. For example, the sphere may be first expanded into an octahedron, as shown in (2) in FIG. 2b. In this case, the first probe data may be considered as the data distributed on the octahedron. Then the octahedron is expanded into the two-dimensional plane, as shown in (3) in FIG. 2b. In this case, the first probe data may be considered as the data distributed on the two-dimensional plane. In this way, the first probe data can be converted into two-dimensional data (that is, a two-dimensional picture).

For example, in a process of converting the first probe data into the two-dimensional picture, the first probe data on the spherical surface needs to be mapped to pixels in the two-dimensional plane. Different first probe data is mapped to pixels in the two-dimensional plane in different manners. For example, according to the following formula (1), distance data and a normal direction that correspond to one probe may be mapped to pixels in the two-dimensional plane:

$$r_{cur}\left(\vec{\omega}\right)=\frac{\sum d_i\left(\cos\theta_i\right)^s}{\sum\left(\cos\theta_i\right)^s} \quad (1)$$

Herein, $r_{cur}(\vec{\omega})$ represents a pixel value of one pixel in the two-dimensional plane; $\vec{\omega}$ indicates a normal vector of the surface of the probe; $d_i$ indicates a distance between a center point of the probe and an intersection point of a three-dimensional model in a three-dimensional scene and light emitted by the probe; $\theta_i$ indicates an included angle between the light emitted by the probe and $\vec{\omega}$; s indicates an empirical parameter; and i indicates $i^{th}$ light emitted by the probe.

For example, there may be one or more groups of pre-baked maps, and one group of pre-baked maps may include one or more pre-baked maps. This may be specifically determined based on an actual requirement. This is not limited in this application.

For example, for one three-dimensional scene, one group of pre-baked maps may be obtained through baking. For example, one pre-baked map may be obtained through baking for one type of weather in the three-dimensional scene. In this way, a plurality of pre-baked maps may be obtained through baking for a plurality of types of weather in the three-dimensional scene. For another example, one pre-baked map may be obtained through baking for each of a plurality of preset moments (for example, a full hour) in the three-dimensional scene. In this way, 24 pre-baked maps may be obtained through baking for the three-dimensional scene.

(2) Graphics processing is physical simulation processing.

For example, the simulation data generation process corresponding to physical simulation processing may be as follows: In a program development phase, when a factor of real-time user interaction is excluded, data that can be pre-calculated in a physical simulation processing process in a program running phase (for example, state data of a physically simulated object that changes under gravity) is pre-calculated according to the physical simulation processing process, and a result is stored for use in the physical simulation processing process in the program running phase. For example, the simulation data may be stored data generated by performing pre-calculation on the physically simulated object.

In a possible implementation, the simulation data may be initial state information of the physically simulated object (the initial state information may be state information of the physically simulated object that is not subject to an action force at an initial moment). The state information may include information such as location information, speed information, self-rotation information, and zoom information. This is not limited in this application.

For example, rigid body simulation processing is to solve, based on a scene (for example, stone falling), motion, complying with the physical law, of a rigid body, to simulate rigid body motion with a strong sense of reality. In the rigid body simulation processing scenario, the physically simulated object is the rigid body, and the simulation data may be initial state information of the rigid body (the initial state information may be state information of the rigid body that is not subject to an external force at the initial moment).

For example, elastic body simulation processing is to solve, based on a scene (for example, stretching or retracting of a rope), motion, complying with the physical law, of an elastic body, to simulate elastic body motion with a strong sense of reality. Elastic body simulation is usually implemented via a spring system. In the elastic body simulation scenario, the physically simulated object is the elastic body, and the simulation data may be initial state information of the elastic body (the initial state information may be state information of a spring that forms the elastic body, that is not subject to an external force (which is an external force applied to the elastic body) at the initial moment, and that has no internal extrusion of the spring).

For example, cloth simulation and fluid simulation are implemented via a particle system. For example, hair simulation based on the particle system is to divide hair into several particles and solve, based on a scene (for example, wind blowing effect) and interaction between the particles (for example, a friction force between the hair), motion of the particles that complies with the physical law, to simulate hair motion with a strong sense of reality. In the cloth simulation processing scenario and the fluid simulation processing scenario, the physically simulated object is cloth or fluid, and the simulation data may be initial state information of the cloth or the fluid (the initial state information may be state information of particles that form the cloth or the fluid and that are not subject to an external force (which is an external force applied to the cloth or the fluid) and an interaction force between the particles at the initial moment).

Hair simulation processing based on the particle system is used as an example. The simulation data may be location information that is of a hair particle using a center point of a head model of a character as an origin of a coordinate system and that is obtained when hair of the character is not subject to an external force and an interaction force between hair particles at an initial moment (that is, the character is in an initial static state).

Pool simulation processing based on the particle system is used as an example. The simulation data may be location information that is of a water particle using a center point of a pool as an origin of a coordinate system and that is obtained when a water body is not subject to an external force and an interaction force between water particles at an initial moment (that is, the pool is in an initial static state).

In a possible implementation, the simulation data may alternatively be state information of the physically simulated object at a plurality of preset motion moments (state information at one preset motion moment may be state information of the physically simulated object that is subject to a known action force at the preset motion moment).

(3) Graphics processing is animation processing.

For example, the simulation data generation process corresponding to animation processing may be as follows: In a program development phase, when a factor of real-time user interaction is excluded, data that can be pre-calculated in an animation processing process in a program running phase (for example, skeleton animation data) is calculated according to the animation processing process, to obtain a skeleton location and a skeleton direction, and a result is stored for use in the animation processing process in the program running phase. For example, the simulation data may be stored data generated by performing pre-calculation on a skeleton animation.

For example, the simulation data may include a plurality of groups of key frames.

For example, a simulation data generation process corresponding to animation processing may be as follows: A plurality of groups of key frames are generated for a plurality of preset motion processes of a plurality of preset objects. One group of key frames may be generated for one preset motion (which may be preset as required, for example, running, jumping, walking, standing, or squatting) process of one preset object (which may be preset as required, for example, a person or an animal). The group of key frames may include a plurality of key frames, and one key frame may include a first skeleton location and a first skeleton direction of the preset object at a moment in the preset motion process. For example, one group of key frames is generated for a walking process of a person, one group of key frames is generated for a running process of the person, and one group of key frames is generated for a jumping process of the person.

It should be noted that the key frame in animation production in this application is not a picture, but a group of data including a skeleton location and a skeleton direction of an animation production object. The group of data may be used to completely describe a body posture of the object.

The following describes, based on FIG. 1a, FIG. 1b, and FIG. 1c, encoding and decoding processes of original data of an intermediate result corresponding to one frame in a program running phase.

For example, a manner of encoding, based on simulation data corresponding to a current frame, original data of an intermediate result corresponding to the current frame may be encoding first difference data after the first difference data is determined based on the simulation data corresponding to the current frame and the original data of the intermediate result corresponding to the current frame.

FIG. 3a is a diagram of an example of an encoding process. FIG. 3a shows an encoding process of a server.

S301: Perform a first-phase operation of graphics processing, to obtain original data of an intermediate result of graphics processing of a current frame.

For example, in a program running phase, the server may perform the first-phase operation of graphics processing, to obtain the original data of the intermediate result of graphics processing of the current frame, namely, original data of the intermediate result corresponding to the current frame.

In a possible implementation, the server may perform the first-phase operation of graphics processing based on simulation data corresponding to the current frame (the simulation data corresponding to the current frame may be simulation data required for generating digital content for displaying of the current frame), to obtain the original data of the intermediate result corresponding to the current frame. The simulation data corresponding to the current frame also corresponds to the intermediate result corresponding to the current frame. Further, the simulation data corresponding to the current frame may also be referred to as simulation data corresponding to the intermediate result corresponding to the current frame.

For example, the server may perform physical simulation processing, animation processing, and the like based on the simulation data corresponding to the intermediate result corresponding to the current frame, to obtain the original data of the intermediate result corresponding to the current frame. For example, a first graphics processing module of the server has a capability of learning of the simulation data corresponding to the intermediate result corresponding to the current frame. Further, in the program running phase, the server may select, from the simulation data, the simulation data corresponding to the intermediate result corresponding to the current frame; and then perform the first-phase operation of graphics processing based on the simulation data corresponding to the intermediate result corresponding to the current frame, to obtain the original data of the intermediate result corresponding to the current frame.

In a possible implementation, the server may not need to perform the first-phase operation of graphics processing based on the simulation data corresponding to the intermediate result corresponding to the current frame, but directly performs the first-phase operation of graphics processing based on data such as a parameter and a model/scene that are required for graphics processing, to obtain the original data of the intermediate result corresponding to the current frame. For example, the server may perform a first-phase operation of rendering processing based on data such as a rendering parameter and a model/scene that are required for rendering, to obtain the original data of the intermediate result corresponding to the current frame.

S302: Determine first difference data based on the simulation data corresponding to the intermediate result corresponding to the current frame and the original data of the intermediate result corresponding to the current frame.

S303: Encode the first difference data, to obtain a bitstream.

S304: Send the bitstream.

For example, the server may determine, based on the simulation data corresponding to the intermediate result corresponding to the current frame and the original data of the intermediate result corresponding to the current frame, the first difference data corresponding to the current frame (which may also be referred to as first difference data of the intermediate result or first difference data of the intermediate result corresponding to the current frame); and then encode the first difference data of the intermediate result corresponding to the current frame, to obtain the bitstream (the bitstream may include encoded data of the first difference data of the intermediate result corresponding to the current frame); and then the server may send the bitstream to a terminal device. There may be a plurality of manners of determining the first difference data of the intermediate result corresponding to the current frame. Details are described below.

For example, the simulation data corresponding to the intermediate result corresponding to the current frame may be one frame, or may be a plurality of frames. This is not limited in this application. It should be understood that one frame may be a picture at one moment (for example, when graphics processing is rendering processing, one frame of simulation data may be a pre-baked map at one moment), or may be data of another type (other than a picture) at one moment (for example, when graphics processing is particle simulation processing, one frame of simulation data may be state information of a particle at one moment; when graphics processing is rigid body simulation processing, one frame of simulation data may be state information of a rigid body at one moment; when graphics processing is elastic body simulation processing, one frame of simulation data may be state information of a spring at one moment; or when graphics processing is animation processing, one frame of simulation data may be a skeleton location and a skeleton direction at one moment).

In a possible implementation, the bitstream may further include identification information of simulation data corresponding to an intermediate result corresponding to each frame, so that the terminal device can learn of, in a decoding process, the simulation data corresponding to the intermediate result corresponding to each frame, to determine, based on the simulation data corresponding to the intermediate result corresponding to each frame, reconstructed data of the intermediate result corresponding to each frame. It should be understood that the bitstream may not include the identification information of the simulation data corresponding to the intermediate result corresponding to each frame. In this case, the terminal device may learn of, in the decoding process in another manner, the simulation data corresponding to the intermediate result corresponding to each frame. Details are described below.

It should be noted that S301 above may be performed by the first graphics processing module in FIG. 1c. S302 and S303 may be performed by the encoding module in FIG. 1c. In other words, S302 and S303 belong to an encoding process of the encoding module.

It should be noted that, if the server performs the first-phase operation of graphics processing based on the simulation data corresponding to the intermediate result corresponding to the current frame, in a possible implementation, the simulation data used in a first phase of graphics processing to obtain the original data of the intermediate result corresponding to the current frame and the simulation data used to determine the first difference data of the intermediate result corresponding to the current frame are different data. It is assumed that the simulation data corresponding to the intermediate result corresponding to the current frame includes first simulation data corresponding to the intermediate result corresponding to the current frame and second simulation data corresponding to the intermediate result corresponding to the current frame. In this case, graphics processing may be performed based on the first simulation data corresponding to the intermediate result corresponding to the current frame, to obtain the original data of the intermediate result corresponding to the current frame. Then the first difference data corresponding to the intermediate result corresponding to the current frame is determined based on the original data of the intermediate result corresponding to the current frame and the second simulation data corresponding to the intermediate result corresponding to the current frame. In a possible implementation, the simulation data used in the first phase of graphics processing to obtain the original data of the intermediate result corresponding to the current frame and the simulation data used to determine the first difference data of the intermediate result corresponding to the current frame are the same data.

FIG. 3b is a diagram of an example of an encoding process in a cloud game scenario.

Refer to FIG. 3b. For example, in the cloud game scenario, when graphics processing is physical simulation processing, the server may perform a first-phase operation of physical simulation processing, to obtain original data of an intermediate physical simulation result corresponding to a game picture of a current frame; then determine, based on the original data of the intermediate physical simulation result corresponding to the game picture of the current frame and simulation data corresponding to the intermediate physical simulation result corresponding to the game picture of the current frame, first difference data of the intermediate physical simulation result corresponding to the game picture of the current frame; then encode the first difference data of the intermediate physical simulation result corresponding to the game picture of the current frame, to obtain a bitstream; and send the bitstream.

It should be understood that, in the cloud game scenario, when graphics processing is rendering processing, the server may perform a first-phase operation of rendering processing, to obtain original data of an intermediate rendering result corresponding to a game picture of a current frame; then determine, based on the original data of the intermediate rendering result corresponding to the game picture of the current frame and simulation data corresponding to the intermediate rendering result corresponding to the game picture of the current frame, first difference data of the intermediate rendering result corresponding to the game picture of the current frame; then encode the first difference data of the intermediate rendering result corresponding to the game picture of the current frame, to obtain a bitstream; and send the bitstream.

It should be understood that, in the cloud game scenario, when graphics processing is animation processing, the server may perform a first-phase operation of animation processing, to obtain original data of an intermediate animation result corresponding to a game picture of a current frame; then determine, based on the original data of the intermediate animation result corresponding to the game picture of the current frame and simulation data corresponding to the intermediate animation result corresponding to the game picture of the current frame, first difference data of the intermediate animation result corresponding to the game picture of the current frame; then encode the first difference data of the intermediate animation result corresponding to the game picture of the current frame, to obtain a bitstream; and send the bitstream.

FIG. 3c is a diagram of an example of an encoding process in a virtual human livestreaming scenario.

Refer to FIG. 3c. For example, in the virtual human livestreaming scenario, when graphics processing is animation processing, the server may perform a first-phase operation of animation processing, to obtain original data of an intermediate animation result corresponding to a livestreaming picture of a current frame; then determine, based on the original data of the intermediate animation result corresponding to the livestreaming picture of the current frame and simulation data corresponding to the intermediate animation result corresponding to the livestreaming picture of the current frame, first difference data of the intermediate animation result corresponding to the livestreaming picture of the current frame; then encode the first difference data of the intermediate animation result corresponding to the livestreaming picture of the current frame, to obtain a bitstream; and send the bitstream.

It should be understood that, in the virtual human livestreaming scenario, when graphics processing is rendering processing, the server may perform a first-phase operation of rendering processing, to obtain original data of an intermediate rendering result corresponding to a livestreaming picture of a current frame; then determine, based on the original data of the intermediate rendering result corresponding to the livestreaming picture of the current frame and simulation data corresponding to the intermediate rendering result corresponding to the livestreaming picture of the current frame, first difference data of the intermediate rendering result corresponding to the livestreaming picture of the current frame; then encode the first difference data of the intermediate rendering result corresponding to the livestreaming picture of the current frame, to obtain a bitstream; and send the bitstream.

It should be understood that, in the virtual human livestreaming scenario, when graphics processing is physical simulation processing, the server may perform a first-phase operation of physical simulation processing, to obtain original data of an intermediate physical simulation result corresponding to a livestreaming picture of a current frame; then determine, based on the original data of the intermediate physical simulation result corresponding to the livestreaming picture of the current frame and simulation data corresponding to the intermediate physical simulation result corresponding to the livestreaming picture of the current frame, first difference data of the intermediate physical simulation result corresponding to the livestreaming picture of the current frame; then encode the first difference data of the intermediate physical simulation result corresponding to the livestreaming picture of the current frame, to obtain a bitstream; and send the bitstream.

FIG. 3d is a diagram of an example of an encoding process in a virtual concert scenario.

Refer to FIG. 3d. For example, in the virtual concert scenario, when graphics processing is rendering processing, the server may perform a first-phase operation of rendering processing, to obtain original data of an intermediate rendering result corresponding to a concert picture of a current frame; then determine, based on the original data of the intermediate rendering result corresponding to the concert picture of the current frame and simulation data corresponding to the intermediate rendering result corresponding to the concert picture of the current frame, first difference data of the intermediate rendering result corresponding to the concert picture of the current frame; then encode the first difference data of the intermediate rendering result corresponding to the concert picture of the current frame, to obtain a bitstream; and send the bitstream.

It should be understood that, in the virtual concert scenario, when graphics processing is physical simulation processing, the server may perform a first-phase operation of physical simulation processing, to obtain original data of an intermediate physical simulation result corresponding to a concert picture of a current frame; then determine, based on the original data of the intermediate physical simulation result corresponding to the concert picture of the current frame and simulation data corresponding to the intermediate physical simulation result corresponding to the concert picture of the current frame, first difference data of the intermediate physical simulation result corresponding to the concert picture of the current frame; then encode the first difference data of the intermediate physical simulation result corresponding to the concert picture of the current frame, to obtain a bitstream; and send the bitstream.

It should be understood that, in the virtual concert scenario, when graphics processing is animation processing, the server may perform a first-phase operation of animation processing, to obtain original data of an intermediate animation result corresponding to a concert picture of a current frame; then determine, based on the original data of the intermediate animation result corresponding to the concert picture of the current frame and simulation data corresponding to the intermediate animation result corresponding to the concert picture of the current frame, first difference data of the intermediate animation result corresponding to the concert picture of the current frame; then encode the first difference data of the intermediate animation result corresponding to the concert picture of the current frame, to obtain a bitstream; and send the bitstream.

FIG. 3e is a diagram of an example of an encoding process in a VA or AR conference scenario.

Refer to FIG. 3e. For example, in the VA or AR conference scenario, when graphics processing is rendering processing, the server may perform a first-phase operation of rendering processing, to obtain original data of an intermediate rendering result corresponding to a conference picture of a current frame; then determine, based on the original data of the intermediate rendering result corresponding to the conference picture of the current frame and simulation data corresponding to the intermediate rendering result corresponding to the conference picture of the current frame, first difference data of the intermediate rendering result corresponding to the conference picture of the current frame; then encode the first difference data of the intermediate rendering result corresponding to the conference picture of the current frame, to obtain a bitstream; and send the bitstream.

It should be understood that, in the VA or AR conference scenario, when graphics processing is physical simulation processing, the server may perform a first-phase operation of physical simulation processing, to obtain original data of an intermediate physical simulation result corresponding to a conference picture of a current frame; then determine, based on the original data of the intermediate physical simulation result corresponding to the conference picture of the current frame and simulation data corresponding to the intermediate physical simulation result corresponding to the conference picture of the current frame, first difference data of the intermediate physical simulation result corresponding to the conference picture of the current frame; then encode the first difference data of the intermediate physical simulation result corresponding to the conference picture of the current frame, to obtain a bitstream; and send the bitstream.

It should be understood that, in the VA or AR conference scenario, when graphics processing is animation processing, the server may perform a first-phase operation of animation processing, to obtain original data of an intermediate animation result corresponding to a conference picture of a current frame; then determine, based on the original data of the intermediate animation result corresponding to the conference picture of the current frame and simulation data corresponding to the intermediate animation result corresponding to the conference picture of the current frame, first difference data of the intermediate animation result corresponding to the conference picture of the current frame; then encode the first difference data of the intermediate animation result corresponding to the conference picture of the current frame, to obtain a bitstream; and send the bitstream.

FIG. 4a is a diagram of an example of a decoding process. FIG. 4a shows a decoding process of the terminal device. The decoding process in FIG. 4a corresponds to the encoding process in FIG. 3a.

S401: Receive the bitstream.

S402: Decode the bitstream, to obtain second difference data of the intermediate result corresponding to the current frame.

For example, in the program running phase, the terminal device may receive the bitstream sent by the server. The bitstream may include the first difference data (namely, the encoded data of the first difference data) of the intermediate result corresponding to the current frame encoded by the server. Then the terminal device may decode the bitstream, to obtain the second difference data of the intermediate result corresponding to the current frame.

It should be understood that, when the server performs lossy encoding on the first difference data, the second difference data obtained by the terminal device by decoding the bitstream is different from the first difference data encoded by the server. When the server performs lossless encoding on the first difference data, the second difference data obtained by the terminal device by decoding the bitstream is the same as the first difference data encoded by the server.

S403: Determine, based on the second difference data of the intermediate result corresponding to the current frame and the simulation data corresponding to the intermediate result corresponding to the current frame, reconstructed data of the intermediate result corresponding to the current frame.

For example, the simulation data corresponding to the intermediate result corresponding to the current frame may be determined from simulation data that is obtained from the server/a development device in advance and that is stored locally. Then the reconstructed data of the intermediate result corresponding to the current frame may be determined based on the simulation data corresponding to the intermediate result corresponding to the current frame and the second difference data of the intermediate result corresponding to the current frame obtained by decoding the bitstream.

For example, when a second graphics processing module of the terminal device has a capability of learning of the simulation data corresponding to the intermediate result corresponding to the current frame, the terminal device may directly select, from the simulation data obtained from the server/development device in advance, the simulation data corresponding to the intermediate result corresponding to the current frame.

For example, when a second graphics processing module of the terminal device does not have a capability of learning of the simulation data corresponding to the intermediate result corresponding to the current frame, in a possible implementation, the server may write the identification information of the simulation data corresponding to the intermediate result corresponding to each frame into the bitstream. In this way, the terminal device may decode the bitstream, to obtain the identification information of the simulation data. Further, the terminal device selects, based on the identification information of the simulation data obtained through decoding, the simulation data corresponding to the intermediate result corresponding to the current frame from the simulation data obtained from the server/development device in advance. In a possible implementation, the server may alternatively send the identification information of the simulation data corresponding to the intermediate result corresponding to each frame to the terminal device as a message independent of the bitstream. In this way, the terminal device may select, based on the message, the simulation data corresponding to the intermediate result corresponding to the current frame from the simulation data obtained from the server/development device in advance. In a possible implementation, after decoding the bitstream, to obtain the second difference data of the intermediate result corresponding to the current frame, the terminal device may send a request to the server. After receiving the request, the server may send, to the terminal device in response to the request, the identification information of the simulation data corresponding to the intermediate result corresponding to the current frame. In this way, the terminal device may select, based on the identification information of the simulation data corresponding to the intermediate result corresponding to the current frame, the simulation data corresponding to the intermediate result corresponding to the current frame from the simulation data obtained from the server/development device in advance. It should be understood that a manner in which the terminal device learns of the simulation data corresponding to the intermediate result corresponding to the current frame is not limited in this application.

When the second difference data obtained by the terminal device by decoding the bitstream is the same as the first difference data encoded by the server, the reconstructed data of the intermediate result obtained by the terminal device is the same as the original data of the intermediate result generated by the server. Otherwise, the reconstructed data of the intermediate result obtained by the terminal device is different from the original data of the intermediate result generated by the server.

S404: Perform a second-phase operation of graphics processing based on the reconstructed data of the intermediate result corresponding to the current frame, to generate digital content for displaying.

For example, after determining the reconstructed data of the intermediate result corresponding to the current frame, the terminal device may perform the second-phase operation of graphics processing based on the reconstructed data of the intermediate result corresponding to the current frame, to obtain the digital content for displaying of the current frame.

For example, when graphics processing is rendering processing, the digital content for displaying may be a rendered picture (namely, a picture obtained through rendering).

For example, when graphics processing is physical simulation processing, the digital content for displaying may be a physically simulated picture (namely, a picture generated through physical simulation).

For example, when graphics processing is animation processing, the digital content for displaying may be an animation picture (namely, a picture obtained through animation production).

It should be noted that S402 and S403 above may be performed by the decoding module in FIG. 1c. In other words, S402 and S403 belong to a decoding process of the decoding module. S404 above may be performed by the second graphics processing module in FIG. 1c.

Because the simulation data corresponding to the intermediate result corresponding to the current frame has strong correlation with the original data of the intermediate result corresponding to the current frame, and the difference data determined based on the simulation data corresponding to the intermediate result corresponding to the current frame and the original data of the intermediate result corresponding to the current frame may have many values of 0 or small values, a data amount of the bitstream obtained by encoding the difference data is smaller than that obtained by directly encoding the original data of the intermediate result corresponding to the current frame. Therefore, in a case of same quality, the solution provided in this application can reduce a compression bit rate (that is, high encoding efficiency), thereby reducing consumption of transmission bandwidth and storage space of the terminal-side device, reducing frame freezing, and improving user experience.

FIG. 4b is a diagram of an example of a decoding process in a cloud game scenario.

Refer to FIG. 4b. For example, in the cloud game scenario, when graphics processing is physical simulation processing, the terminal device receives and decodes the bitstream, to obtain second difference data of the intermediate physical simulation result corresponding to the game picture of the current frame; then generates, based on the second difference data of the intermediate physical simulation result corresponding to the game picture of the current frame and the simulation data corresponding to the intermediate physical simulation result corresponding to the game picture of the current frame, reconstructed data of the intermediate physical simulation result corresponding to the game picture; and then performs a second-phase operation of physical simulation processing based on the reconstructed data of the intermediate physical simulation result corresponding to the game picture, to generate the game picture.

It should be understood that, in the cloud game scenario, when graphics processing is rendering processing, the terminal device receives and decodes the bitstream, to obtain second difference data of the intermediate rendering result corresponding to the game picture of the current frame; then generates, based on the second difference data of the intermediate rendering result corresponding to the game picture of the current frame and the simulation data corresponding to the intermediate rendering result corresponding to the game picture of the current frame, reconstructed data of the intermediate rendering result corresponding to the game picture; and then performs a second-phase operation of rendering processing based on the reconstructed data of the intermediate rendering result corresponding to the game picture, to generate the game picture.

It should be understood that, in the cloud game scenario, when graphics processing is animation processing, the terminal device receives and decodes the bitstream, to obtain second difference data of the intermediate animation result corresponding to the game picture of the current frame; then generates, based on the second difference data of the intermediate animation result corresponding to the game picture of the current frame and the simulation data corresponding to the intermediate animation result corresponding to the game picture of the current frame, reconstructed data of the intermediate animation result corresponding to the game picture; and then performs a second-phase operation of animation processing based on the reconstructed data of the intermediate animation result corresponding to the game picture, to generate the game picture.

FIG. 4c is a diagram of an example of a decoding process in a virtual human livestreaming scenario.

Refer to FIG. 4c. For example, in the virtual human livestreaming scenario, when graphics processing is animation processing, the terminal device receives and decodes the bitstream, to obtain second difference data of the intermediate animation result corresponding to the livestreaming picture of the current frame; then generates, based on the second difference data of the intermediate animation result corresponding to the livestreaming picture of the current frame and the simulation data corresponding to the intermediate animation result corresponding to the livestreaming picture of the current frame, reconstructed data of the intermediate animation result corresponding to the livestreaming picture; and then performs a second-phase operation of animation processing based on the reconstructed data of the intermediate animation result corresponding to the livestreaming picture, to generate the livestreaming picture.

It should be understood that, in the virtual human livestreaming scenario, when graphics processing is physical simulation processing, the terminal device receives and decodes the bitstream, to obtain second difference data of the intermediate physical simulation result corresponding to the livestreaming picture of the current frame; then generates, based on the second difference data of the intermediate physical simulation result corresponding to the livestreaming picture of the current frame and the simulation data corresponding to the intermediate physical simulation result corresponding to the livestreaming picture of the current frame, reconstructed data of the intermediate physical simulation result corresponding to the livestreaming picture; and then performs a second-phase operation of physical simulation processing based on the reconstructed data of the intermediate physical simulation result corresponding to the livestreaming picture, to generate the livestreaming picture.

It should be understood that, in the virtual human livestreaming scenario, when graphics processing is rendering processing, the terminal device receives and decodes the bitstream, to obtain second difference data of the intermediate rendering result corresponding to the livestreaming picture of the current frame; then generates, based on the second difference data of the intermediate rendering result corresponding to the livestreaming picture of the current frame and the simulation data corresponding to the intermediate rendering result corresponding to the livestreaming picture of the current frame, reconstructed data of the intermediate rendering result corresponding to the livestreaming picture; and then performs a second-phase operation of rendering processing based on the reconstructed data of the intermediate rendering result corresponding to the livestreaming picture, to generate the livestreaming picture.

FIG. 4d is a diagram of an example of a decoding process in a virtual concert scenario.

Refer to FIG. 4d. For example, in the virtual concert scenario, when graphics processing is rendering processing, the terminal device receives and decodes the bitstream, to obtain second difference data of the intermediate rendering result corresponding to the concert picture of the current frame; then generates, based on the second difference data of the intermediate rendering result corresponding to the concert picture of the current frame and the simulation data corresponding to the intermediate rendering result corresponding to the concert picture of the current frame, reconstructed data of the intermediate rendering result corresponding to the concert picture; and then performs a second-phase operation of rendering processing based on the reconstructed data of the intermediate rendering result corresponding to the concert picture, to generate the concert picture.

It should be understood that, in the virtual concert scenario, when graphics processing is physical simulation processing, the terminal device receives and decodes the bitstream, to obtain second difference data of the intermediate physical simulation result corresponding to the concert picture of the current frame; then generates, based on the second difference data of the intermediate physical simulation result corresponding to the concert picture of the current frame and the simulation data corresponding to the intermediate physical simulation result corresponding to the concert picture of the current frame, reconstructed data of the intermediate physical simulation result corresponding to the concert picture; and then performs a second-phase operation of physical simulation processing based on the reconstructed data of the intermediate physical simulation result corresponding to the concert picture, to generate the concert picture.

It should be understood that, in the virtual concert scenario, when graphics processing is animation processing, the terminal device receives and decodes the bitstream, to obtain second difference data of the intermediate animation result corresponding to the concert picture of the current frame; then generates, based on the second difference data of the intermediate animation result corresponding to the concert picture of the current frame and the simulation data corresponding to the intermediate animation result corresponding to the concert picture of the current frame, reconstructed data of the intermediate animation result corresponding to the concert picture; and then performs a second-phase operation of animation processing based on the reconstructed data of the intermediate animation result corresponding to the concert picture, to generate the concert picture.

FIG. 4e is a diagram of an example of a decoding process in a VR or AR conference scenario.

Refer to FIG. 4e. For example, in the VR or AR conference scenario, when graphics processing is rendering processing, the terminal device receives and decodes the bitstream, to obtain second difference data of the intermediate rendering result corresponding to the conference picture of the current frame; then generates, based on the second difference data of the intermediate rendering result corresponding to the conference picture of the current frame and the simulation data corresponding to the intermediate rendering result corresponding to the conference picture of the current frame, reconstructed data of the intermediate rendering result corresponding to the conference picture; and then performs a second-phase operation of rendering processing based on the reconstructed data of the intermediate rendering result corresponding to the conference picture, to generate the conference picture.

It should be understood that, in the VR or AR conference scenario, when graphics processing is physical simulation processing, the terminal device receives and decodes the bitstream, to obtain second difference data of the intermediate physical simulation result corresponding to the conference picture of the current frame; then generates, based on the second difference data of the intermediate physical simulation result corresponding to the conference picture of the current frame and the simulation data corresponding to the intermediate physical simulation result corresponding to the conference picture of the current frame, reconstructed data of the intermediate physical simulation result corresponding to the conference picture; and then performs a second-phase operation of physical simulation processing based on the reconstructed data of the intermediate physical simulation result corresponding to the conference picture, to generate the conference picture.

It should be understood that, in the VR or AR conference scenario, when graphics processing is animation processing, the terminal device receives and decodes the bitstream, to obtain second difference data of the intermediate animation result corresponding to the conference picture of the current frame; then generates, based on the second difference data of the intermediate animation result corresponding to the conference picture of the current frame and the simulation data corresponding to the intermediate animation result corresponding to the conference picture of the current frame, reconstructed data of the intermediate animation result corresponding to the conference picture; and then performs a second-phase operation of animation processing based on the reconstructed data of the intermediate animation result corresponding to the conference picture, to generate the conference picture.

For example, a residual may be calculated based on the simulation data corresponding to the intermediate result corresponding to the current frame and the original data of the intermediate result corresponding to the current frame, to obtain the first difference data of the intermediate result corresponding to the current frame. The following separately describes different residual calculation manners.

In a possible implementation, a residual between the simulation data corresponding to the intermediate result corresponding to the current frame and the original data of the intermediate result corresponding to the current frame may be calculated, to obtain the first difference data. Details are as follows.

FIG. 5a is a diagram of an example of a device-cloud collaboration system framework. FIG. 5a shows a device-cloud collaboration system based on FIG. 1c.

Refer to FIG. 5a. An encoding module may include a residual module and an entropy encoder. The residual module may perform S502 below, and the entropy encoder may perform S503. In other words, S502 and S503 belong to an encoding process of the encoding module.

Refer to FIG. 5a. A decoding module may include a summation module and an entropy decoder. The summation module may perform S603 below, and the entropy decoder may perform S602 below. In other words, S602 and S603 belong to a decoding process of the decoding module.

It should be understood that the encoding module may include only the entropy encoder. In this case, S502 may be performed by a first graphics processing module, and S503 may be performed by the encoding module. In other words, S503 belongs to the encoding process of the encoding module, and S502 does not belong to the encoding process of the encoding module. Correspondingly, the decoding module may include only the entropy decoder. In this case, S603 may be performed by a second graphics processing module, and S602 is performed by the decoding module. In other words, S602 belongs to the decoding process of the decoding module, and S603 does not belong to the decoding process of the decoding module. Modules included in the encoding module and the decoding module are not limited in this application. The following uses the device-cloud collaboration system shown in FIG. 5a as an example for description.

FIG. 5b is a diagram of an example of an encoding process. FIG. 5b describes a process of encoding original data of an intermediate result corresponding to a current frame based on FIG. 5a. In the embodiment in FIG. 5b, a residual may be directly calculated based on simulation data corresponding to the intermediate result corresponding to the current frame and the original data of the intermediate result corresponding to the current frame, to obtain difference data.

S501: Perform a first-phase operation of graphics processing, to obtain the original data of the intermediate result of graphics processing of the current frame.

For example, when graphics processing is rendering processing, in a program running phase, a server performs rendering processing based on a video play frame rate, to obtain original data of an intermediate result corresponding to each frame. When the server receives user interaction information within a first preset time period (that is, within a time period from a moment of generating original data of an intermediate result corresponding to a previous frame to a moment of starting rendering processing of the current frame), a graphics processing unit may perform rendering processing based on the user interaction information and data such as a rendering parameter and a model/scene that are required for rendering, to generate the original data of the intermediate result corresponding to the current frame. When the server receives no user interaction information within a first preset time period, a graphics processing unit may perform rendering processing based on data such as a rendering parameter and a model/scene that are required for rendering, to generate the original data of the intermediate result corresponding to the current frame. For example, when a rendering algorithm is a DDGI algorithm, the original data of the intermediate result corresponding to the current frame is probe data (which may be referred to as second probe data).

For example, when graphics processing is physical simulation processing, in a program running phase, a server performs physical simulation processing based on a video play frame rate, to obtain original data of an intermediate result corresponding to each frame. When the server receives user interaction information within a second preset time period (that is, within a time period from a moment of generating original data of an intermediate result corresponding to a previous frame to a moment of starting physical simulation processing of the current frame), a physical calculator may perform physical simulation processing based on the user interaction information and the simulation data (that is, initial state information of a physically simulated object) corresponding to the intermediate result corresponding to the current frame, to generate the original data of the intermediate result corresponding to the current frame. When the server receives no user interaction information within a second preset time period, a physical calculator may perform physical simulation processing based on the simulation data corresponding to the intermediate result corresponding to the current frame, to generate the original data of the intermediate result corresponding to the current frame. The simulation data corresponding to the intermediate result corresponding to the current frame may be current state information of the physically simulated object (the current state information may be state information of the physically simulated object that is subject to an action force at a current moment). The state information may also include information such as location information, self-rotation information, and zoom information. This is not limited in this application.

For example, when physical simulation processing is rigid body simulation processing, the original data of the intermediate result corresponding to the current frame is current state information of a rigid body (the current state information may be state information of the rigid body that is subject to an external force at the current moment). When physical simulation processing is elastic body simulation processing, the original data of the intermediate result corresponding to the current frame is current state information of an elastic body (the current state information may be state information of a spring that forms the elastic body, that is subject to an external force (which is an external force applied to the elastic body) at the current moment, and that has internal extrusion of the spring). When physical simulation processing is cloth simulation processing and fluid simulation processing, the original data of the intermediate result corresponding to the current frame is current state information of cloth or fluid (the current state information may be state information of particles that form the cloth or the fluid and that are subject to an external force (which is an external force applied to the cloth or the fluid) and an interaction force between the particles at the current moment).

For example, when graphics processing is animation processing, in a program running phase, a server performs animation processing based on an animation play frame rate, to obtain original data of an intermediate result corresponding to each frame. When the server receives user interaction information within a third preset time period (that is, within a time period from a moment of generating original data of an intermediate result corresponding to a previous frame to a moment of starting animation processing of the current frame), the server may perform, according to an inverse kinematics (Inverse Kinematics, IK) algorithm, animation processing based on the user interaction information and the simulation data corresponding to the intermediate result corresponding to the current frame, to generate the original data of the intermediate result corresponding to the current frame. In a possible implementation, one group of key frames that matches the current moment (that is, matches the current frame) may be first determined, based on the user interaction information, from a plurality of groups of key frames included in the simulation data. Next, a plurality of first candidate key frames that match the current moment may be selected from the group of key frames based on the animation play frame rate, and then interpolation may be performed on the plurality of first candidate key frames, to obtain a plurality of second candidate key frames. Then a target key frame is selected from the plurality of second candidate key frames. In a possible implementation, one key frame that matches the current moment (that is, matches the current frame) may be directly determined, based on the user interaction information as a target key frame, from a plurality of key frames included in a plurality of groups of key frames included in the simulation data. Then animation processing is performed based on the target key frame and the user interaction information according to an IK algorithm, to generate the original data of the intermediate result corresponding to the current frame.

When the server receives no user interaction information within a third preset time period, the server may perform, according to an IK algorithm, animation processing based on the simulation data corresponding to the intermediate result corresponding to the current frame, to generate the original data of the intermediate result corresponding to the current frame. In a possible implementation, one group of key frames that matches the current moment (that is, matches the current frame) may be first determined, based on the animation play frame rate and a play sequence of a plurality of groups of key frames, from the plurality of groups of key frames included in the simulation data. Next, a plurality of first candidate key frames that match the current moment may be selected from the group of key frames based on the animation play frame rate, and then interpolation may be performed on the plurality of first candidate key frames, to obtain a plurality of second candidate key frames. Then a target key frame is selected from the plurality of second candidate key frames. In a possible implementation, one key frame that matches the current moment (that is, matches the current frame) may be directly determined, based on the animation play frame rate and a play sequence of a plurality of groups of key frames as a target key frame, from a plurality of key frames included in the plurality of groups of key frames included in the simulation data. Then a second-phase operation of animation production is performed based on the target key frame according to the IK algorithm, to generate the original data of the intermediate result corresponding to the current frame.

The original data of the intermediate result corresponding to the current frame obtained through animation processing may include a second skeleton location and a second skeleton direction of a target object at the current moment, and the target object may be an object in an animation picture of the current frame.

S502: Calculate a residual between the simulation data corresponding to the intermediate result corresponding to the current frame and the original data of the intermediate result corresponding to the current frame, to obtain first difference data of the intermediate result corresponding to the current frame.

For example, when graphics processing is rendering processing, in a possible implementation, differences between corresponding pixels in the simulation data corresponding to the intermediate result corresponding to the current frame and in the original data of the intermediate result corresponding to the current frame may be calculated pixel by pixel, to obtain the first difference data. Refer to the following formula (2):

$$F_diff = F_realtime - F_bake \quad (2)$$

Herein, *F_diff* indicates the first difference data, *F_realtime* indicates the original data of the intermediate result corresponding to the current frame, and *F_bake* indicates the simulation data corresponding to the intermediate result corresponding to the current frame. In this case, the first difference data of the intermediate result corresponding to the current frame is also a two-dimensional picture, and may be referred to as a residual picture.

In a possible implementation, exclusive OR between the corresponding pixels in the simulation data corresponding to the intermediate result corresponding to the current frame and in the original data of the intermediate result corresponding to the current frame may be calculated pixel by pixel, to obtain the first difference data of the intermediate result corresponding to the current frame.

It should be understood that a manner of calculating the residual between the simulation data corresponding to the intermediate result corresponding to the current frame and the original data of the intermediate result corresponding to the current frame is not limited in this application.

For example, when graphics processing is physical simulation processing, in cloth simulation processing and fluid simulation processing, differences between state information of corresponding particles in the simulation data corresponding to the intermediate result corresponding to the current frame and in the original data of the intermediate result corresponding to the current frame may be calculated particle by particle, to obtain the first difference data of the intermediate result corresponding to the current frame. For example, the state information includes location information. For one particle corresponding to the current frame, a location difference between initial location information of the particle and current location information of the particle may be calculated, to obtain first difference data (which may be location difference data) corresponding to the particle.

For example, when graphics processing is physical simulation processing, in rigid body simulation processing, differences between state information of corresponding rigid bodies in the simulation data corresponding to the intermediate result corresponding to the current frame and in the original data of the intermediate result corresponding to the current frame may be calculated rigid body by rigid body, to obtain the first difference data of the intermediate result corresponding to the current frame. For example, the state information includes location information and self-rotation information. For one rigid body corresponding to the current frame, a location difference between initial location information of the rigid body and current location information of the rigid body may be calculated, and a self-rotation difference between initial self-rotation information of the rigid body and current self-rotation information of the rigid body may be calculated, to obtain first difference data (which may include location difference data and self-rotation difference data) corresponding to the rigid body.

For example, when graphics processing is physical simulation processing, in elastic body simulation processing, differences between state information of corresponding elastic bodies in the simulation data corresponding to the intermediate result corresponding to the current frame and in the original data of the intermediate result corresponding to the current frame may be calculated spring by spring, to obtain the first difference data of the intermediate result corresponding to the current frame. For example, the state information includes location information and rotation information. For one spring corresponding to the current frame, a location difference between initial location information of the spring and current location information of the spring may be calculated, and a rotation difference between initial rotation information of the spring and current rotation information of the spring may be calculated, to obtain first difference data (which may include location difference data and rotation difference data) corresponding to the spring.

For example, when graphics processing is animation processing, differences between locations and differences between directions of corresponding skeletons in the simulation data corresponding to the intermediate result corresponding to the current frame and in the original data of the intermediate result corresponding to the current frame may be calculated skeleton by skeleton, to obtain the first difference data of the intermediate result corresponding to the current frame. For example, for one skeleton corresponding to the current frame, a location difference between a first skeleton location and a second skeleton location of the skeleton may be calculated, and a direction difference between a first skeleton direction and a second skeleton direction of the skeleton may be calculated, to obtain first difference data (which may include skeleton location difference data and skeleton direction difference data) corresponding to the skeleton.

S503: Encode the first difference data of the intermediate result corresponding to the current frame, to obtain a bitstream.

S504: Send the bitstream.

In a possible implementation, when a data format in which the entropy encoder supports encoding is the same as a data format of the first difference data of the intermediate result corresponding to the current frame, the entropy encoder may directly encode the first difference data of the intermediate result corresponding to the current frame, to obtain the bitstream.

In a possible implementation, when a data format in which the entropy encoder supports encoding is different from a data format of the first difference data of the intermediate result corresponding to the current frame, format conversion may be performed on the first difference data of the intermediate result corresponding to the current frame, to convert the first difference data of the intermediate result corresponding to the current frame into a data format in which the entropy encoder supports encoding.

A format conversion process of the first difference data of the intermediate result corresponding to the current frame is described below by using an example in which graphics processing is rendering processing. Refer to steps S11 to S13 below.

S11: Normalize the first difference data, to obtain data A.

For example, a normalization manner may include but is not limited to adaptive normalization, fixed parameter normalization, max-min normalization, and Z-score (standard score) normalization. This is not limited in this application.

For example, max-min normalization is used. Specifically, a pixel value of each pixel in the first difference data of the intermediate result corresponding to the current frame may be traversed, to determine a maximum pixel value *S*_max and a minimum pixel value *S*_min. Then the pixel value of each pixel in the first difference data is normalized based on the maximum pixel value *S*_max and the minimum pixel value *S*_max. Refer to the following formula (3):

$$Ri = \frac{Pi - S_\min}{S_\max - S_\min} \quad (3)$$

Herein, *Pi* indicates a pixel value of an $i^{th}$ pixel in the first difference data of the intermediate result corresponding to the current frame, and *Ri* indicates a normalized pixel value of the $i^{th}$ pixel in the first difference data of the intermediate result corresponding to the current frame, that is, a pixel value of an $i^{th}$ pixel in the data A.

S12: Quantize the data A, to obtain data B.

For example, a pixel value of each pixel in the data A may be quantized based on a preset coding bit depth (bitdepth) (for example, 8 bits, 10 bits, or 12 bits). Refer to the following formula (4):

$$Ii = \mathrm{round}\left(Ri * 2^{bitdepth}\right) \quad (4)$$

Herein, *Ii* indicates a pixel value obtained by quantizing the $i^{th}$ pixel in the data A, that is, a pixel value of an $i^{th}$ pixel in the data B.

It should be understood that the data A may alternatively be quantized in another quantization manner. This is not limited in this application.

S13: Perform color space conversion on the data B, to obtain data C.

For example, the data B obtained in S12 may be used as an RGB picture. In other words, color space of the data B is an RGB domain.

When the entropy encoder supports encoding of the RGB picture, S13 may not need to be performed. When the entropy encoder does not support encoding of the RGB picture, S13 may be performed. A target color space in which the entropy encoder supports encoding may be determined. Then color space conversion may be performed on the data B, to obtain the data C in the target color space. Then the data C may be input into the entropy encoder, and the entropy encoder encodes the data C.

For example, when the target color space is a YUV domain, color space conversion is performed on the data B, to obtain the data C in the YUV domain; when the target color space is an XYZ domain, color space conversion is performed on the data B, to obtain the data C in the XYZ domain; or when the target color space is a Lab domain, color space conversion is performed on the data B, to obtain the data C in the Lab domain.

For example, the RGB domain, the YUV domain, the XYZ domain, and the Lab domain respectively refer to a CIE 1931 RGB color space, a YUV color space (including variants such as YCbCr, YPbPr, and YCoCg), a CIE 1931 XYZ color space, and a CIELAB color space.

It should be understood that format conversion is optional, in other words, S11 to S13 above are optional steps.

In a possible implementation, operations such as transformation, quantization, and entropy encoding may be performed on the first difference data of the intermediate result corresponding to the current frame (or first difference data obtained through format conversion of the intermediate result corresponding to the current frame), to obtain the bitstream.

FIG. 6 is a diagram of an example of a decoding process. FIG. 6 describes a process of performing decoding based on FIG. 5a for the original data of the intermediate result corresponding to the current frame. The decoding process described in the embodiment in FIG. 6 corresponds to the encoding process in the embodiment in FIG. 5b.

S601: Receive the bitstream.

S602: Decode the bitstream, to obtain second difference data of the intermediate result corresponding to the current frame.

It should be noted that S602 may be performed by the entropy decoder.

S603: Perform summation on the simulation data corresponding to the intermediate result corresponding to the current frame and the second difference data of the intermediate result corresponding to the current frame, to obtain reconstructed data of the intermediate result corresponding to the current frame.

For example, when the server performs format conversion on the first difference data of the intermediate result corresponding to the current frame, after decoding the bitstream to obtain the second difference data of the intermediate result corresponding to the current frame, the server may perform format conversion on the second difference data of the intermediate result corresponding to the current frame. A format conversion process of the second difference data of the intermediate result corresponding to the current frame is described below by using an example in which graphics processing is rendering processing. Refer to S31 to S33 below.

S31: Perform color space conversion on the second difference data of the intermediate result corresponding to the current frame, to obtain data D.

For example, when the server performs S13, the terminal device may perform S31. For example, color space conversion may be performed on the second difference data of the intermediate result corresponding to the current frame, to obtain the data D in the RGB domain.

For example, when the server does not perform S13, the terminal device does not need to perform S31, and directly performs S32. That is, S31 is an optional step.

S32: Dequantize the data D, to obtain data E.

For example, a pixel value of each pixel in the data D may be dequantized based on the preset coding bit depth (bitdepth) (for example, 8 bits, 10 bits, or 12 bits). Refer to the following formula (5):

$$Ri' = \frac{Ii'}{2^{bitdepth}} \quad (5)$$

Herein, *Ii'* indicates a pixel value of an $i^{th}$ pixel in the data D, and *Ri'* indicates a pixel value of an $i^{th}$ pixel in the data E.

It should be understood that the data D may alternatively be dequantized in another dequantization manner, provided that the another dequantization manner corresponds to the quantization manner in S12. This is not limited in this application.

S33: Denormalize the data E, to obtain data F.

For example, a denormalization manner in S33 in the decoding process of the terminal device corresponds to the normalization manner in S11 in the encoding process of the server.

For example, max-min denormalization is used. Specifically, a pixel value of each pixel in the second difference data may be traversed, to determine a maximum pixel value *S*_max and a minimum pixel value *S*_min. Then the pixel value of each pixel in the second difference data is denormalized based on the maximum pixel value *S*_max and the minimum pixel value *S*_max. Refer to the following formula (6):

$$Pi' = Ri' * \left(S_\max - S_\min\right) + S_\min \quad (6)$$

Herein, *Pi'* indicates a pixel value of an $i^{th}$ pixel in the data F.

For example, when the server does not perform format conversion on the first difference data, after decoding the bitstream to obtain the second difference data, the server does not need to perform format conversion on the second difference data. In other words, S31 to S33 do not need to be performed.

For example, when graphics processing is rendering processing, in a possible implementation, sums of corresponding pixels in the simulation data corresponding to the intermediate result corresponding to the current frame and in the second difference data of the intermediate result corresponding to the current frame may be calculated pixel by pixel, to obtain the reconstructed data of the intermediate result. Refer to the following formula (7):

$$F_realtime = F_diff + F_bake \quad (7)$$

Herein, *F_diff* indicates second difference data (namely, the data F) obtained through format conversion of the intermediate result corresponding to the current frame, *F_realtime* indicates the reconstructed data of the intermediate result corresponding to the current frame, and *F_bake* indicates the simulation data corresponding to the intermediate result corresponding to the current frame.

In a possible implementation, when a manner in which the server determines the first difference data of the intermediate result corresponding to the current frame is exclusive OR, the terminal device may calculate exclusive OR between the corresponding pixels in the simulation data corresponding to the intermediate result corresponding to the current frame and in the second difference data of the intermediate result corresponding to the current frame pixel by pixel, to obtain the reconstructed data of the intermediate result corresponding to the current frame.

It should be understood that a manner in which the terminal device determines the reconstructed data of the intermediate result corresponding to the current frame in the decoding process corresponds to a manner in which the server determines the original data of the intermediate result corresponding to the current frame in the encoding process.

For example, when graphics processing is physical simulation processing, in cloth simulation processing and fluid simulation processing, sums of state information of corresponding particles in the simulation data corresponding to the intermediate result corresponding to the current frame and in the second difference data of the intermediate result corresponding to the current frame may be calculated particle by particle, to obtain the reconstructed data of the intermediate result corresponding to the current frame. For example, the state information includes location information. For one particle corresponding to the current frame, a location sum of initial location information of the particle and location difference data of the particle may be calculated, to obtain reconstructed data of an intermediate result corresponding to the particle.

For example, when graphics processing is physical simulation processing, in rigid body simulation processing, sums of states of corresponding rigid bodies in the simulation data corresponding to the intermediate result corresponding to the current frame and in the second difference data of the intermediate result corresponding to the current frame may be calculated rigid body by rigid body, to obtain the reconstructed data of the intermediate result corresponding to the current frame. For example, the state information includes location information and self-rotation information. For one rigid body corresponding to the current frame, a location sum of initial location information of the rigid body and location difference data of the rigid body may be calculated, and a self-rotation sum of initial self-rotation information of the rigid body and self-rotation difference data of the rigid body may be calculated, to obtain reconstructed data of an intermediate result corresponding to the rigid body.

For example, when graphics processing is physical simulation processing, in elastic body simulation processing, sums of state information of corresponding springs in the simulation data corresponding to the intermediate result corresponding to the current frame and in the second difference data of the intermediate result corresponding to the current frame may be calculated spring by spring, to obtain the reconstructed data of the intermediate result corresponding to the current frame. For example, the state information includes location information and zoom information. For one spring corresponding to the current frame, a location sum of initial location information of the spring and location difference data of the spring may be calculated, and a rotation sum of initial zoom information of the spring and a zoom difference data of the spring may be calculated, to obtain reconstructed data of an intermediate result corresponding to the spring.

For example, when graphics processing is animation processing, sums of locations and sums of directions of corresponding skeletons in the simulation data corresponding to the intermediate result corresponding to the current frame and in the second difference data of the intermediate result corresponding to the current frame may be calculated skeleton by skeleton, to obtain the reconstructed data of the intermediate result corresponding to the current frame. For example, for one skeleton corresponding to the current frame, a location sum of a first skeleton location and skeleton location difference data of the skeleton may be calculated, and a direction sum of a first skeleton direction and skeleton direction difference data of the skeleton may be calculated, to obtain reconstructed data of an intermediate result corresponding to the skeleton.

S604: Perform a second-phase operation of graphics processing based on the reconstructed data of the intermediate result corresponding to the current frame, to generate digital content for displaying.

For example, for S604, refer to the descriptions of S404 above. Details are not described herein again.

In this way, because the original data of the intermediate result corresponding to the current frame has strong correlation with the simulation data corresponding to the intermediate result corresponding to the current frame, a data amount of the bitstream obtained by encoding residual data between the original data of the intermediate result corresponding to the current frame and the simulation data corresponding to the intermediate result corresponding to the current frame is smaller than that obtained by directly encoding the original data of the intermediate result corresponding to the current frame. Therefore, encoding efficiency is higher. Scenarios such as a game, a VR conference, and livestreaming have a high real-time requirement. The solution provided in this application can reduce the data amount of the bitstream, thereby reducing a bandwidth requirement in real-time transmission, reducing frame freezing, improving user experience, and reducing operation costs of an activity organizer.

In addition, when graphics processing is rendering processing, in the conventional technology in which residual data between original data of an intermediate result corresponding to a previous frame and the original data of the intermediate result corresponding to the current frame is encoded, because original data of an intermediate result of each frame includes a part that cannot be pre-calculated under impact of user interaction and a part that can be pre-calculated without the impact of the user interaction, the residual data between the original data of the intermediate result corresponding to the previous frame and the original data of the intermediate result corresponding to the current frame includes residual data of the part that cannot be pre-calculated under the impact of the user interaction and residual data of the part that can be pre-calculated without the impact of the user interaction, but the difference data between the simulation data corresponding to the intermediate result corresponding to the current frame and the original data of the intermediate result corresponding to the current frame includes only the residual data of the part that cannot be pre-calculated under the impact of the user interaction. It can be learned that, in this application, a data amount of the encoded residual data is smaller, and a data amount of the bitstream obtained by encoding the residual data is smaller. This can improve encoding efficiency.

Next, when graphics processing is rendering processing, an error is introduced in a process of generating the original data of the intermediate result corresponding to the previous frame, however, in a simulation data generation process, no error is introduced or an introduced error is small, so that a data amount of the encoded difference data can be reduced, and a data amount of the bitstream obtained by encoding the difference data is smaller. This can improve encoding efficiency.

In a possible implementation, the intermediate result may be predicted based on the simulation data corresponding to the intermediate result corresponding to the current frame, to generate predicted data of the intermediate result corresponding to the current frame; and then a residual between the original data of the intermediate result corresponding to the current frame and the predicted data of the intermediate result corresponding to the current frame is calculated, to obtain the first difference data. Details may be as follows.

FIG. 7a is a diagram of an example of a device-cloud collaboration system framework. FIG. 7a shows a device-cloud collaboration system based on FIG. 1c.

Refer to FIG. 7a. For example, the encoding module in FIG. 1c may include a residual module, a first prediction module, and an entropy encoder. The first prediction module may perform S702 and S703 below, the residual module may perform S704 below, and the entropy encoder may perform S705. In other words, S702 to S705 belong to an encoding process of the encoding module.

Refer to FIG. 7a. For example, the decoding module in FIG. 1c may include a summation module, a second prediction module, and an entropy decoder. The second prediction module may perform S803 and S804 below, the residual module may perform S805 below, and the entropy encoder may perform S802. In other words, S802 to S805 belong to a decoding process of the decoding module.

It should be understood that the encoding module may include only the entropy encoder. In this case, S702 to S704 may be performed by a first graphics processing module, and S705 may be performed by the encoding module. In other words, S705 belongs to the encoding process of the encoding module, and S702 to S704 do not belong to the encoding process of the encoding module. Correspondingly, the decoding module may include only the entropy decoder. In this case, S803 to S805 may be performed by a second graphics processing module, and S802 is performed by the decoding module. In other words, S802 belongs to the decoding process of the decoding module, and S803 to S805 do not belong to the decoding process of the decoding module. Modules included in the encoding module and the decoding module are not limited in this application. The following uses the device-cloud collaboration system shown in FIG. 7a as an example for description.

FIG. 7b is a diagram of an example of an encoding process. FIG. 7b describes a process of encoding original data of an intermediate result corresponding to a current frame based on FIG. 7a. In the embodiment in FIG. 7b, a residual may be calculated based on the original data of the intermediate result corresponding to the current frame and predicted data of the intermediate result corresponding to the current frame obtained through prediction based on simulation data corresponding to the intermediate result corresponding to the current frame, to obtain first difference data of the intermediate result corresponding to the current frame.

S701: Perform a first-phase operation of graphics processing, to obtain the original data of the intermediate result corresponding to the current frame.

For example, for S701, refer to the descriptions of S501. Details are not described herein again.

For example, in the embodiment in FIG. 7b, when the simulation data corresponding to the intermediate result corresponding to the current frame is a plurality of frames of simulation data, for a manner of predicting the intermediate result based on the simulation data corresponding to the intermediate result corresponding to the current frame, to obtain the predicted data of the intermediate result corresponding to the current frame, refer to S702 and S703.

S702: Perform interpolation based on the plurality of frames of simulation data corresponding to the intermediate result corresponding to the current frame, to obtain interpolated data.

For example, in the embodiment in FIG. 7b, when graphics processing is rendering processing, each group of pre-baked maps includes a plurality of pre-baked maps. For example, one group of pre-baked maps may include a plurality of pre-baked maps corresponding to a plurality of preset moments in this three-dimensional scene, where one pre-baked map may be referred to as one frame of simulation data. When graphics processing is physical simulation processing, the simulation data may be state information of a physically simulated object at a plurality of preset motion moments, where state information of the physically simulated object at one preset motion moment may be referred to as one frame of simulation data. When graphics processing is animation processing, one key frame in each group of key frames may be referred to as one frame of simulation data.

For example, a plurality of frames of candidate simulation data that match the current frame (that is, a plurality of frames of simulation data corresponding to the intermediate result corresponding to the current frame) may be selected from a plurality of frames of simulation data, and then interpolation is performed based on the plurality of frames of candidate simulation data, to obtain interpolated data. The interpolated data may be one frame of data, or may be a plurality of frames of data.

For example, two frames of candidate simulation data are selected; and interpolation is performed based on the two frames of candidate simulation data, to obtain one frame of interpolated data.

For example, two frames of candidate simulation data are selected; interpolation is performed based on the two frames of candidate simulation data, to obtain one frame of interpolated data 1; interpolation is performed based on the interpolated data 1 and a previous frame of candidate simulation data, to obtain interpolated data 2; and interpolation is performed based on the interpolated data 1 and a next frame of candidate simulation data, to obtain interpolated data 3. In this way, the three frames of interpolated data may be obtained.

For example, three frames of candidate simulation data are selected; interpolation is performed based on the first two frames of candidate simulation data, to obtain one frame of interpolated data; and interpolation is performed based on the last two frames of candidate simulation data, to obtain one frame of interpolated data. In this way, the two frames of interpolated data may be obtained.

It should be understood that an amount of selected candidate simulation data, a quantity of interpolation times, a quantity of frames of interpolated data, and the like may be determined based on a requirement. This is not limited in this application.

Selecting the candidate simulation data from the plurality of frames of simulation data, namely, selecting the plurality of frames of simulation data corresponding to the intermediate result corresponding to the current frame, may be completed by the first graphics processing module. The first graphics processing module may select the candidate simulation data based on a video play frame rate, user interaction information, and the like.

For example, graphics processing is animation processing. It is assumed that the candidate simulation data is two frames of candidate simulation data. One frame of candidate simulation data includes a first skeleton location and a first skeleton direction of a target object at a first moment in a target motion process, and the other frame of candidate simulation data includes a first skeleton location and a first skeleton direction of the target object at a second moment in the target motion process. The target object is an object in an animation picture corresponding to the current frame, the target motion process is a motion process of the target object, and the first moment and the second moment are moments at which a motion state is close to a motion state of the target object in the current frame. For example, interpolation may be performed on the first skeleton locations included in the two frames of candidate simulation data, and interpolation may be performed on the first skeleton directions included in the two frames of candidate simulation data, to obtain one frame of interpolated data, where the interpolated data includes a third skeleton location and a third skeleton direction, obtained through interpolation, of the target object at a current moment.

S703: Select, from the interpolated data, the predicted data of the intermediate result corresponding to the current frame.

For example, when the interpolated data is one frame of interpolated data, the frame of interpolated data may be used as the predicted data of the intermediate result corresponding to the current frame. When the interpolated data is a plurality of frames of interpolated data, one frame of interpolated data may be selected from the plurality of frames of interpolated data as the predicted data of the intermediate result corresponding to the current frame. The first graphics processing module may select the predicted data of the intermediate result corresponding to the current frame.

S704: Calculate the residual between the original data of the intermediate result corresponding to the current frame and the predicted data of the intermediate result corresponding to the current frame, to obtain the first difference data of the intermediate result corresponding to the current frame.

S705: Encode the first difference data of the intermediate result corresponding to the current frame, to obtain a bitstream.

S706: Send the bitstream.

For example, for S704 and S705, refer to the descriptions of S502 and S503 above. Details are not described herein again.

It should be noted that, when graphics processing is animation processing, in the process of determining the original data of the intermediate result corresponding to the current frame in S501 above, the first candidate key frame may be the candidate simulation data in S704, the second candidate key frame may be the interpolated data in S704, and the target key frame is the predicted data of the intermediate result corresponding to the current frame in S704. In this case, S702 to S704 may be first performed, and then S701 is performed. To be specific, the predicted data of the intermediate result corresponding to the current frame is first determined, and then animation processing is performed according to an IK algorithm based on the predicted data of the intermediate result corresponding to the current frame, to generate the original data of the intermediate result corresponding to the current frame.

FIG. 8 is a diagram of an example of a decoding process. FIG. 8 describes a process of performing decoding based on FIG. 7a for the original data of the intermediate result corresponding to the current frame. The decoding process described in the embodiment in FIG. 8 corresponds to the encoding process in the embodiment in FIG. 7b.

S801: Receive the bitstream.

S802: Decode the bitstream, to obtain second difference data of the intermediate result corresponding to the current frame.

S803: Perform interpolation based on the plurality of frames of simulation data corresponding to the intermediate result corresponding to the current frame, to obtain the interpolated data.

S804: Select, from the interpolated data, the predicted data of the intermediate result corresponding to the current frame.

S805: Perform summation on the predicted data of the intermediate result corresponding to the current frame and the second difference data of the intermediate result corresponding to the current frame, to obtain reconstructed data of the intermediate result corresponding to the current frame.

S806: Perform a second-phase operation of graphics processing based on the reconstructed data of the intermediate result corresponding to the current frame, to generate digital content for displaying.

For example, for S801 to S806, refer to the foregoing descriptions. Details are not described herein again.

Because a data amount of the simulation data is large, a large amount of memory is occupied. A plurality of frames of simulation data with a large time interval are generated in a simulation data generation process, to reduce memory occupation. The predicted data of the intermediate result corresponding to the current frame selected from the interpolated data obtained by performing interpolation based on the plurality of frames of simulation data corresponding to the intermediate result corresponding to the current frame is closer to the original data of the intermediate result corresponding to the current frame in time than the simulation data corresponding to the intermediate result corresponding to the current frame. Therefore, the predicted data of the intermediate result corresponding to the current frame has stronger correlation with the original data of the intermediate result corresponding to the current frame. In this way, the difference data between the original data of the intermediate result corresponding to the current frame and the predicted data of the intermediate result corresponding to the current frame is less than difference data between the original data of the intermediate result corresponding to the current frame and the simulation data corresponding to the intermediate result corresponding to the current frame. Therefore, compared with the embodiment in FIG. 5b and FIG. 6, the embodiment in FIG. 7b and FIG. 8 can improve encoding efficiency to a greater extent.

The following describes, by using an example in which graphics processing is physical simulation processing, another manner of predicting the intermediate result based on the simulation data corresponding to the intermediate result corresponding to the current frame, to determine the predicted data of the intermediate result corresponding to the current frame in encoding and decoding processes based on FIG. 7a.

FIG. 9 is a diagram of an example of an encoding process. FIG. 9 describes a process of encoding original data of an intermediate result corresponding to a current frame based on FIG. 7a. In the embodiment in FIG. 9, graphics processing is physical simulation processing. In the embodiment in FIG. 9, a residual may be calculated based on the original data of the intermediate result corresponding to the current frame and predicted data of the intermediate result corresponding to the current frame, to obtain first difference data of the intermediate result corresponding to the current frame.

S901: Perform a first-phase operation of graphics processing, to obtain the original data of the intermediate result corresponding to the current frame.

For example, simulation data corresponding to the intermediate result corresponding to the current frame may be state information of a physically simulated object that is not subject to an action force at an initial moment.

For example, the original data of the intermediate result corresponding to the current frame may be state information of the physically simulated object that is subject to an action force at a current moment. For details, refer to the descriptions of S501 above. Details are not described herein again.

For example, for the manner of predicting the intermediate result based on the simulation data corresponding to the intermediate result corresponding to the current frame, to obtain the predicted data of the intermediate result corresponding to the current frame, refer to S902 and S903.

S902: Perform state prediction based on initial state information of the physically simulated object, to generate current predicted state information of the physically simulated object.

For example, when receiving user interaction information within a second preset time period, a server may perform state prediction based on the user interaction information, the initial state information of the physically simulated object, and a motion model of the physically simulated object, to generate the current predicted state information of the physically simulated object (the current predicted state information may be state information of the physically simulated object that is not subject to an action force at the current moment).

For example, when receiving no user interaction information within a second preset time period, a server may perform state prediction based on the initial state information of the physically simulated object and a motion model of the physically simulated object, to generate the current predicted state information of the physically simulated object.

For example, a process of simulating a rigid body to perform uniform linear motion and perform self-rotation under an external force is used as an example. The current predicted state information of the physically simulated object may be location information at the current moment in a case in which the rigid body performs uniform linear motion, and is not subject to the external force. The original data of the intermediate result corresponding to the current frame may be location information and rotation information at the current moment in a case in which the rigid body performs uniform linear motion, and is subject to the external force.

For example, a process of simulating an elastic body to perform uniform linear motion and deform under an external force is used as an example. The current predicted state information of the physically simulated object may be location information at the current moment in a case in which a spring forming the elastic body performs uniform linear motion, is not subject to the external force (which is an external force applied to the elastic body), and does not deform (that is, there is no internal extrusion of the spring). The original data of the intermediate result corresponding to the current frame may be location information and rotation information at the current moment in a case in which the spring performs uniform linear motion, is subject to the external force, and deforms.

For example, hair simulation based on a particle system is used as an example. The current predicted state information of the physically simulated object may be hair location information that uses a center point of a head model of a character as an origin of a coordinate system and that is obtained when hair of the character is not subject to an external force and an interaction force between hair particles at the current moment. The original data of the intermediate result corresponding to the current frame may be hair particle location information that uses the center point of the head model of the character as the origin of the coordinate system and that is obtained when the hair of the character is subject to the external force and the interaction force between the hair particles at the current moment (that is, the character is at a current location).

S903: Determine, based on the current predicted state information of the physically simulated object, the predicted data of the intermediate result corresponding to the current frame.

For example, the current predicted state information of the physically simulated object may be used as the predicted data of the intermediate result corresponding to the current frame.

S904: Calculate the residual between the original data of the intermediate result corresponding to the current frame and the predicted data of the intermediate result corresponding to the current frame, to obtain the first difference data of the intermediate result corresponding to the current frame.

S905: Encode the first difference data of the intermediate result corresponding to the current frame, to obtain a bitstream.

S906: Send the bitstream.

For example, for S904 and S905, refer to the foregoing descriptions. Details are not described herein again.

It should be understood that the first prediction module may perform S902 and S903, the residual module may perform S904, and the entropy encoder may perform S905. In other words, S902 to S905 belong to an encoding process of the encoding module.

FIG. 10 is a diagram of an example of a decoding process. FIG. 10 describes a process of performing decoding based on FIG. 7a for the original data of the intermediate result corresponding to the current frame. The decoding process described in the embodiment in FIG. 10 corresponds to the encoding process in the embodiment in FIG. 9.

S1001: Receive the bitstream.

S1002: Decode the bitstream, to obtain second difference data of the intermediate result corresponding to the current frame.

S1003: Perform state prediction based on the initial state information of the physically simulated object, to generate the current predicted state information of the physically simulated object.

S1004: Determine, based on the current predicted state information of the physically simulated object, the predicted data of the intermediate result corresponding to the current frame.

S1005: Perform summation on the predicted data of the intermediate result corresponding to the current frame and the second difference data of the intermediate result corresponding to the current frame, to obtain reconstructed data of the intermediate result corresponding to the current frame.

S1006: Perform a second-phase operation of graphics processing based on the reconstructed data of the intermediate result corresponding to the current frame, to generate digital content for displaying.

For example, for S1001 to S1006, refer to the foregoing descriptions. Details are not described herein again.

It should be understood that the second prediction module may perform S1003 and S1004 below, the summation module may perform S1005 above, and the entropy decoder may perform S1002. In other words, S1002 to S1005 belong to a decoding process of the decoding module.

For example, a manner of encoding the original data of the intermediate result based on the simulation data corresponding to the intermediate result corresponding to the current frame may be: after the reference frame of the current frame is determined based on the simulation data corresponding to the intermediate result corresponding to the current frame, encoding, based on the reference frame of the current frame, the original data of the intermediate result corresponding to the current frame.

FIG. 11a is a diagram of an example of an encoding process. FIG. 11 shows an encoding process of a server.

S1101: Perform a first-phase operation of graphics processing, to obtain original data of an intermediate result corresponding to a current frame.

For example, for S1101, refer to the descriptions of S301 above. Details are not described herein again.

S1102: Determine a reference frame of the current frame based on simulation data corresponding to the intermediate result corresponding to the current frame.

In a possible implementation, the simulation data corresponding to the intermediate result corresponding to the current frame may be used as the reference frame of the current frame.

In a possible implementation, the simulation data corresponding to the intermediate result corresponding to the current frame and original data of an intermediate result corresponding to an encoded frame may be determined as a candidate reference frame of the current frame; and the reference frame of the current frame is selected from the candidate reference frame. Details are described below.

In a possible implementation, the intermediate result may be predicted based on the simulation data corresponding to the intermediate result corresponding to the current frame, to obtain first predicted data of the intermediate result corresponding to the current frame (namely, the predicted data of the intermediate result corresponding to the current frame in the foregoing embodiment); and the first predicted data of the intermediate result corresponding to the current frame is used as the reference frame of the current frame.

In a possible implementation, the first predicted data of the intermediate result corresponding to the current frame and the original data of the intermediate result corresponding to the encoded frame may be determined as a candidate reference frame of the current frame; and the reference frame of the current frame is selected from the candidate reference frame. Details are described below.

In a possible implementation, the intermediate result may be predicted based on the simulation data corresponding to the intermediate result corresponding to the current frame, to obtain first predicted data of the intermediate result corresponding to the current frame; then the first predicted data of the intermediate result corresponding to the current frame and the simulation data corresponding to the intermediate result corresponding to the current frame may be determined as a candidate reference frame of the current frame; and the reference frame of the current frame is selected from the candidate reference frame. Details are described below.

In a possible implementation, the intermediate result may be predicted based on the simulation data corresponding to the intermediate result corresponding to the current frame, to obtain first predicted data of the intermediate result corresponding to the current frame; then the first predicted data of the intermediate result corresponding to the current frame, the simulation data corresponding to the intermediate result corresponding to the current frame, and the original data of the intermediate result corresponding to the encoded frame may be determined as a candidate reference frame of the current frame; and the reference frame of the current frame is selected from the candidate reference frame. Details are described below.

S1103: Determine, based on the reference frame of the current frame and the original data of the intermediate result corresponding to the current frame, residual data of the intermediate result corresponding to the current frame.

For example, inter prediction may be performed, based on the reference frame of the current frame, on the original data of the intermediate result corresponding to the current frame, to obtain second predicted data; and then a residual between the second predicted data and the original data of the intermediate result corresponding to the current frame may be calculated, to obtain the residual data of the intermediate result corresponding to the current frame.

S1104: Encode the residual data of the intermediate result corresponding to the current frame, to obtain a bitstream.

S1105: Send the bitstream.

For example, operations such as transformation, quantization, and entropy encoding may be performed on the residual data of the intermediate result corresponding to the current frame, to encode the residual data of the intermediate result corresponding to the current frame, to obtain the bitstream.

It should be noted that S1101 above may be performed by the first graphics processing module in FIG. 1c. In a possible implementation, S1102 to S1104 may be performed by the encoding module in FIG. 1c. In other words, S1102 to S1104 belong to an encoding process of the encoding module. In a possible implementation, S1102 may be performed by the first graphics processing module in FIG. 1c, and S1103 and S1104 may be performed by the encoding module in FIG. 1c. In other words, S1103 and S1104 belong to an encoding process of the encoding module.

FIG. 11b is a diagram of an example of an encoding process in a cloud game scenario.

Refer to FIG. 11b. For example, in the cloud game scenario, when graphics processing is physical simulation processing, the server may perform a first-phase operation of physical simulation processing, to obtain original data of an intermediate physical simulation result corresponding to a game picture of a current frame; then determine, based on simulation data corresponding to the intermediate physical simulation result corresponding to the game picture of the current frame, a reference frame corresponding to the game picture of the current frame; then determine, based on the reference frame of the current frame and the original data of the intermediate physical simulation result corresponding to the game picture of the current frame, residual data of the intermediate physical simulation result corresponding to the game picture of the current frame; then encode the residual data of the intermediate physical simulation result corresponding to the game picture of the current frame, to obtain a bitstream; and send the bitstream.

It should be understood that, in the cloud game scenario, when graphics processing is rendering processing, the server may perform a first-phase operation of rendering processing, to obtain original data of an intermediate rendering result corresponding to a game picture of a current frame; then determine, based on simulation data corresponding to the intermediate rendering result corresponding to the game picture of the current frame, a reference frame corresponding to the game picture of the current frame; then determine, based on the reference frame of the current frame and the original data of the intermediate rendering result corresponding to the game picture of the current frame, residual data of the intermediate rendering result corresponding to the game picture of the current frame; then encode the residual data of the intermediate rendering result corresponding to the game picture of the current frame, to obtain a bitstream; and send the bitstream.

It should be understood that, in the cloud game scenario, when graphics processing is animation processing, the server may perform a first-phase operation of animation processing, to obtain original data of an intermediate animation result corresponding to a game picture of a current frame; then determine, based on simulation data corresponding to the intermediate animation result corresponding to the game picture of the current frame, a reference frame corresponding to the game picture of the current frame; then determine, based on the reference frame of the current frame and the original data of the intermediate animation result corresponding to the game picture of the current frame, residual data of the intermediate animation result corresponding to the game picture of the current frame; then encode the residual data of the intermediate animation result corresponding to the game picture of the current frame, to obtain a bitstream; and send the bitstream.

FIG. 11c is a diagram of an example of an encoding process in a virtual human livestreaming scenario.

Refer to FIG. 11c. For example, in the virtual human livestreaming scenario, when graphics processing is animation processing, the server may perform a first-phase operation of animation processing, to obtain original data of an intermediate animation result corresponding to a livestreaming picture of a current frame; then determine, based on simulation data corresponding to the intermediate animation result corresponding to the livestreaming picture of the current frame, a reference frame corresponding to the livestreaming picture of the current frame; then determine, based on the reference frame of the current frame and the original data of the intermediate animation result corresponding to the livestreaming picture of the current frame, residual data of the intermediate animation result corresponding to the livestreaming picture of the current frame; then encode the residual data of the intermediate animation result corresponding to the livestreaming picture of the current frame, to obtain a bitstream; and send the bitstream.

It should be understood that, in the virtual human livestreaming scenario, when graphics processing is rendering processing, the server may perform a first-phase operation of rendering processing, to obtain original data of an intermediate rendering result corresponding to a livestreaming picture of a current frame; then determine, based on simulation data corresponding to the intermediate rendering result corresponding to the livestreaming picture of the current frame, a reference frame corresponding to the livestreaming picture of the current frame; then determine, based on the reference frame of the current frame and the original data of the intermediate rendering result corresponding to the livestreaming picture of the current frame, residual data of the intermediate rendering result corresponding to the livestreaming picture of the current frame; then encode the residual data of the intermediate rendering result corresponding to the livestreaming picture of the current frame, to obtain a bitstream; and send the bitstream.

It should be understood that, in the virtual human livestreaming scenario, when graphics processing is physical simulation processing, the server may perform a first-phase operation of physical simulation processing, to obtain original data of an intermediate physical simulation result corresponding to a livestreaming picture of a current frame; then determine, based on simulation data corresponding to the intermediate physical simulation result corresponding to the livestreaming picture of the current frame, a reference frame corresponding to the livestreaming picture of the current frame; then determine, based on the reference frame of the current frame and the original data of the intermediate physical simulation result corresponding to the livestreaming picture of the current frame, residual data of the intermediate physical simulation result corresponding to the livestreaming picture of the current frame; then encode the residual data of the intermediate physical simulation result corresponding to the livestreaming picture of the current frame, to obtain a bitstream; and send the bitstream.

FIG. 11d is a diagram of an example of an encoding process in a virtual concert scenario.

Refer to FIG. 11d. For example, in the virtual concert scenario, when graphics processing is rendering processing, the server may perform a first-phase operation of rendering processing, to obtain original data of an intermediate rendering result corresponding to a concert picture of a current frame; then determine, based on simulation data corresponding to the intermediate rendering result corresponding to the concert picture of the current frame, a reference frame corresponding to the concert picture of the current frame; then determine, based on the reference frame of the current frame and the original data of the intermediate rendering result corresponding to the concert picture of the current frame, residual data of the intermediate rendering result corresponding to the concert picture of the current frame; then encode the residual data of the intermediate rendering result corresponding to the concert picture of the current frame, to obtain a bitstream; and send the bitstream.

It should be understood that, in the virtual concert scenario, when graphics processing is physical simulation processing, the server may perform a first-phase operation of physical simulation processing, to obtain original data of an intermediate physical simulation result corresponding to a concert picture of a current frame; then determine, based on simulation data corresponding to the intermediate physical simulation result corresponding to the concert picture of the current frame, a reference frame corresponding to the concert picture of the current frame; then determine, based on the reference frame of the current frame and the original data of the intermediate physical simulation result corresponding to the concert picture of the current frame, residual data of the intermediate physical simulation result corresponding to the concert picture of the current frame; then encode the residual data of the intermediate physical simulation result corresponding to the concert picture of the current frame, to obtain a bitstream; and send the bitstream.

It should be understood that, in the virtual concert scenario, when graphics processing is animation processing, the server may perform a first-phase operation of animation processing, to obtain original data of an intermediate animation result corresponding to a concert picture of a current frame; then determine, based on simulation data corresponding to the intermediate animation result corresponding to the concert picture of the current frame, a reference frame corresponding to the concert picture of the current frame; then determine, based on the reference frame of the current frame and the original data of the intermediate animation result corresponding to the concert picture of the current frame, residual data of the intermediate animation result corresponding to the concert picture of the current frame; then encode the residual data of the intermediate animation result corresponding to the concert picture of the current frame, to obtain a bitstream; and send the bitstream.

FIG. 11e is a diagram of an example of an encoding process in a VA or AR conference scenario.

Refer to FIG. 11e. For example, in the VA or AR conference scenario, when graphics processing is rendering processing, the server may perform a first-phase operation of rendering processing, to obtain original data of an intermediate rendering result corresponding to a livestreaming picture of a current frame; then determine, based on simulation data corresponding to the intermediate rendering result corresponding to the livestreaming picture of the current frame, a reference frame corresponding to the livestreaming picture of the current frame; then determine, based on the reference frame of the current frame and the original data of the intermediate rendering result corresponding to the livestreaming picture of the current frame, residual data of the intermediate rendering result corresponding to the livestreaming picture of the current frame; then encode the residual data of the intermediate rendering result corresponding to the conference picture of the current frame, to obtain a bitstream; and send the bitstream.

It should be understood that, in the VA or AR conference scenario, when graphics processing is physical simulation processing, the server may perform a first-phase operation of physical simulation processing, to obtain original data of an intermediate physical simulation result corresponding to a livestreaming picture of a current frame; then determine, based on simulation data corresponding to the intermediate physical simulation result corresponding to the livestreaming picture of the current frame, a reference frame corresponding to the livestreaming picture of the current frame; then determine, based on the reference frame of the current frame and the original data of the intermediate physical simulation result corresponding to the livestreaming picture of the current frame, residual data of the intermediate physical simulation result corresponding to the livestreaming picture of the current frame; then encode the residual data of the intermediate physical simulation result corresponding to the conference picture of the current frame, to obtain a bitstream; and send the bitstream.

It should be understood that, in the VA or AR conference scenario, when graphics processing is animation processing, the server may perform a first-phase operation of animation processing, to obtain original data of an intermediate animation result corresponding to a livestreaming picture of a current frame; then determine, based on simulation data corresponding to the intermediate animation result corresponding to the livestreaming picture of the current frame, a reference frame corresponding to the livestreaming picture of the current frame; then determine, based on the reference frame of the current frame and the original data of the intermediate animation result corresponding to the livestreaming picture of the current frame, residual data of the intermediate animation result corresponding to the livestreaming picture of the current frame; then encode the residual data of the intermediate animation result corresponding to the conference picture of the current frame, to obtain a bitstream; and send the bitstream.

FIG. 12a is a diagram of an example of a decoding process. FIG. 12a shows a decoding process of a terminal device. The decoding process in FIG. 12a corresponds to the encoding process in FIG. 11a.

S1201: Receive the bitstream.

S1202: Parse the bitstream, to obtain the residual data of the intermediate result corresponding to the current frame.

For example, in a program running phase, the terminal device may receive the bitstream sent by the server. The bitstream may include the residual data of the intermediate result corresponding to the current frame encoded by the server. Then the terminal device may parse the bitstream, to obtain the residual data of the intermediate result corresponding to the current frame.

S1203: Determine the reference frame of the current frame based on the simulation data corresponding to the intermediate result corresponding to the current frame.

In a possible implementation, the server writes a reference frame identifier into the bitstream in the encoding process. In this way, the terminal device may further obtain, by parsing the bitstream, the reference frame identifier corresponding to the current frame. Further, the terminal device may determine the reference frame of the current frame based on the reference frame identifier and the simulation data corresponding to the intermediate result corresponding to the current frame.

In a possible implementation, the server and the terminal device may pre-agree on a manner of determining the reference frame. In this way, the server may not need to write the reference frame identifier into the bitstream in the encoding process. After receiving the bitstream, the terminal device may determine the reference frame of the current frame based on the pre-agreed manner of determining reference frame and the simulation data corresponding to the intermediate result corresponding to the current frame.

It should be understood that, when the reference frame selected by the server is the original data of the intermediate result corresponding to the encoded frame, the server may write the reference frame identifier into the bitstream. In this way, the terminal device may select, based on the reference frame identifier, the reference frame of the current frame from reconstructed data of an intermediate result corresponding to a decoded frame.

S 1204: Perform reconstruction based on the reference frame of the current frame and the residual data of the intermediate result corresponding to the current frame, to obtain reconstructed data of the intermediate result corresponding to the current frame.

For example, inter prediction may be performed on the current frame based on the reference frame of the current frame, to obtain the second predicted data; and then summation may be performed on the second predicted data and the residual data of the intermediate result corresponding to the current frame, to obtain the reconstructed data of the intermediate result corresponding to the current frame.

S1205: Perform a second-phase operation of graphics processing based on the reconstructed data of the intermediate result corresponding to the current frame, to generate digital content for displaying.

For example, for S1205, refer to the descriptions of S404 above. Details are not described herein again.

It should be noted that S1202 to S1204 above may be performed by the decoding module in FIG. 1c. In other words, S1202 to S1204 belong to a decoding process of the decoding module. S1205 above may be performed by the second graphics processing module in FIG. 1c.

In this way, because the original data of the intermediate result corresponding to the current frame has strong correlation with the simulation data corresponding to the intermediate result corresponding to the current frame, a data amount of the bitstream obtained by encoding the original data of the intermediate result corresponding to the current frame based on the simulation data corresponding to the intermediate result corresponding to the current frame as the reference frame is smaller than that obtained by directly encoding the original data of the intermediate result corresponding to the current frame. Therefore, encoding efficiency is higher. Scenarios such as a game, a VR conference, and livestreaming have a high real-time requirement. The solution provided in this application can reduce the data amount of the bitstream, thereby reducing a bandwidth requirement in real-time transmission, reducing frame freezing, improving user experience, and reducing operation costs of an activity organizer.

In addition, when graphics processing is rendering processing, it can be learned, based on the effect descriptions in the embodiment 5b and the embodiment 6a, that a data amount of the residual data in FIG. 11 and FIG. 12 is less than a data amount of residual data between original data of an intermediate result corresponding to a previous frame and the original data of the intermediate result corresponding to the current frame. Therefore, encoding efficiency is higher.

Next, when graphics processing is rendering processing, an error is introduced in a process of generating original data of an intermediate result corresponding to each frame, however, in the simulation data generation process, no error is introduced or an introduced error is small, so that a data amount of encoded difference data can be reduced. This can improve encoding efficiency.

Next, for a case in which the current frame is a key frame (namely, an I frame) (or the current frame is not a frame in a video sequence, and is an independent frame of picture), in the conventional technology, intra encoding is performed on original data of an intermediate result corresponding to the key frame, however, in this application, inter encoding is performed on the original data of the intermediate result corresponding to the key frame. Therefore, in this application, a data amount of the bitstream obtained through encoding is smaller, and encoding efficiency is higher.

FIG. 12b is a diagram of an example of a decoding process in the cloud game scenario.

Refer to FIG. 12b. For example, in the cloud game scenario, when graphics processing is physical simulation processing, the terminal device receives and decodes the bitstream, to obtain second difference data of the intermediate physical simulation result corresponding to the game picture of the current frame; then generates, based on the second difference data of the intermediate physical simulation result corresponding to the game picture of the current frame and the simulation data corresponding to the intermediate physical simulation result corresponding to the game picture of the current frame, reconstructed data of the intermediate physical simulation result corresponding to the game picture; and then performs a second-phase operation of physical simulation processing based on the reconstructed data of the intermediate physical simulation result corresponding to the game picture, to generate the game picture.

It should be understood that, in the cloud game scenario, when graphics processing is rendering processing, the terminal device receives and decodes the bitstream, to obtain second difference data of the intermediate rendering result corresponding to the game picture of the current frame; then generates, based on the second difference data of the intermediate rendering result corresponding to the game picture of the current frame and the simulation data corresponding to the intermediate rendering result corresponding to the game picture of the current frame, reconstructed data of the intermediate rendering result corresponding to the game picture; and then performs a second-phase operation of rendering processing based on the reconstructed data of the intermediate rendering result corresponding to the game picture, to generate the game picture.

It should be understood that, in the cloud game scenario, when graphics processing is animation processing, the terminal device receives and decodes the bitstream, to obtain second difference data of the intermediate animation result corresponding to the game picture of the current frame; then generates, based on the second difference data of the intermediate animation result corresponding to the game picture of the current frame and the simulation data corresponding to the intermediate animation result corresponding to the game picture of the current frame, reconstructed data of the intermediate animation result corresponding to the game picture; and then performs a second-phase operation of animation processing based on the reconstructed data of the intermediate animation result corresponding to the game picture, to generate the game picture.

FIG. 12c is a diagram of an example of a decoding process in a virtual human livestreaming scenario.

Refer to FIG. 12c. For example, in the virtual human livestreaming scenario, when graphics processing is animation processing, the terminal device receives and decodes the bitstream, to obtain second difference data of the intermediate animation result corresponding to the livestreaming picture of the current frame; then generates, based on the second difference data of the intermediate animation result corresponding to the livestreaming picture of the current frame and the simulation data corresponding to the intermediate animation result corresponding to the livestreaming picture of the current frame, reconstructed data of the intermediate animation result corresponding to the livestreaming picture; and then performs a second-phase operation of animation processing based on the reconstructed data of the intermediate animation result corresponding to the livestreaming picture, to generate the livestreaming picture.

It should be understood that, in the virtual human livestreaming scenario, when graphics processing is physical simulation processing, the terminal device receives and decodes the bitstream, to obtain second difference data of the intermediate physical simulation result corresponding to the livestreaming picture of the current frame; then generates, based on the second difference data of the intermediate physical simulation result corresponding to the livestreaming picture of the current frame and the simulation data corresponding to the intermediate physical simulation result corresponding to the livestreaming picture of the current frame, reconstructed data of the intermediate physical simulation result corresponding to the livestreaming picture; and then performs a second-phase operation of physical simulation processing based on the reconstructed data of the intermediate physical simulation result corresponding to the livestreaming picture, to generate the livestreaming picture.

It should be understood that, in the virtual human livestreaming scenario, when graphics processing is rendering processing, the terminal device receives and decodes the bitstream, to obtain second difference data of the intermediate rendering result corresponding to the livestreaming picture of the current frame; then generates, based on the second difference data of the intermediate rendering result corresponding to the livestreaming picture of the current frame and the simulation data corresponding to the intermediate rendering result corresponding to the livestreaming picture of the current frame, reconstructed data of the intermediate rendering result corresponding to the livestreaming picture; and then performs a second-phase operation of rendering processing based on the reconstructed data of the intermediate rendering result corresponding to the livestreaming picture, to generate the livestreaming picture.

FIG. 12d is a diagram of an example of a decoding process in a virtual concert scenario.

Refer to FIG. 12d. For example, in the virtual concert scenario, when graphics processing is rendering processing, the terminal device receives and decodes the bitstream, to obtain second difference data of the intermediate rendering result corresponding to the concert picture of the current frame; then generates, based on the second difference data of the intermediate rendering result corresponding to the concert picture of the current frame and the simulation data corresponding to the intermediate rendering result corresponding to the concert picture of the current frame, reconstructed data of the intermediate rendering result corresponding to the concert picture; and then performs a second-phase operation of rendering processing based on the reconstructed data of the intermediate rendering result corresponding to the concert picture, to generate the concert picture.

It should be understood that, in the virtual concert scenario, when graphics processing is physical simulation processing, the terminal device receives and decodes the bitstream, to obtain second difference data of the intermediate physical simulation result corresponding to the concert picture of the current frame; then generates, based on the second difference data of the intermediate physical simulation result corresponding to the concert picture of the current frame and the simulation data corresponding to the intermediate physical simulation result corresponding to the concert picture of the current frame, reconstructed data of the intermediate physical simulation result corresponding to the concert picture; and then performs a second-phase operation of physical simulation processing based on the reconstructed data of the intermediate physical simulation result corresponding to the concert picture, to generate the concert picture.

It should be understood that, in the virtual concert scenario, when graphics processing is animation processing, the terminal device receives and decodes the bitstream, to obtain second difference data of the intermediate animation result corresponding to the concert picture of the current frame; then generates, based on the second difference data of the intermediate animation result corresponding to the concert picture of the current frame and the simulation data corresponding to the intermediate animation result corresponding to the concert picture of the current frame, reconstructed data of the intermediate animation result corresponding to the concert picture; and then performs a second-phase operation of animation processing based on the reconstructed data of the intermediate animation result corresponding to the concert picture, to generate the concert picture.

FIG. 12e is a diagram of an example of a decoding process in a VR or AR conference scenario.

Refer to FIG. 12e. For example, in the VR or AR conference scenario, when graphics processing is rendering processing, the terminal device receives and decodes the bitstream, to obtain second difference data of the intermediate rendering result corresponding to the conference picture of the current frame; then generates, based on the second difference data of the intermediate rendering result corresponding to the conference picture of the current frame and the simulation data corresponding to the intermediate rendering result corresponding to the conference picture of the current frame, reconstructed data of the intermediate rendering result corresponding to the conference picture; and then performs a second-phase operation of rendering processing based on the reconstructed data of the intermediate rendering result corresponding to the conference picture, to generate the conference picture.

It should be understood that, in the VR or AR conference scenario, when graphics processing is physical simulation processing, the terminal device receives and decodes the bitstream, to obtain second difference data of the intermediate physical simulation result corresponding to the conference picture of the current frame; then generates, based on the second difference data of the intermediate physical simulation result corresponding to the conference picture of the current frame and the simulation data corresponding to the intermediate physical simulation result corresponding to the conference picture of the current frame, reconstructed data of the intermediate physical simulation result corresponding to the conference picture; and then performs a second-phase operation of physical simulation processing based on the reconstructed data of the intermediate physical simulation result corresponding to the conference picture, to generate the conference picture.

It should be understood that, in the VR or AR conference scenario, when graphics processing is animation processing, the terminal device receives and decodes the bitstream, to obtain second difference data of the intermediate animation result corresponding to the conference picture of the current frame; then generates, based on the second difference data of the intermediate animation result corresponding to the conference picture of the current frame and the simulation data corresponding to the intermediate animation result corresponding to the conference picture of the current frame, reconstructed data of the intermediate animation result corresponding to the conference picture; and then performs a second-phase operation of animation processing based on the reconstructed data of the intermediate animation result corresponding to the conference picture, to generate the conference picture.

FIG. 13a is a diagram of an example of a device-cloud collaboration system framework. FIG. 13a shows a device-cloud collaboration system based on FIG. 1c.

Refer to FIG. 13a. For example, the encoding module in FIG. 1c may be a video encoder, and the video encoder may perform S1302 to S1304. In other words, S1302 to S1304 belong to an encoding process of the encoding module. The used video encoder may be an encoder that conforms to standards such as H.264, H.265, H.266, AVS2, AVS3, and AV1. This is not limited herein.

Refer to FIG. 13a. For example, the decoding module in FIG. 1c may include a video decoder. The video decoder may perform S1402 to S1404 below. In other words, S1402 to S1404 belong to a decoding process of the decoding module. The used video decoder may be a decoder that conforms to standards such as H.264, H.265, H.266, AVS2, AVS3, and AV1. This is not limited herein.

FIG. 13b is a diagram of an example of an encoding process. FIG. 13b describes a process of encoding original data of an intermediate result corresponding to a current frame based on FIG. 13a. In the embodiment in FIG. 13b, simulation data corresponding to the intermediate result corresponding to the current frame may be used as a reference frame of the original data of the intermediate result.

S1301: Perform a first-phase operation of graphics processing, to obtain the original data of the intermediate result corresponding to the current frame.

For example, for S1301, refer to the descriptions of S501 above. Details are not described herein again.

S1302: Perform, based on the simulation data corresponding to the intermediate result corresponding to the current frame as the reference frame, inter prediction on the original data of the intermediate result corresponding to the current frame, to obtain second predicted data.

For example, the simulation data corresponding to the intermediate result corresponding to the current frame may be added to a reference frame queue of the video encoder.

In a possible implementation, the simulation data corresponding to the intermediate result corresponding to the current frame may be selected from the reference frame queue as the reference frame of the current frame, and then inter prediction is performed, based on the simulation data corresponding to the intermediate result corresponding to the current frame, on the original data of the intermediate result corresponding to the current frame, to determine the second predicted data corresponding to the current frame. For example, the original data of the intermediate result corresponding to the current frame may be divided into a plurality of data blocks (which may also be referred to as coding units or coding blocks). For a first data block in the plurality of data blocks, inter prediction may be performed on the first data block based on the simulation data corresponding to the intermediate result corresponding to the current frame, to determine a prediction block corresponding to the first data block. In this way, a corresponding prediction block may be determined for each data block, and a plurality of prediction blocks corresponding to the plurality of data blocks included in the original data of the intermediate result corresponding to the current frame may form the second predicted data.

In a possible implementation, the simulation data corresponding to the intermediate result corresponding to the current frame and original data of an intermediate result corresponding to an encoded frame may be selected from the reference frame queue as a candidate reference frame of the current frame; then inter prediction is performed, based on the simulation data corresponding to the intermediate result corresponding to the current frame, on the original data of the intermediate result corresponding to the current frame, to determine predicted data 1; inter prediction is performed, based on the original data of the intermediate result corresponding to the encoded frame, on the original data of the intermediate result corresponding to the current frame, to determine predicted data 2; and then optimal predicted data is selected from the predicted data 1 and the predicted data 2 as the second predicted data corresponding to the current frame. For example, a first rate-distortion loss is determined based on the predicted data 1 and the original data of the intermediate result corresponding to the current frame, and a second rate-distortion loss is determined based on the predicted data 2 and reconstructed data of the intermediate result corresponding to the current frame.

For example, when the first rate-distortion loss is less than or equal to the second rate-distortion loss, the simulation data corresponding to the intermediate result corresponding to the current frame is selected as the reference frame of the current frame. Correspondingly, the predicted data 1 is determined as the second predicted data.

For example, when the first rate-distortion loss is greater than the second rate-distortion loss, the original data of the intermediate result corresponding to the encoded frame is selected as the reference frame of the current frame. Correspondingly, the predicted data 2 is determined as the second predicted data. The encoded frame may be a previous frame of the current frame.

Specifically, the original data of the intermediate result corresponding to the current frame may be divided into a plurality of data blocks (which may also be referred to as coding units or coding blocks). For a first data block in the plurality of data blocks, inter prediction may be performed on the first data block based on the simulation data corresponding to the intermediate result corresponding to the current frame, to determine a prediction block 1 corresponding to the first data block; and inter prediction is performed on the first data block based on the original data of the intermediate result corresponding to the encoded frame, to determine a prediction block 2 corresponding to the first data block. Then an optimal prediction block may be selected from the prediction block 1 and the prediction block 2 as the prediction block corresponding to the first data block. For example, a first rate-distortion loss is determined based on the prediction block 1 and data of the first data block, and a second rate-distortion loss is determined based on the prediction block 2 and the data of the first data block. When the first rate-distortion loss is less than or equal to the second rate-distortion loss, the simulation data corresponding to the intermediate result corresponding to the current frame is selected as the reference frame of the current frame. Correspondingly, the prediction block 1 is selected as a prediction block of the first data block. When the first rate-distortion loss is greater than the second rate-distortion loss, the original data of the intermediate result corresponding to the encoded frame is selected as the reference frame of the current frame. Correspondingly, the prediction block 2 is selected as a prediction block of the first data block.

It should be understood that the predicted data 1 may include a plurality of prediction blocks 1, and the predicted data 2 may include a plurality of prediction blocks 2.

S1303: Calculate a residual between the second predicted data and the original data of the intermediate result corresponding to the current frame, to obtain residual data of the intermediate result corresponding to the current frame.

The residual data of the intermediate result corresponding to the current frame includes a plurality of residual blocks, and the plurality of residual blocks one-to-one correspond to the plurality of data blocks of the original data of the intermediate result corresponding to the current frame.

For example, when the first rate-distortion loss is less than or equal to the second rate-distortion loss, a residual between the prediction block 1 and the data of the first data block may be calculated, to obtain a residual block corresponding to the first data block.

For example, when the first rate-distortion loss is greater than the second rate-distortion loss, a residual between the prediction block 2 and the data of the first data block may be calculated, to obtain a residual block corresponding to the first data block.

That is, for different data blocks in the original data of the intermediate result corresponding to the current frame, prediction blocks may be selected from different reference frames. In this way, a residual may be calculated each time based on data of each data block and a prediction block whose data is most similar to the data of the data block, so that a data amount of the residual block can be reduced, and a data amount of a bitstream obtained by encoding the residual data can be reduced. This further improves encoding efficiency.

S1304: Encode the residual data of the intermediate result corresponding to the current frame, to obtain a bitstream.

S1305: Send the bitstream.

For example, for S1303 and S1304, refer to the descriptions of S502 and S503 above. Details are not described herein again.

It should be noted that, when the second predicted data is obtained by performing inter prediction based on the simulation data corresponding to the intermediate result corresponding to the current frame, a first preset identifier may be written into the bitstream as a reference frame identifier. The first preset identifier represents that the reference frame is the simulation data corresponding to the intermediate result corresponding to the current frame.

When the second predicted data is obtained by performing inter prediction based on original data of an intermediate result corresponding to a reconstructed frame, a frame identifier of the reconstructed frame may be written into the bitstream as a reference frame identifier.

It should be understood that the first preset identifier is different from the frame identifier of the reconstructed frame.

FIG. 14 is a diagram of an example of a decoding process. FIG. 14 describes a process of performing decoding based on FIG. 13a for the original data of the intermediate result corresponding to the current frame. The decoding process described in the embodiment in FIG. 14 corresponds to the encoding process in the embodiment in FIG. 13b.

S1401: Receive the bitstream.

S1402: Parse the bitstream, to obtain the residual data of the intermediate result corresponding to the current frame and a reference frame identifier corresponding to the current frame, where the reference frame identifier is the first preset identifier.

For example, parsing in S1402 may be a parsing process of the video decoder. In a possible implementation, the parsing process of the video decoder may include: decapsulating, from the bitstream, encoded data of the residual data of the intermediate result corresponding to the current frame and the reference frame identifier; and then performing operations such as entropy decoding, dequantization, and reverse transformation on the encoded data of the residual data of the intermediate result corresponding to the current frame, to obtain the residual data of the intermediate result corresponding to the current frame.

S1403: Determine, based on the first preset identifier, the simulation data corresponding to the intermediate result corresponding to the current frame as the reference frame.

For example, in the embodiment in FIG. 14, the reference frame identifier is the first preset identifier. Therefore, the simulation data corresponding to the intermediate result corresponding to the current frame may be determined as the reference frame.

S1404: Perform inter prediction based on the simulation data corresponding to the intermediate result corresponding to the current frame as the reference frame, to obtain the second predicted data.

For example, the simulation data corresponding to the intermediate result corresponding to the current frame may be selected from simulation data obtained by a development device, and then the simulation data corresponding to the intermediate result corresponding to the current frame may be added to the reference frame queue of the video decoder. Then inter prediction is performed based on the simulation data corresponding to the intermediate result corresponding to the current frame, to determine the second predicted data corresponding to the current frame.

S1405: Perform reconstruction based on the second predicted data and the residual data, to obtain the reconstructed data of the intermediate result corresponding to the current frame.

For example, summation may be performed on the second predicted data and the residual data, to obtain the reconstructed data of the intermediate result corresponding to the current frame.

S1406: Perform a second-phase operation of graphics processing based on the reconstructed data of the intermediate result corresponding to the current frame, to generate digital content for displaying.

For example, for S1406, refer to the descriptions of S404 above. Details are not described herein again.

FIG. 15a is a diagram of an example of a device-cloud collaboration system framework. FIG. 15 shows a device-cloud collaboration system based on FIG. 1c.

Refer to FIG. 15a. For example, the encoding module in FIG. 1c may include a first prediction module and a video encoder. The first prediction module may perform S1502 below, and the video encoder may perform S1503 to S1505 below. In other words, S1502 to S1505 belong to an encoding process of the encoding module. The used video encoder may be an encoder that conforms to standards such as H.264, H.265, H.266, AVS2, AVS3, and AV1. This is not limited herein.

Refer to FIG. 15a. For example, the decoding module in FIG. 1c may include a second prediction module and a video decoder. The second prediction module may perform S1502 below, and the video decoder may perform S1503 to S1505 below. In other words, S1502 to S1505 belong to an encoding process of the encoding module.

The used video decoder may be a decoder that conforms to standards such as H.264, H.265, H.266, AVS2, AVS3, and AV1. This is not limited herein.

FIG. 15b is a diagram of an example of an encoding process. FIG. 15b describes a process of encoding original data of an intermediate result corresponding to a current frame based on FIG. 15a. In the embodiment in FIG. 15b, first predicted data of the intermediate result corresponding to the current frame obtained by predicting the intermediate result based on simulation data corresponding to the intermediate result corresponding to the current frame may be used as a reference frame of the original data of the intermediate result corresponding to the current frame, to encode the original data of the intermediate result corresponding to the current frame.

S1501: Perform a first-phase operation of graphics processing, to obtain the original data of the intermediate result corresponding to the current frame.

For example, for S1501, refer to the descriptions of S501 above. Details are not described herein again.

S1502: Predict the intermediate result based on the simulation data corresponding to the intermediate result corresponding to the current frame, to obtain the first predicted data of the intermediate result corresponding to the current frame.

For example, for S1502, refer to the descriptions of the embodiment 7b or the embodiment 9b. Details are not described herein again.

S1503: Perform, based on the first predicted data of the intermediate result corresponding to the current frame as the reference frame, inter prediction on the original data of the intermediate result corresponding to the current frame, to obtain second predicted data.

For example, the first predicted data of the intermediate result corresponding to the current frame may be added to a reference frame queue of the video encoder.

In a possible implementation, the first predicted data of the intermediate result corresponding to the current frame may be selected from the reference frame queue as the reference frame of the current frame, and then inter prediction is performed, based on the first predicted data of the intermediate result corresponding to the current frame, on the original data of the intermediate result corresponding to the current frame, to determine the second predicted data corresponding to the current frame.

In a possible implementation, the first predicted data of the intermediate result corresponding to the current frame and original data of an intermediate result corresponding to an encoded frame may be selected from the reference frame queue as the candidate reference frame of the current frame; then inter prediction is performed, based on the first predicted data of the intermediate result corresponding to the current frame, on the original data of the intermediate result corresponding to the current frame, to determine predicted data 3; inter prediction is performed, based on the original data of the intermediate result corresponding to the encoded frame, on the original data of the intermediate result corresponding to the current frame, to determine predicted data 2; and then optimal predicted data is selected from the predicted data 3 and the predicted data 2 as the second predicted data corresponding to the current frame. For example, a third rate-distortion loss is determined based on the predicted data 3 and the original data of the intermediate result corresponding to the current frame, and a second rate-distortion loss is determined based on the predicted data 2 and reconstructed data of the intermediate result corresponding to the current frame.

For example, when the third rate-distortion loss is less than or equal to the second rate-distortion loss, the first predicted data of the intermediate result corresponding to the current frame is selected as the reference frame of the current frame. Correspondingly, the predicted data 3 is determined as the second predicted data.

For example, when the first rate-distortion loss is greater than the second rate-distortion loss, the original data of the intermediate result corresponding to the encoded frame is selected as the reference frame of the current frame. Correspondingly, the predicted data 2 is determined as the second predicted data. The encoded frame may be a previous frame of the current frame.

Specifically, the original data of the intermediate result corresponding to the current frame may be divided into a plurality of data blocks (which may also be referred to as coding units or coding blocks). For a first data block in the plurality of data blocks, inter prediction may be performed on the first data block based on the first predicted data of the intermediate result corresponding to the current frame, to determine a prediction block 3 corresponding to the first data block; and inter prediction is performed on the first data block based on the original data of the intermediate result corresponding to the encoded frame, to determine a prediction block 2 corresponding to the first data block. Then an optimal prediction block may be selected from the prediction block 3 and the prediction block 2 as the prediction block corresponding to the first data block. For example, a third rate-distortion loss is determined based on the prediction block 3 and data of the first data block, and a second rate-distortion loss is determined based on the prediction block 2 and the data of the first data block. When the third rate-distortion loss is less than or equal to the second rate-distortion loss, the first predicted data of the intermediate result corresponding to the current frame is selected as the reference frame of the current frame. Correspondingly, the prediction block 3 is selected as a prediction block of the first data block. When the third rate-distortion loss is greater than the second rate-distortion loss, the original data of the intermediate result corresponding to the encoded frame is selected as the reference frame of the current frame. Correspondingly, the prediction block 2 is selected as a prediction block of the first data block.

It should be understood that the predicted data 3 may include a plurality of prediction blocks 3, and the predicted data 2 may include a plurality of prediction blocks 2.

S1504: Calculate a residual between the second predicted data and the original data of the intermediate result corresponding to the current frame, to obtain residual data of the intermediate result corresponding to the current frame.

The residual data includes a plurality of residual blocks, and the plurality of residual blocks one-to-one correspond to the plurality of data blocks of the original data of the intermediate result corresponding to the current frame.

For example, when the third rate-distortion loss is less than or equal to the second rate-distortion loss, a residual between the prediction block 3 and the data of the first data block may be calculated, to obtain a residual block corresponding to the first data block.

For example, when the third rate-distortion loss is greater than the second rate-distortion loss, a residual between the prediction block 2 and the data of the first data block may be calculated, to obtain a residual block corresponding to the first data block.

That is, for different data blocks in the original data of the intermediate result corresponding to the current frame, prediction blocks may be selected from different reference frames. In this way, a residual may be calculated each time based on data of each data block and a prediction block whose data is most similar to the data of the data block, so that a data amount of the residual block can be reduced, and a data amount of a bitstream obtained by encoding the residual data can be reduced. This further improves encoding efficiency.

S1505: Encode the residual data of the intermediate result corresponding to the current frame, to obtain a bitstream.

S1506: Send the bitstream.

For example, for S1503 to S1505, refer to the descriptions of S1302 and S1303 above. Details are not described herein again.

It should be noted that, when the second predicted data is obtained by performing prediction based on the first predicted data of the intermediate result corresponding to the current frame, a second preset identifier may be written into the bitstream as a reference frame identifier. The second preset identifier represents that the reference frame is the first predicted data of the intermediate result corresponding to the current frame.

When the second predicted data is obtained by performing prediction based on original data of an intermediate result corresponding to a reconstructed frame, a frame identifier of the reconstructed frame may be written into the bitstream as a reference frame identifier.

It should be understood that the second preset identifier is different from the frame identifier of the reconstructed frame, and the second preset identifier is different from a first preset identifier.

FIG. 16 is a diagram of an example of a decoding process. FIG. 16 describes a process of performing decoding based on FIG. 15a for the original data of the intermediate result corresponding to the current frame. The decoding process described in the embodiment in FIG. 16 corresponds to the encoding process in the embodiment in FIG. 15b.

S1601: Receive the bitstream.

S1602: Parse the bitstream, to obtain the residual data of the intermediate result corresponding to the current frame and the reference frame identifier corresponding to the current frame, where the reference frame identifier is the second preset identifier.

For example, for S1602, refer to the descriptions of S1402 above. Details are not described herein again.

S1603: Predict the intermediate result based on the simulation data corresponding to the intermediate result corresponding to the current frame, to obtain the first predicted data of the intermediate result corresponding to the current frame.

For example, for S1603, refer to the descriptions of the embodiment 7b or the embodiment 9b. Details are not described herein again.

S1604: Determine, based on the second preset identifier, the first predicted data of the intermediate result corresponding to the current frame as the reference frame.

For example, in the embodiment in FIG. 16, the reference frame identifier is the second preset identifier. Therefore, the first predicted data of the intermediate result corresponding to the current frame may be determined as the reference frame.

S1605: Perform inter prediction based on the first predicted data of the intermediate result corresponding to the current frame as the reference frame, to obtain the second predicted data.

S1606: Perform reconstruction based on the second predicted data and the residual data, to obtain the reconstructed data of the intermediate result corresponding to the current frame.

S1607: Perform graphics processing based on the reconstructed data of the intermediate result corresponding to the current frame, to generate digital content for displaying.

For example, for S1605 to S1607, refer to the descriptions of the foregoing embodiment. Details are not described herein again.

For example, a possible manner of determining the first difference data based on the simulation data corresponding to the intermediate result corresponding to the current frame and the original data of the intermediate result corresponding to the current frame may be extracting first sub-data from the original data of the intermediate result corresponding to the current frame, to obtain the first difference data. The first sub-data is data that is in the original data of the intermediate result corresponding to the current frame and whose value is different from a value of data at a corresponding location in the simulation data corresponding to the intermediate result corresponding to the current frame. The first difference data is the first sub-data. Then the first sub-data is encoded, to obtain the bitstream.

For example, when graphics processing is rendering processing, the original data of the intermediate result corresponding to the current frame and the simulation data corresponding to the intermediate result corresponding to the current frame are pictures. In this case, pixel values in the original data of the intermediate result corresponding to the current frame may be compared, pixel by pixel, with pixel values in the simulation data corresponding to the intermediate result corresponding to the current frame. For one pixel, when a pixel value of the pixel in the original data of the intermediate result corresponding to the current frame is different from a pixel value of the pixel in the simulation data corresponding to the intermediate result corresponding to the current frame, the pixel value of the pixel is extracted as first sub-data.

For example, when graphics processing is physical simulation processing, if physical simulation is rigid body simulation, state information in the original data of the intermediate result corresponding to the current frame may be compared, rigid body by rigid body, with state information in the simulation data corresponding to the intermediate result corresponding to the current frame. For one rigid body, when state information of the rigid body in the original data of the intermediate result corresponding to the current frame is different from state information of the rigid body in the simulation data corresponding to the intermediate result corresponding to the current frame, the state information of the rigid body is extracted as first sub-data. For example, a location of state information of a same rigid body in the original data of the intermediate result corresponding to the current frame is the same as that in the simulation data corresponding to the intermediate result corresponding to the current frame.

If physical simulation is elastic body simulation, state information in the original data of the intermediate result corresponding to the current frame may be compared, spring by spring, with state information in the simulation data corresponding to the intermediate result corresponding to the current frame. For one spring, when state information of the spring in the original data of the intermediate result corresponding to the current frame is different from state information of the spring in the simulation data corresponding to the intermediate result corresponding to the current frame, the state information of the spring is extracted as first sub-data. For example, a location of state information of a same elastic body in the original data of the intermediate result corresponding to the current frame is the same as that in the simulation data corresponding to the intermediate result corresponding to the current frame.

If physical simulation processing is cloth simulation processing or fluid simulation processing, state information in the original data of the intermediate result corresponding to the current frame may be compared, particle by particle, with state information in the simulation data corresponding to the intermediate result corresponding to the current frame. For one particle, when state information of the particle in the original data of the intermediate result corresponding to the current frame is different from state information of the particle in the simulation data corresponding to the intermediate result corresponding to the current frame, the state information of the particle is extracted as first sub-data. For example, a location of state information of a same particle in the original data of the intermediate result corresponding to the current frame is the same as that in the simulation data corresponding to the intermediate result corresponding to the current frame.

For example, when graphics processing is animation processing, state information in the original data of the intermediate result corresponding to the current frame may be compared, skeleton by skeleton, with state information in the simulation data corresponding to the intermediate result corresponding to the current frame. For one skeleton, when a skeleton location and/or a skeleton direction of the skeleton in the original data of the intermediate result corresponding to the current frame are/is different from a skeleton location and/or a skeleton direction of the skeleton in the simulation data corresponding to the intermediate result corresponding to the current frame, the skeleton location and/or the skeleton direction of the skeleton are/is extracted as first sub-data. For example, locations of a skeleton location and a skeleton direction of a same skeleton in the original data of the intermediate result corresponding to the current frame are the same as those in the simulation data corresponding to the intermediate result corresponding to the current frame.

For example, location description information of the first sub-data may be written into the bitstream. The location description information is used to determine a location of the first sub-data in the original data of the intermediate result corresponding to the current frame.

For example, it is assumed that the original data of the intermediate result corresponding to the current frame is [A, B, C, D, E], and the simulation data corresponding to the intermediate result corresponding to the current frame is [A, B, C, D, F]. In this case, the first sub-data is [E].

A data amount of the bitstream obtained by encoding the first sub-data is smaller than that obtained by encoding the original data of the intermediate result corresponding to the current frame in the conventional technology. This can improve encoding efficiency.

In a possible implementation, the location description information may be information about the location of the first sub-data in the original data of the intermediate result corresponding to the current frame. For example, in the foregoing example, location description information of the first sub-data [E] is "5", and "5" indicates a $5^{th}$ location in the original data of the intermediate result corresponding to the current frame.

For example, when graphics processing is rendering processing, the location description information may be pixel coordinates or an index of the pixel coordinates.

For example, when graphics processing is physical simulation processing, if physical simulation processing is rigid body simulation processing, the location description information may be a rigid body identifier. If physical simulation processing is elastic body simulation processing, the location description information may be a spring identifier (for example, a spring index or a spring number). If physical simulation processing is cloth simulation processing or fluid simulation processing, the location description information may be a particle identifier (for example, a particle number or a particle index).

For example, when graphics processing is animation processing, the location description information may be a skeleton identifier.

In a possible implementation, the location description information may be information about a location of other data (data other than the first sub-data in the original data of the intermediate result corresponding to the current frame) in the original data of the intermediate result corresponding to the current frame. For example, in the original data of the intermediate result corresponding to the current frame, a target location of data whose value is different from a value of data at a corresponding location in the simulation data corresponding to the intermediate result corresponding to the current frame may be determined; and data at a location other than the target location in the original data of the intermediate result corresponding to the current frame is replaced with a placeholder. For example, in the foregoing example, the original data of the intermediate result corresponding to the current frame is [A, B, C, D, E], and the simulation data corresponding to the intermediate result corresponding to the current frame is [A, B, C, D, F]. If "0" is a placeholder, [0, 0, 0, 0, E] is obtained through placeholder replacement, where [E] is the first sub-data, and [0, 0, 0, 0] is the location description information. In this case, both the first sub-data and the location description information may be encoded.

In this way, the terminal device may obtain the location description information from the bitstream, and then may extract, based on the location description information, third sub-data from the simulation data corresponding to the intermediate result corresponding to the current frame; and splice the third sub-data and the second difference data, to obtain the reconstructed data of the intermediate result corresponding to the current frame. A location of the third sub-data in the simulation data corresponding to the intermediate result corresponding to the current frame is different from the location of the first sub-data in the original data of the intermediate result corresponding to the current frame.

For example, it is assumed that the original data of the intermediate result corresponding to the current frame is [A, B, C, D, E], the simulation data corresponding to the intermediate result corresponding to the current frame is [A, B, C, D, F], and a location, corresponding to the first sub-data, in the simulation data corresponding to the intermediate result corresponding to the current frame is a $5^{th}$ location. In this case, the extracted third sub-data is [A, B, C, D].

For example, a manner of determining the first difference data based on the simulation data corresponding to the intermediate result corresponding to the current frame and the original data of the intermediate result corresponding to the current frame may be predicting the intermediate result based on the simulation data corresponding to the intermediate result corresponding to the current frame, to obtain the predicted data, and extracting the second sub-data from the original data of the intermediate result corresponding to the current frame, to obtain the first difference data. The second sub-data is data that is in the original data of the intermediate result corresponding to the current frame and whose value is different from a value of data at a corresponding location in the predicted data. For details, refer to the descriptions of extracting the first sub-data. Details are not described herein again. In addition, location description information of the second sub-data may be written into the bitstream. The location description information is used to determine a location of the second sub-data in the original data of the intermediate result corresponding to the current frame. For details, refer to the foregoing descriptions. Details are not described herein again. Correspondingly, in the decoding process, the terminal device may extract fourth sub-data from the predicted data based on the location description information obtained from the bitstream, and splice the fourth sub-data and the second difference data, to obtain the reconstructed data of the intermediate result corresponding to the current frame. A location of the fourth sub-data in the predicted data is different from the location of the second sub-data in the original data of the intermediate result corresponding to the current frame.

In an example, FIG. 17 is a block diagram of an apparatus 1700 according to an embodiment of this application. The apparatus 1700 may include a processor 1701 and a transceiver/transceiver pin 1702, and optionally, further includes components such as a memory 1703, a display, a speaker, and a microphone.

All the components of the apparatus 1700 are coupled together through a bus 1704. In addition to a data bus, the bus 1704 further includes a power bus, a control bus, and a status signal bus. However, for clarity of description, various buses in the figure are referred to as the bus 1704.

Optionally, the memory 1703 may be configured to store instructions in the foregoing method embodiments. The processor 1701 may be configured to: execute the instructions in the memory 1703, control a receive pin to receive a signal, and control a transmit pin to send a signal.

The apparatus 1700 may be the electronic device or a chip of the electronic device in the foregoing method embodiments.

For example, the electronic device may be a server, or may be a terminal device.

All related content of the steps in the foregoing method embodiments may be cited in function descriptions of corresponding functional modules. Details are not described herein again.

An embodiment further provides a computer-readable storage medium. The computer-readable storage medium stores computer instructions. When the computer instructions are run on an electronic device, the electronic device is enabled to perform the foregoing related method steps, to implement the encoding and decoding methods in the foregoing embodiments.

An embodiment further provides a computer program product. When the computer program product runs on a computer, the computer is enabled to perform the foregoing related steps, to implement the encoding and decoding methods in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the chip to perform the encoding and decoding methods in the foregoing method embodiments.

The electronic device, the computer-readable storage medium, the computer program product, or the chip provided in embodiments is configured to perform the corresponding method provided above. Therefore, for beneficial effect that can be achieved, refer to the beneficial effect of the corresponding method provided above. Details are not described herein again.

Based on the descriptions of the implementations, a person skilled in the art may understand that for the purpose of convenient and brief description, division into the functional modules is merely used as an example for description. In actual application, the functions may be allocated to different functional modules for completion based on a requirement. In other words, an inner structure of an apparatus is divided into different functional modules, to implement all or some of the functions described above.

In the several embodiments provided in this application, it should be understood that the disclosed apparatus and method may be implemented in another manner. For example, the described apparatus embodiment is merely an example. For example, division into the modules or units is merely logical function division. There may be another division manner in actual implementation. For example, a plurality of units or components may be combined or may be integrated into another apparatus, or some features may be ignored or not be performed. In addition, the displayed or discussed mutual couplings or direct couplings or communication connections may be implemented through some interfaces. The indirect couplings or communication connections between the apparatuses or units may be implemented in an electric form, a mechanical form, or another form.

The units described as separate parts may or may not be physically separate, and parts displayed as units may be one or more physical units, may be located in one place, or may be distributed in a plurality of different places. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

Any content of embodiments of this application and any content of a same embodiment may be freely combined. Any combination of the foregoing content shall fall within the scope of this application.

When the integrated unit is implemented in the form of the software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the method described in embodiments of this application. The foregoing storage medium includes any medium that can store program code such as a USB flash drive, a removable hard disk, a read-only memory (read-only memory, ROM), a random access memory (random access memory, RAM), a magnetic disk, or an optical disc.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make many modifications without departing from the purposes of this application and the protection scope of the claims, and all the modifications shall fall within protection of this application.

Methods or algorithm steps described in combination with the content disclosed in embodiments of this application may be implemented by hardware, or may be implemented by a processor by executing software instructions. The software instructions may include a corresponding software module. The software module may be stored in a random access memory (Random Access Memory, RAM), a flash memory, a read-only memory (Read Only Memory, ROM), an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to the processor, so that the processor can read information from the storage medium and write information into the storage medium. Certainly, the storage medium may be a component of the processor. The processor and the storage medium may be located in an ASIC.

A person skilled in the art should be aware that in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer-readable storage medium and a communication medium, where the communication medium includes any medium that enables a computer program to be transmitted from one place to another place. The storage medium may be any available medium accessible to a general-purpose or a dedicated computer.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make many modifications without departing from the purposes of this application and the protection scope of the claims, and all the modifications shall fall within protection of this application.

## Claims

1. A device-cloud collaboration system, wherein the device-cloud collaboration system comprises a server and a terminal device, wherein

   the server is configured to: perform a first-phase operation of graphics processing, to generate original data of an intermediate result of graphics processing of a current frame; determine first difference data of the intermediate result based on the original data of the intermediate result and simulation data corresponding to the intermediate result; encode the first difference data of the intermediate result, to obtain a bitstream; and send the bitstream to the terminal device; and
   the terminal device is configured to: receive the bitstream; decode the bitstream, to obtain second difference data of the intermediate result corresponding to the current frame; generate reconstructed data of the intermediate result based on the second difference data of the intermediate result and the simulation data corresponding to the intermediate result; and perform a second-phase operation of graphics processing based on the reconstructed data of the intermediate result, to generate digital content for displaying.

2. The system according to claim 1, wherein the simulation data corresponding to the intermediate result is generated by a third-party device;

   the server is further configured to receive the simulation data corresponding to the intermediate result; and
   the terminal device is further configured to receive the simulation data corresponding to the intermediate result.

3. The system according to claim 1, wherein the simulation data corresponding to the intermediate result is generated by the server;

   the server is further configured to send the simulation data corresponding to the intermediate result; and
   the terminal device is further configured to receive the simulation data corresponding to the intermediate result.

4. The system according to any one of claims 1 to 3, wherein
   the simulation data corresponding to the intermediate result is data generated by simulating graphics processing in advance.

5. The system according to any one of claims 1 to 4, wherein
   the device-cloud collaboration system is applied to any one of the following scenarios: a cloud game, a VR or AR conference, virtual human livestreaming, and a virtual concert.

6. The system according to any one of claims 1 to 5, wherein
   the server is specifically configured to calculate a residual between the simulation data corresponding to the intermediate result and the original data of the intermediate result, to obtain the first difference data of the intermediate result.

7. The system according to any one of claims 1 to 5, wherein
   the server is specifically configured to: predict the intermediate result based on the simulation data corresponding to the intermediate result, to obtain predicted data of the intermediate result; and calculate a residual between the original data of the intermediate result and the predicted data of the intermediate result, to obtain the first difference data of the intermediate result.

8. The system according to claim 6, wherein

the terminal device is specifically configured to perform summation on the second difference data of the intermediate result and the simulation data corresponding to the intermediate result, to obtain the reconstructed data of the intermediate result.

**9.** The system according to claim 7, wherein
the terminal device is specifically configured to: predict the intermediate result based on the simulation data corresponding to the intermediate result, to obtain the predicted data of the intermediate result; and perform summation on the predicted data of the intermediate result and the second difference data of the intermediate result, to obtain the reconstructed data of the intermediate result.

**10.** The system according to any one of claims 1 to 9, wherein graphics processing comprises any one of the following: rendering processing, physical simulation processing, or animation processing.

**11.** An encoding method applied to a server, wherein the method comprises:

performing a first-phase operation of graphics processing, to generate original data of an intermediate result of graphics processing of a current frame;
determining first difference data of the intermediate result based on the original data of the intermediate result and simulation data corresponding to the intermediate result;
encoding the first difference data of the intermediate result, to obtain a bitstream; and
sending the bitstream.

**12.** The method according to claim 11, wherein determining the first difference data of the intermediate result based on the original data of the intermediate result and the simulation data corresponding to the intermediate result comprises:
calculating a residual between the original data of the intermediate result and the simulation data corresponding to the intermediate result, to obtain the first difference data of the intermediate result.

**13.** The method according to claim 11, wherein determining the first difference data of the intermediate result based on the original data of the intermediate result and the simulation data corresponding to the intermediate result comprises:

predicting the intermediate result based on the simulation data corresponding to the intermediate result, to obtain predicted data of the intermediate result; and
calculating a residual between the original data of the intermediate result and the predicted data of the intermediate result, to obtain the first difference data of the intermediate result.

**14.** The method according to claim 11, wherein determining the first difference data of the intermediate result based on the original data of the intermediate result and the simulation data corresponding to the intermediate result comprises:

extracting first sub-data from the original data of the intermediate result, to obtain the first difference data of the intermediate result, wherein the first sub-data is data that is in the original data of the intermediate result and whose value is different from a value of data at a corresponding location in the simulation data corresponding to the intermediate result; and
the method further comprises:
writing location description information of the first sub-data into the bitstream, wherein the location description information is used to determine a location of the first sub-data in the original data of the intermediate result.

**15.** The method according to claim 11, wherein determining the first difference data of the intermediate result based on the original data of the intermediate result and the simulation data corresponding to the intermediate result comprises:

predicting the intermediate result based on the simulation data corresponding to the intermediate result, to obtain predicted data of the intermediate result; and
extracting second sub-data from the original data of the intermediate result, to obtain the first difference data of the intermediate result, wherein the second sub-data is data that is in the original data of the intermediate result and whose value is different from a value of data at a corresponding location in the predicted data of the intermediate result; and
the method further comprises:
writing location description information of the second sub-data into the bitstream, wherein the location description information is used to determine a location of the second sub-data in the original data of the intermediate result.

16. The method according to claim 13 or 15, wherein the simulation data corresponding to the intermediate result is a plurality of frames of simulation data; and predicting the intermediate result based on the simulation data corresponding to the intermediate result, to obtain the predicted data of the intermediate result comprises:

performing interpolation based on the plurality of frames of simulation data corresponding to the intermediate result, to obtain interpolated data; and
selecting the predicted data of the intermediate result from the interpolated data.

17. The method according to claim 13 or 15, wherein graphics processing is physical simulation processing, the simulation data corresponding to the intermediate result is initial state information of a physically simulated object, and the original data of the intermediate result is current state information of the physically simulated object; and predicting the intermediate result based on the simulation data corresponding to the intermediate result, to obtain the predicted data of the intermediate result comprises:

performing state prediction based on the initial state information of the physically simulated object, to generate current predicted state information of the physically simulated object; and
determining the predicted data of the intermediate result based on the current predicted state information of the physically simulated object.

18. The method according to any one of claims 11 to 17, wherein the method further comprises:
writing identification information of the simulation data corresponding to the intermediate result into the bitstream.

19. The method according to any one of claims 11 to 18, wherein graphics processing comprises any one of the following: rendering processing, physical simulation processing, or animation processing.

20. A decoding method applied to a terminal device, wherein the method comprises:

receiving a bitstream, wherein the bitstream comprises encoded data of first difference data of an intermediate result corresponding to a current frame, the first difference data indicates a difference between original data of the intermediate result and simulation data corresponding to the intermediate result, and the original data of the intermediate result is generated by a server by performing a first-phase operation of graphics processing;
decoding the bitstream, to obtain second difference data of the intermediate result corresponding to the current frame;
generating reconstructed data of the intermediate result based on the second difference data of the intermediate result and the simulation data corresponding to the intermediate result; and
performing a second-phase operation of graphics processing based on the reconstructed data of the intermediate result, to generate digital content for displaying.

21. The method according to claim 20, wherein generating the reconstructed data of the intermediate result based on the second difference data of the intermediate result and the simulation data corresponding to the intermediate result comprises:
performing summation on the second difference data of the intermediate result and the simulation data corresponding to the intermediate result, to obtain the reconstructed data of the intermediate result.

22. The method according to claim 20, wherein generating the reconstructed data of the intermediate result based on the second difference data of the intermediate result and the simulation data corresponding to the intermediate result comprises:

extracting, based on location description information obtained from the bitstream, third sub-data from the simulation data corresponding to the intermediate result; and
splicing the third sub-data and the second difference data of the intermediate result, to obtain the reconstructed data of the intermediate result.

23. The method according to claim 20, wherein generating the reconstructed data of the intermediate result based on the second difference data of the intermediate result and the simulation data corresponding to the intermediate result comprises:

predicting the intermediate result based on the simulation data corresponding to the intermediate result, to obtain predicted data of the intermediate result; and
determining the reconstructed data of the intermediate result based on the predicted data of the intermediate result and the second difference data of the intermediate result.

**24.** The method according to claim 23, wherein the simulation data corresponding to the intermediate result is a plurality of frames of simulation data; and predicting the intermediate result based on the simulation data corresponding to the intermediate result, to obtain the predicted data of the intermediate result comprises:

performing interpolation based on the plurality of frames of simulation data corresponding to the intermediate result, to obtain interpolated data; and
selecting the predicted data of the intermediate result from the interpolated data.

**25.** The method according to claim 23, wherein graphics processing is physical simulation processing, the simulation data corresponding to the intermediate result is initial state information of a physically simulated object, and the reconstructed data of the intermediate result is current state information of the physically simulated object; and predicting the intermediate result based on the simulation data corresponding to the intermediate result, to obtain the predicted data of the intermediate result comprises:

performing state prediction based on the initial state information of the physically simulated object, to generate current predicted state information of the physically simulated object; and
determining the predicted data of the intermediate result based on the current predicted state information of the physically simulated object.

**26.** The method according to claim 23, wherein determining the reconstructed data of the intermediate result based on the predicted data of the intermediate result and the second difference data of the intermediate result comprises:
performing summation on the predicted data of the intermediate result and the second difference data of the intermediate result, to obtain the reconstructed data of the intermediate result.

**27.** The method according to claim 23, wherein determining the reconstructed data of the intermediate result based on the predicted data of the intermediate result and the second difference data of the intermediate result comprises:

extracting fourth sub-data from the predicted data of the intermediate result based on location description information obtained from the bitstream; and
splicing the fourth sub-data and the second difference data of the intermediate result, to obtain the reconstructed data of the intermediate result.

**28.** The method according to any one of claims 20 to 27, wherein the method further comprises:
determining, based on identification information obtained from the bitstream, the simulation data corresponding to the intermediate result.

**29.** The method according to any one of claims 20 to 28, wherein graphics processing comprises any one of the following: rendering processing, physical simulation processing, or animation processing.

**30.** A device-cloud collaboration system, wherein the device-cloud collaboration system comprises a server and a terminal device, wherein

the server is configured to: perform a first-phase operation of graphics processing, to generate original data of an intermediate result of graphics processing of a current frame; determine a reference frame of the current frame based on simulation data corresponding to the intermediate result; determine residual data of the intermediate result based on the reference frame and the original data of the intermediate result; encode the residual data of the intermediate result, to obtain a bitstream; and send the bitstream to the terminal device; and
the terminal device is configured to: receive the bitstream; parse the bitstream, to obtain the residual data of the intermediate result corresponding to the current frame; determine the reference frame of the current frame based on the simulation data corresponding to the intermediate result; perform reconstruction based on the reference frame and the residual data of the intermediate result, to obtain reconstructed data of the intermediate result; and perform a second-phase operation of graphics processing based on the reconstructed data of the intermediate result, to generate digital content for displaying.

**31.** The system according to claim 30, wherein the simulation data corresponding to the intermediate result is generated by a third-party device;

the server is further configured to receive the simulation data corresponding to the intermediate result; and
the terminal device is further configured to receive the simulation data corresponding to the intermediate result.

**32.** The system according to claim 30, wherein the simulation data corresponding to the intermediate result is generated by the server;

the server is further configured to send the simulation data corresponding to the intermediate result; and
the terminal device is further configured to receive the simulation data corresponding to the intermediate result.

**33.** The system according to any one of claims 30 to 32, wherein
the simulation data corresponding to the intermediate result is data generated by simulating graphics processing in advance.

**34.** The system according to any one of claims 30 to 33, wherein
the device-cloud collaboration system is applied to any one of the following scenarios: a cloud game, a VR or AR conference, virtual human livestreaming, and a virtual concert.

**35.** An encoding method applied to a server, wherein the method comprises:

performing a first-phase operation of graphics processing, to generate original data of an intermediate result of graphics processing of a current frame;
determining a reference frame of the current frame based on simulation data corresponding to the intermediate result;
determining residual data of the intermediate result based on the reference frame and original data of the intermediate result;
encoding the residual data of the intermediate result, to obtain a bitstream; and
sending the bitstream.

**36.** The method according to claim 35, wherein determining the reference frame of the current frame based on simulation data corresponding to the intermediate result comprises:
using the simulation data corresponding to the intermediate result as the reference frame of the current frame.

**37.** The method according to claim 35, wherein determining the reference frame of the current frame based on simulation data corresponding to the intermediate result comprises:

predicting the intermediate result based on the simulation data corresponding to the intermediate result, to obtain predicted data of the intermediate result; and
using the predicted data of the intermediate result as the reference frame of the current frame.

**38.** The method according to claim 36, wherein determining the reference frame of the current frame based on simulation data corresponding to the intermediate result comprises:

determining a first rate-distortion loss corresponding to a case in which when the simulation data corresponding to the intermediate result is used as the reference frame, inter prediction is performed on the original data of the intermediate result corresponding to the current frame;
determining a second rate-distortion loss corresponding to a case in which when original data of an intermediate result corresponding to an encoded frame is used as the reference frame, inter prediction is performed on the original data of the intermediate result corresponding to the current frame; and
when the first rate-distortion loss is less than or equal to the second rate-distortion loss, using the simulation data corresponding to the intermediate result as the reference frame of the current frame.

**39.** The method according to claim 37, wherein determining the reference frame of the current frame based on simulation data corresponding to the intermediate result comprises:

determining a third rate-distortion loss corresponding to a case in which when the predicted data of the intermediate result is used as the reference frame, inter prediction is performed on the original data of the intermediate result corresponding to the current frame;
determining a second rate-distortion loss corresponding to a case in which when original data of an intermediate result corresponding to an encoded frame is used as the reference frame, inter prediction is performed on the original data of the intermediate result corresponding to the current frame; and
when the third rate-distortion loss is less than or equal to the second rate-distortion loss, using the predicted data of the intermediate result as the reference frame of the current frame.

**40.** The method according to any one of claims 35 to 39, wherein graphics processing comprises any one of the following: rendering processing, physical simulation processing, or animation processing.

**41.** A decoding method applied to a terminal device, wherein the method comprises:

receiving a bitstream, wherein the bitstream comprises encoded data of residual data of an intermediate result corresponding to a current frame, and the residual data of the intermediate result indicates a difference between original data of the intermediate result and a reference frame corresponding to the current frame;
parsing the bitstream, to obtain the residual data of the intermediate result corresponding to the current frame;
determining the reference frame of the current frame based on simulation data corresponding to the intermediate result;
performing reconstruction based on the reference frame and the residual data of the intermediate result, to obtain reconstructed data of the intermediate result; and
performing a second-phase operation of graphics processing based on the reconstructed data of the intermediate result, to generate digital content for displaying, wherein the second-phase operation is a part of a procedure of graphics processing.

**42.** The method according to claim 41, wherein determining the reference frame of the current frame based on the simulation data corresponding to the intermediate result corresponding to the current frame comprises:
when a reference frame identifier obtained by parsing the bitstream is a first preset identifier, using the simulation data corresponding to the intermediate result as the reference frame.

**43.** The method according to claim 41, wherein determining the reference frame of the current frame based on the simulation data corresponding to the intermediate result corresponding to the current frame comprises:

when a reference frame identifier obtained by parsing the bitstream is a second preset identifier, predicting the intermediate result based on the simulation data corresponding to the intermediate result, to obtain predicted data of the intermediate result; and
using the predicted data of the intermediate result as the reference frame.

**44.** The method according to any one of claims 41 to 43, wherein graphics processing comprises any one of the following: rendering processing, physical simulation processing, or animation processing.

**45.** A server, comprising:

a memory and a processor, wherein the memory is coupled to the processor; and
the memory stores program instructions, and when the program instructions are executed by the processor, the server is enabled to perform the encoding method according to any one of claims 11 to 19 or perform the encoding method according to any one of claims 35 to 40.

**46.** A terminal device, comprising:

a memory and a processor, wherein the memory is coupled to the processor; and
the memory stores program instructions, and when the program instructions are executed by the processor, the terminal device is enabled to perform the decoding method according to any one of claims 20 to 29 or perform the decoding method according to any one of claims 41 to 44.

**47.** A computer-readable storage medium, wherein the computer-readable storage medium stores a computer program, and when the computer program is run on a computer or a processor, the computer or the processor is enabled to perform the method according to any one of claims 11 to 29 or perform the method according to any one of claims 35 to 44.

**48.** A computer program product, wherein the computer program product comprises compute instructions, and when the compute instructions are executed by a computer or a processor, steps of the method according to any one of claims 11 to 29 or the method according to any one of claims 35 to 44 are performed.

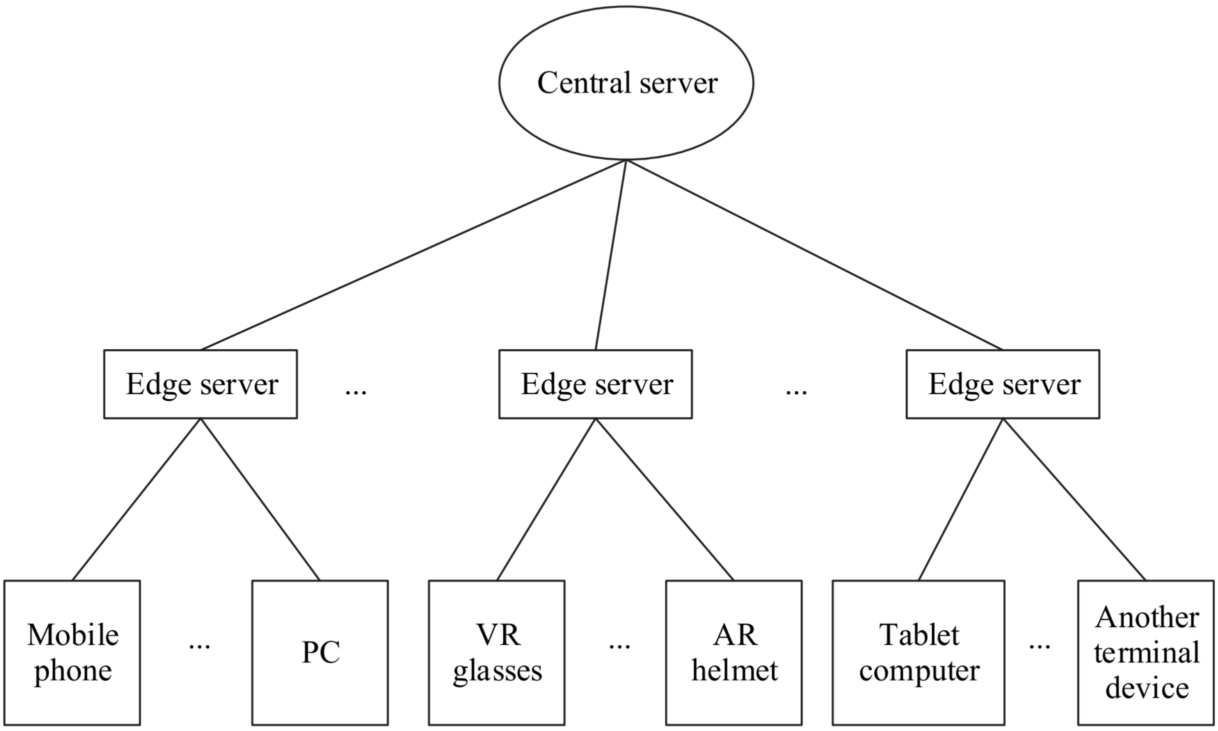
Central server
Edge server
...
Edge server
...
Edge server
Mobile phone
...
PC
VR glasses
...
AR helmet
Tablet computer
...
Another terminal device

FIG. 1a

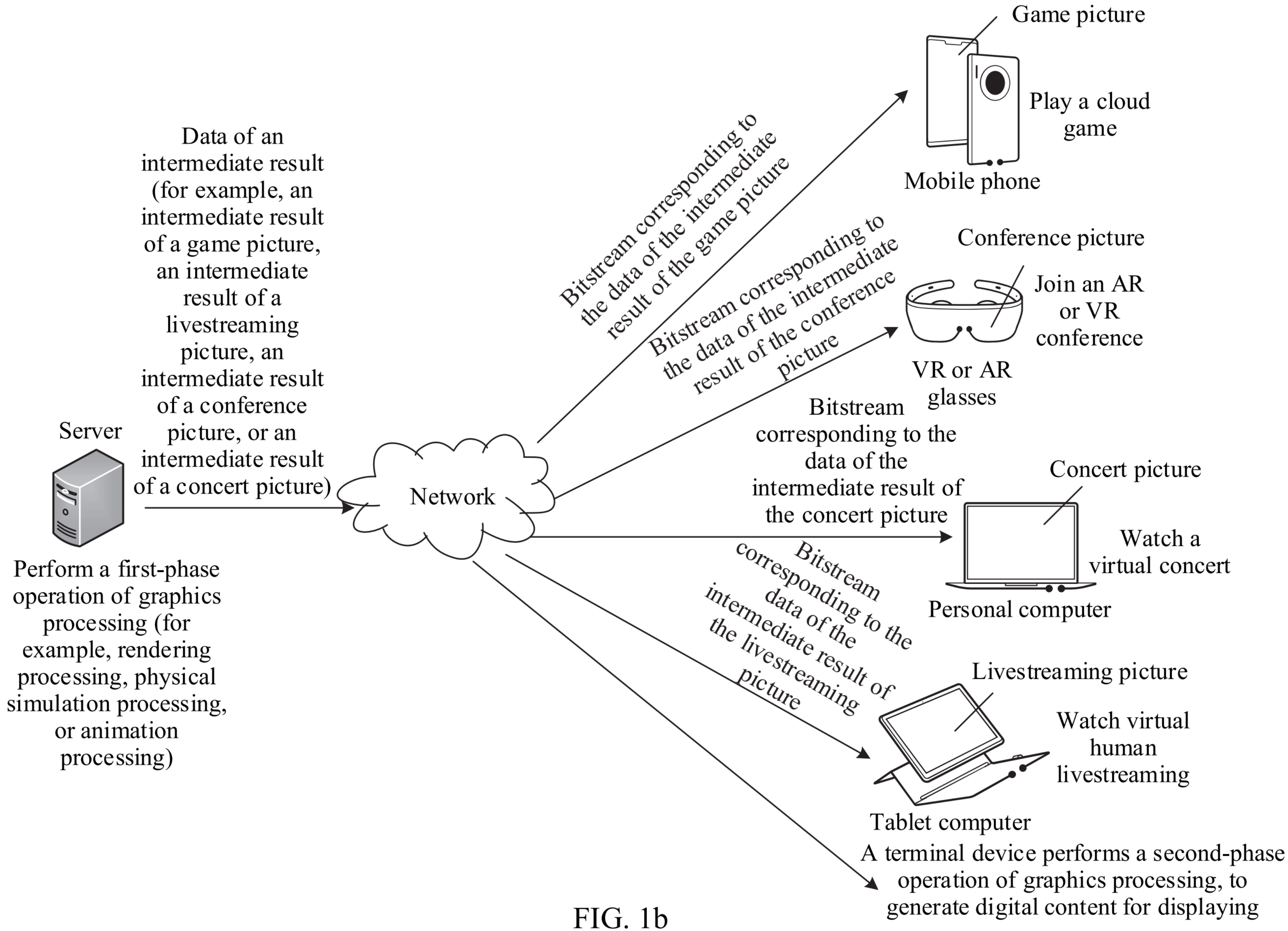
Server
Perform a first-phase operation of graphics processing (for example, rendering processing, physical simulation processing, or animation processing)
Data of an intermediate result (for example, an intermediate result of a game picture, an intermediate result of a livestreaming picture, an intermediate result of a conference picture, or an intermediate result of a concert picture)
Network
Bitstream corresponding to the data of the intermediate result of the game picture
Bitstream corresponding to the data of the intermediate result of the conference picture
Bitstream corresponding to the data of the intermediate result of the concert picture
Bitstream corresponding to the data of the intermediate result of the livestreaming picture
Game picture
Play a cloud game
Mobile phone
Conference picture
Join an AR or VR conference
VR or AR glasses
Concert picture
Watch a virtual concert
Personal computer
Livestreaming picture
Watch virtual human livestreaming
Tablet computer
A terminal device performs a second-phase operation of graphics processing, to generate digital content for displaying

FIG. 1b

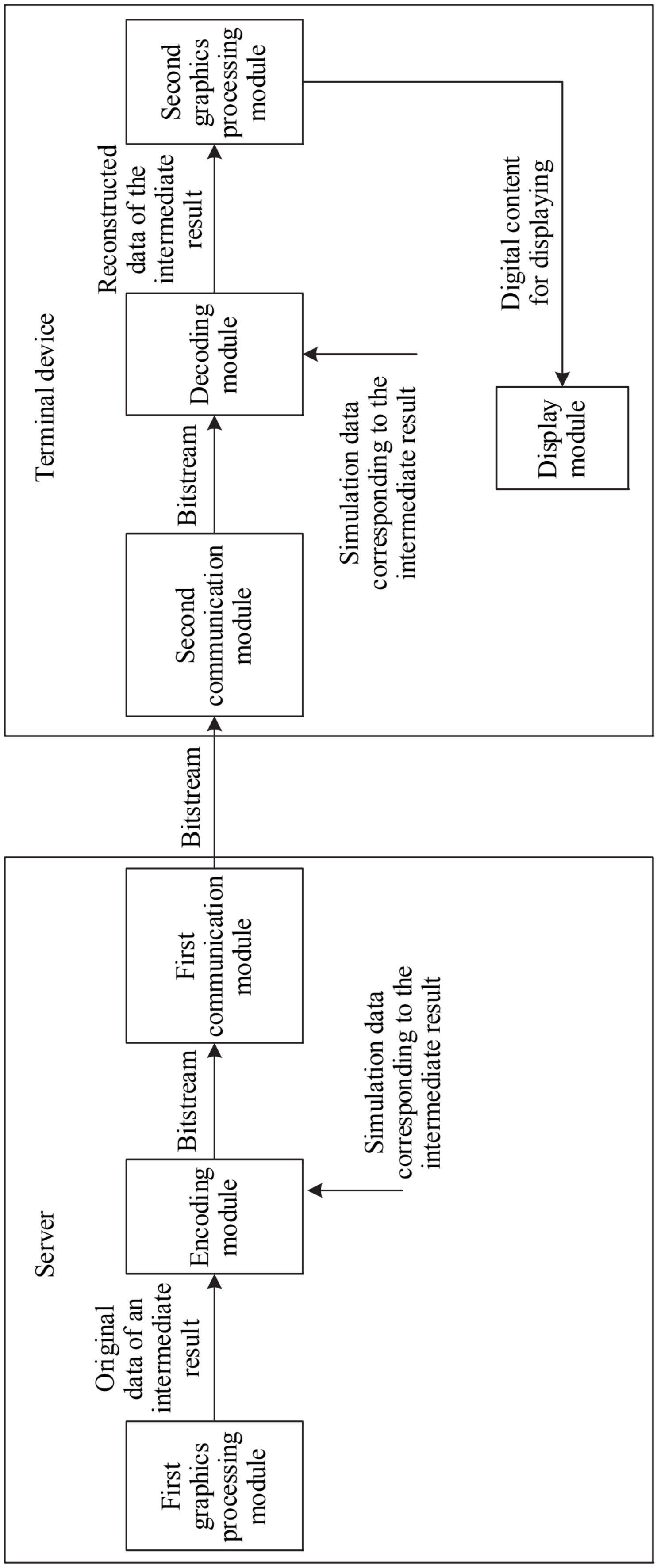
Server
First graphics processing module
Original data of an intermediate result
Encoding module
Simulation data corresponding to the intermediate result
Bitstream
First communication module
Bitstream
Terminal device
Second communication module
Bitstream
Decoding module
Simulation data corresponding to the intermediate result
Reconstructed data of the intermediate result
Second graphics processing module
Digital content for displaying
Display module

FIG. 1c

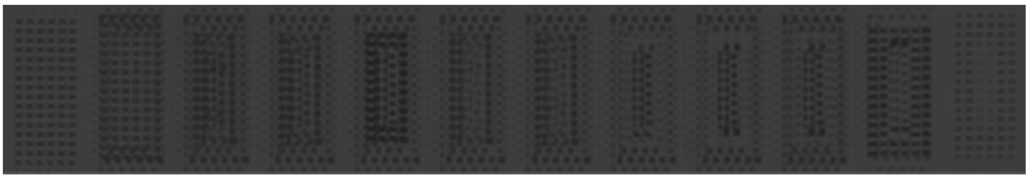

FIG. 2a

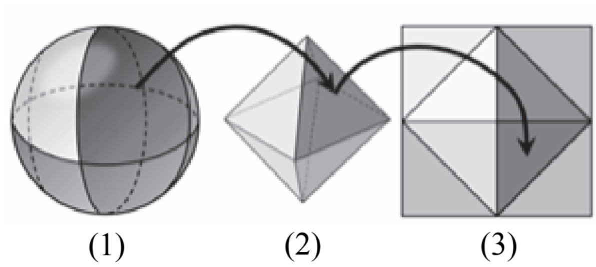


FIG. 2b

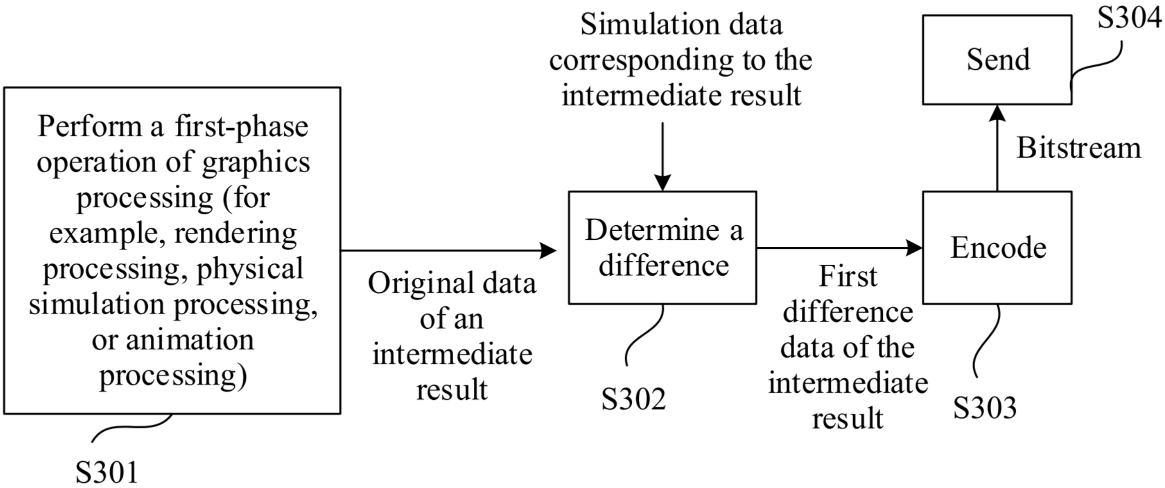


FIG. 3a

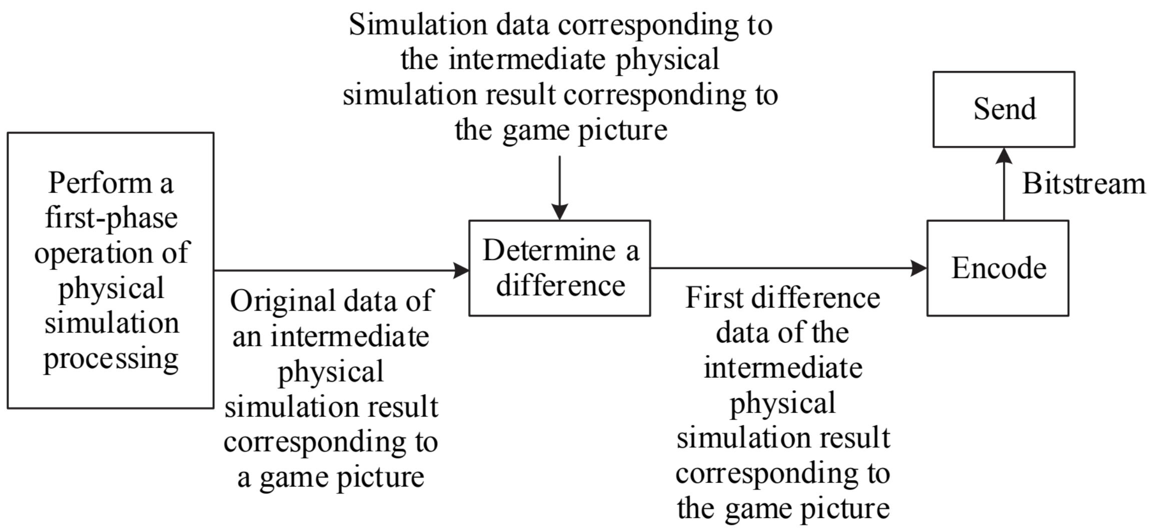
Simulation data corresponding to the intermediate physical simulation result corresponding to the game picture
Send
Bitstream
Perform a first-phase operation of physical simulation processing
Determine a difference
Encode
Original data of an intermediate physical simulation result corresponding to a game picture
First difference data of the intermediate physical simulation result corresponding to the game picture

FIG. 3b

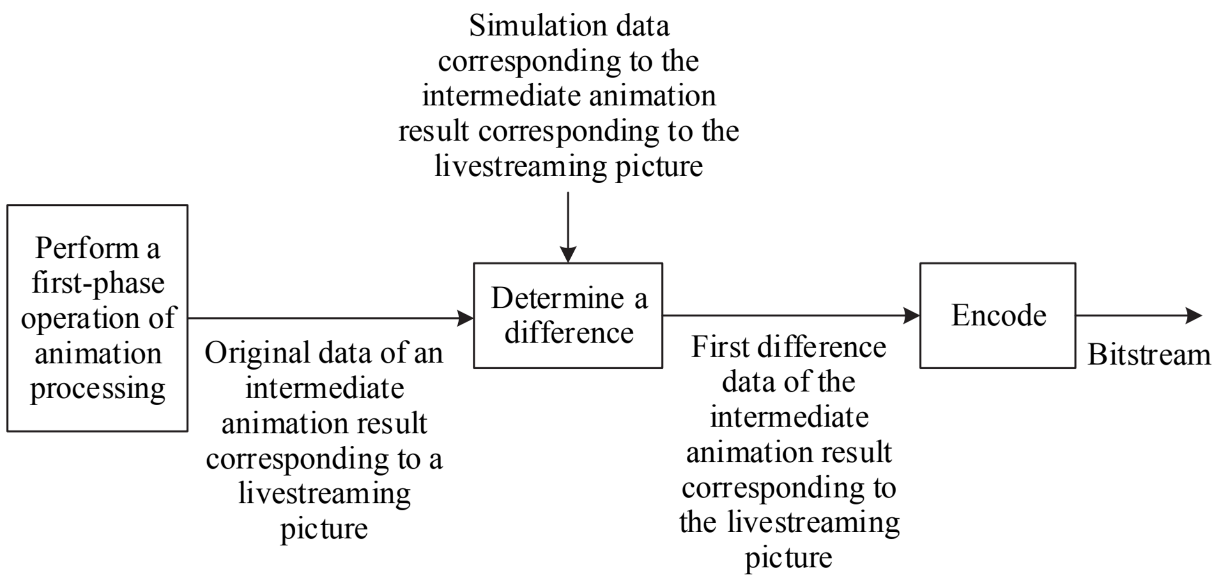
Simulation data corresponding to the intermediate animation result corresponding to the livestreaming picture
Perform a first-phase operation of animation processing
Determine a difference
Encode
Bitstream
Original data of an intermediate animation result corresponding to a livestreaming picture
First difference data of the intermediate animation result corresponding to the livestreaming picture

FIG. 3c

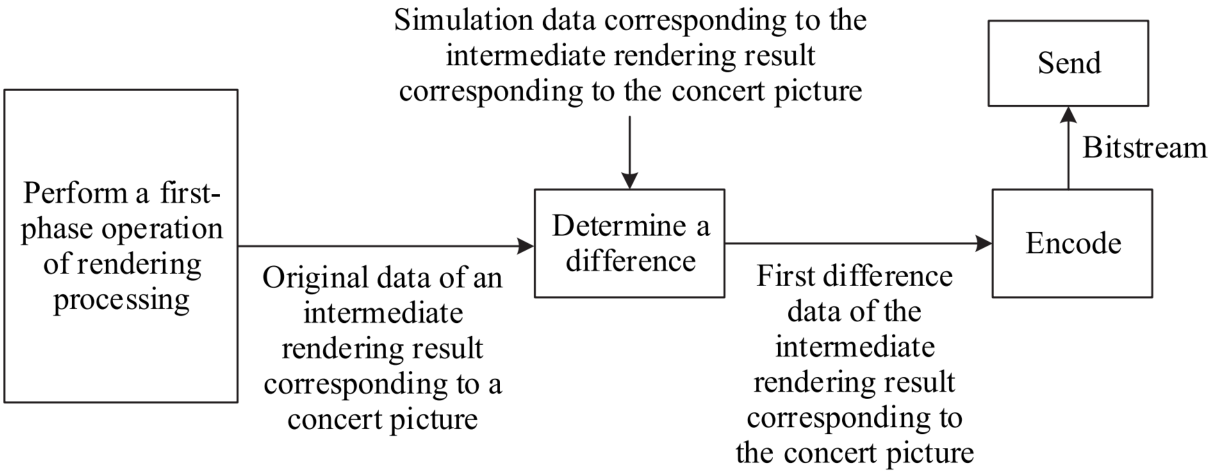
Simulation data corresponding to the intermediate rendering result corresponding to the concert picture
Send
Bitstream
Perform a first-phase operation of rendering processing
Determine a difference
Encode
Original data of an intermediate rendering result corresponding to a concert picture
First difference data of the intermediate rendering result corresponding to the concert picture

FIG. 3d

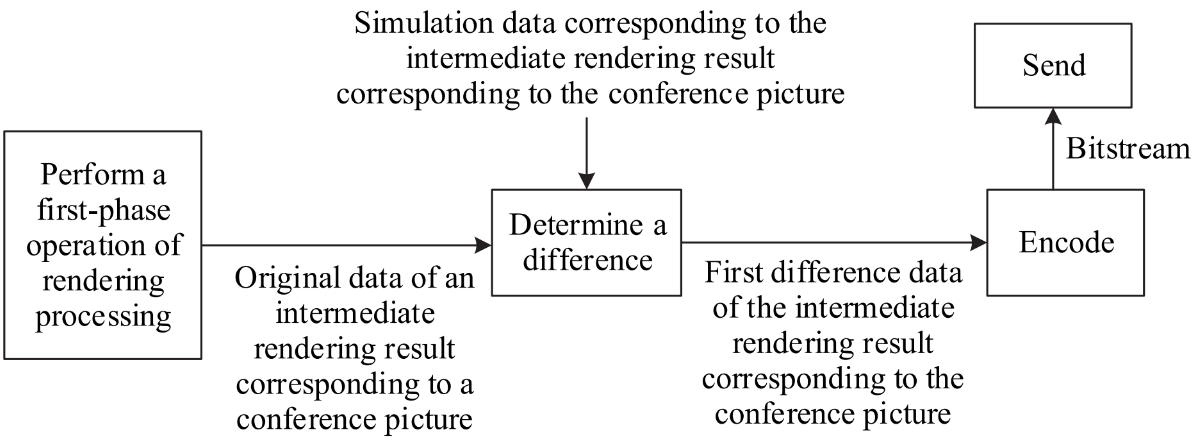
Simulation data corresponding to the intermediate rendering result corresponding to the conference picture
Send
Bitstream
Perform a first-phase operation of rendering processing
Determine a difference
Encode
Original data of an intermediate rendering result corresponding to a conference picture
First difference data of the intermediate rendering result corresponding to the conference picture

FIG. 3e

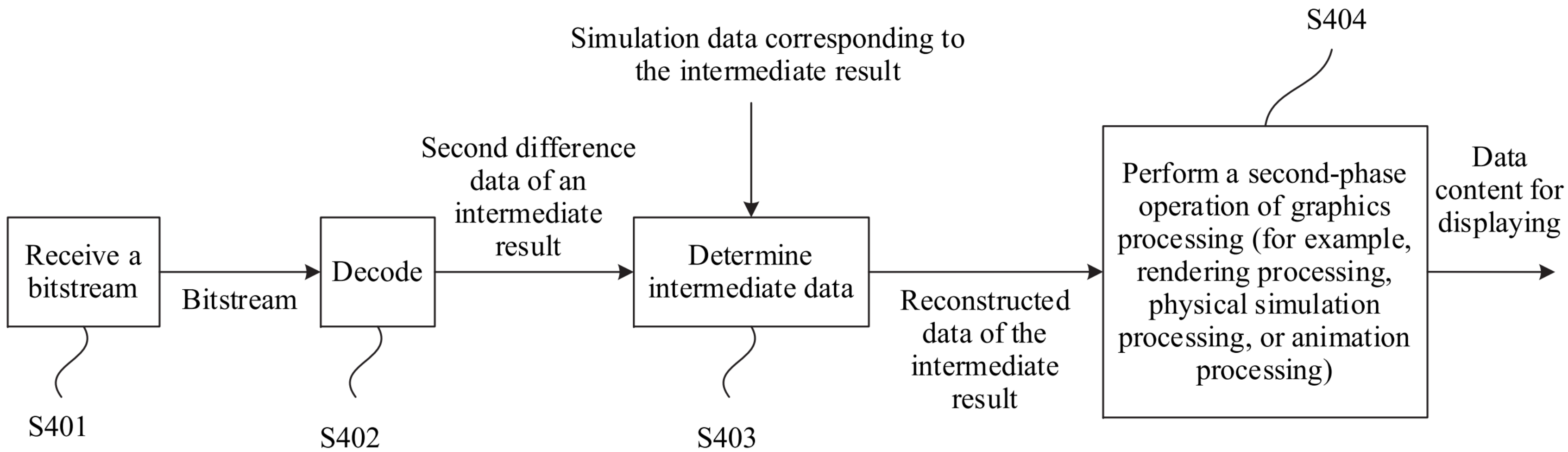
Simulation data corresponding to the intermediate result
S404
Second difference data of an intermediate result
Data content for displaying
Receive a bitstream
Bitstream
Decode
Determine intermediate data
Reconstructed data of the intermediate result
Perform a second-phase operation of graphics processing (for example, rendering processing, physical simulation processing, or animation processing)
S401
S402
S403

FIG. 4a

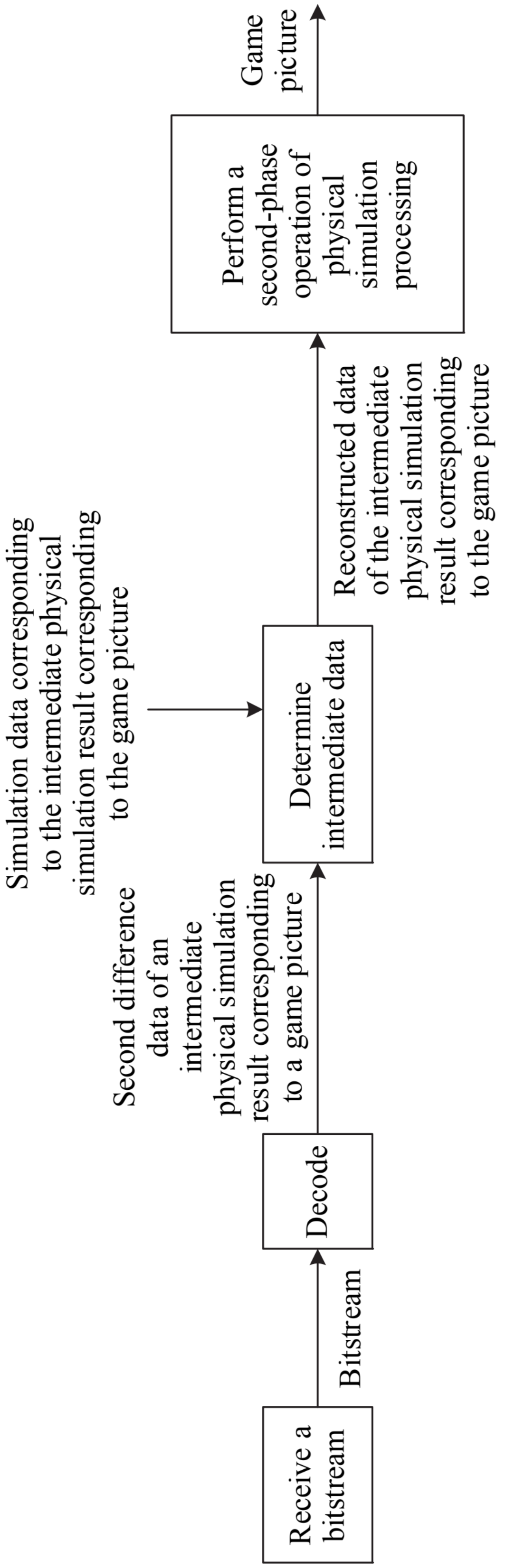
Receive a bitstream
Bitstream
Decode
Second difference data of an intermediate physical simulation result corresponding to a game picture
Simulation data corresponding to the intermediate physical simulation result corresponding to the game picture
Determine intermediate data
Reconstructed data of the intermediate physical simulation result corresponding to the game picture
Perform a second-phase operation of physical simulation processing
Game picture

FIG. 4b

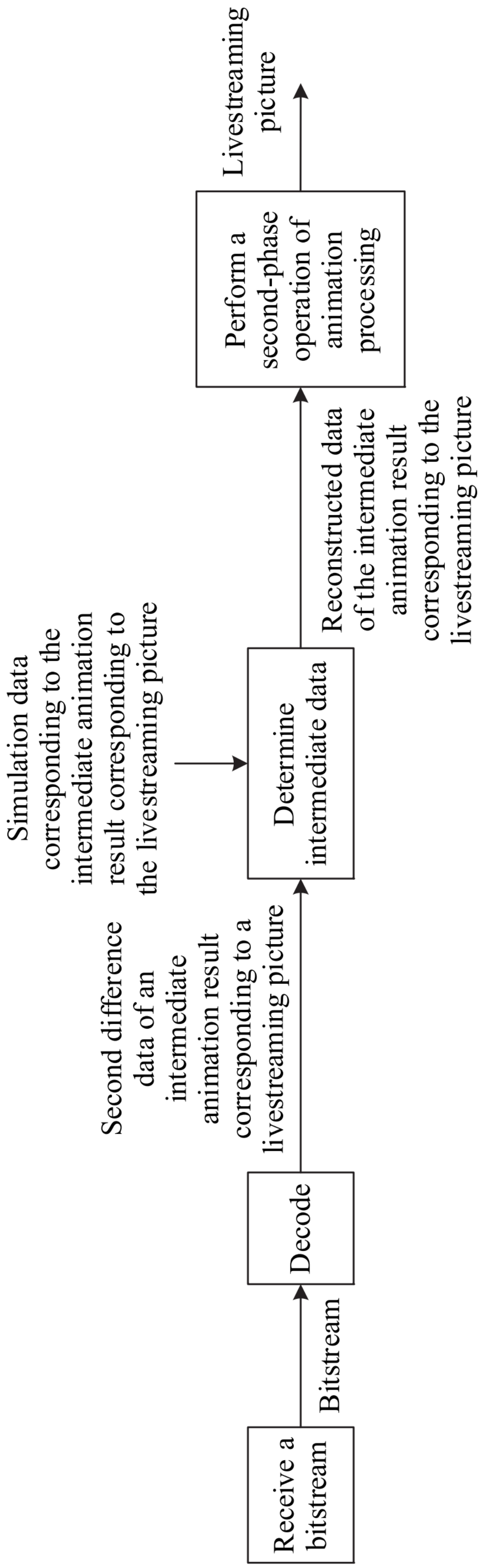
Receive a bitstream
Bitstream
Decode
Second difference data of an intermediate animation result corresponding to a livestreaming picture
Simulation data corresponding to the intermediate animation result corresponding to the livestreaming picture
Determine intermediate data
Reconstructed data of the intermediate animation result corresponding to the livestreaming picture
Perform a second-phase operation of animation processing
Livestreaming picture

FIG. 4c

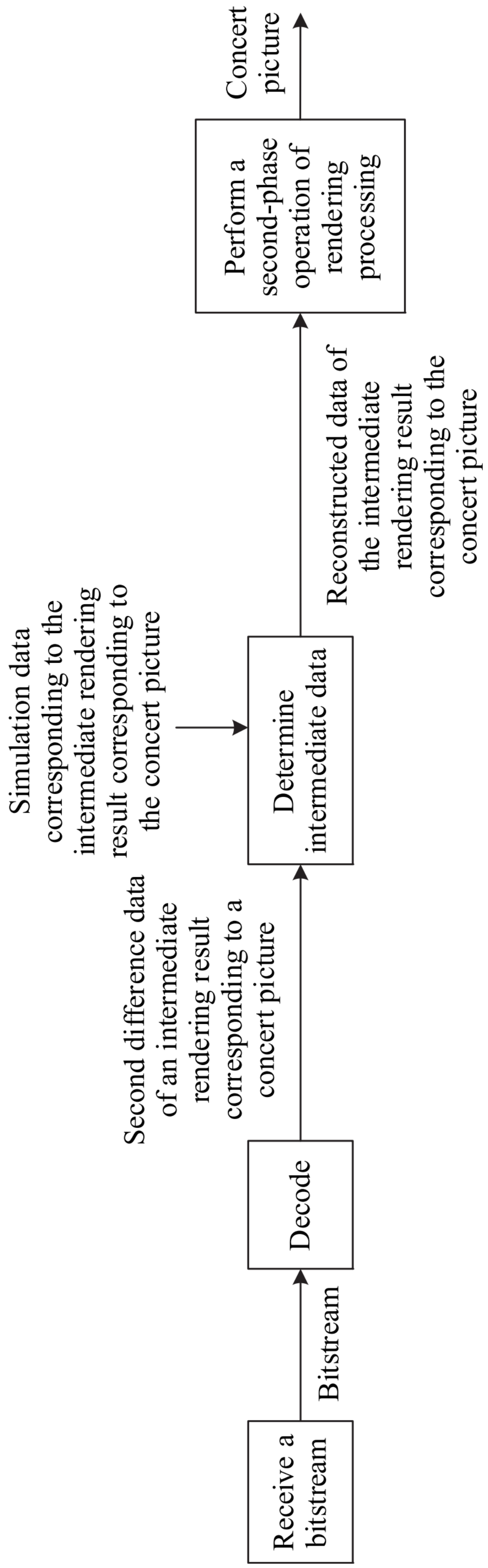
Receive a bitstream
Bitstream
Decode
Second difference data of an intermediate rendering result corresponding to a concert picture
Simulation data corresponding to the intermediate rendering result corresponding to the concert picture
Determine intermediate data
Reconstructed data of the intermediate rendering result corresponding to the concert picture
Perform a second-phase operation of rendering processing
Concert picture

FIG. 4d

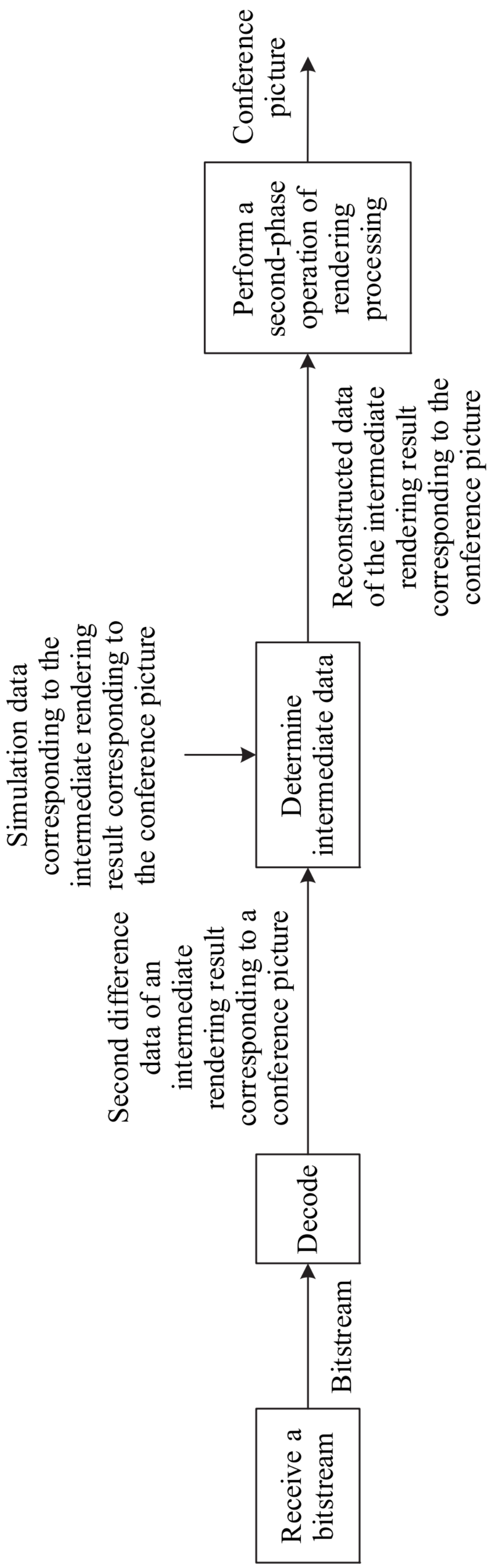
Receive a bitstream
Bitstream
Decode
Second difference data of an intermediate rendering result corresponding to a conference picture
Simulation data corresponding to the intermediate rendering result corresponding to the conference picture
Determine intermediate data
Reconstructed data of the intermediate rendering result corresponding to the conference picture
Perform a second-phase operation of rendering processing
Conference picture

FIG. 4e

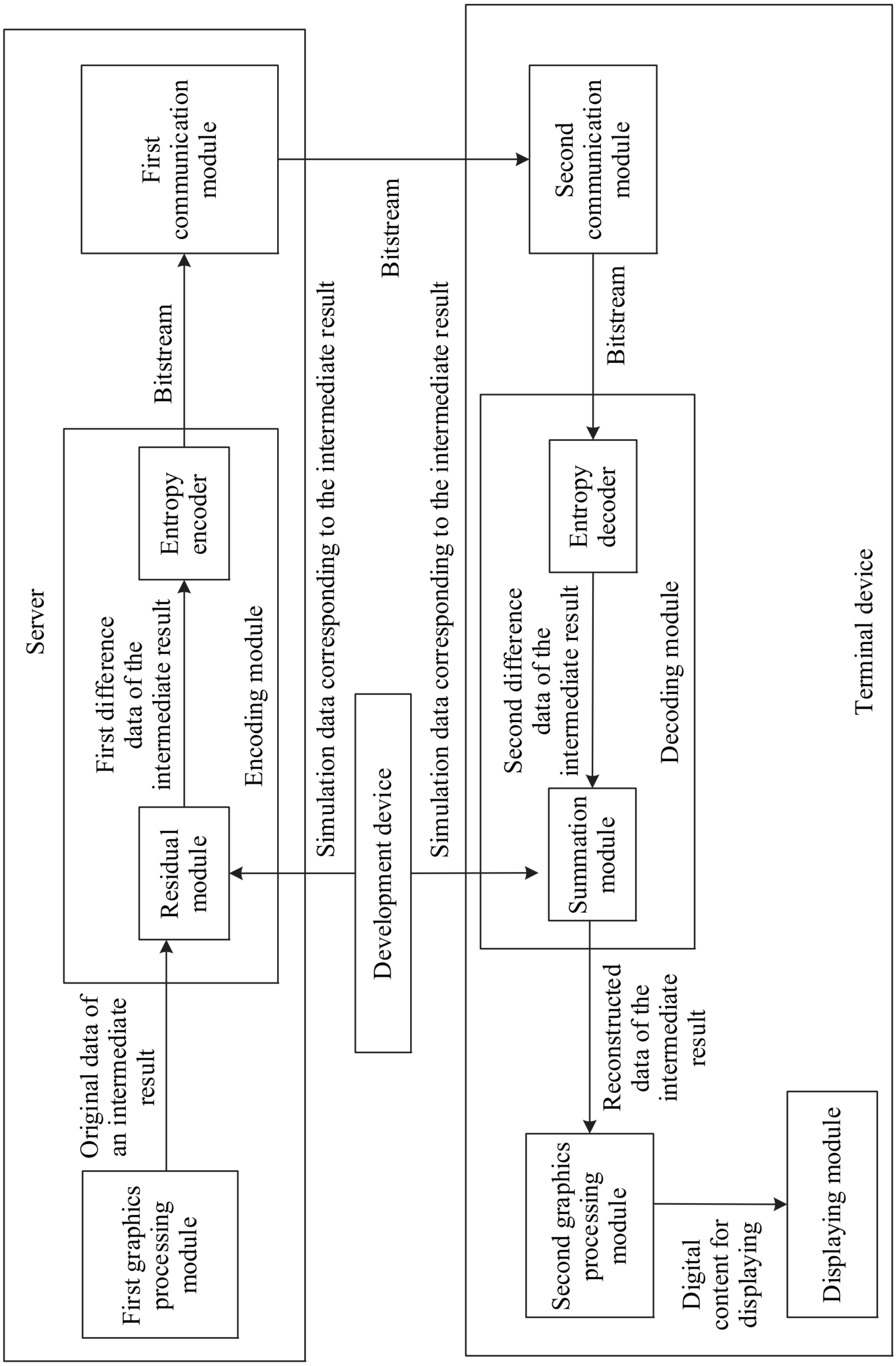

Server
First graphics processing module
Original data of an intermediate result
Residual module
First difference data of the intermediate result
Entropy encoder
Encoding module
Bitstream
First communication module
Bitstream
Simulation data corresponding to the intermediate result
Development device
Simulation data corresponding to the intermediate result
Second communication module
Bitstream
Entropy decoder
Second difference data of the intermediate result
Summation module
Decoding module
Reconstructed data of the intermediate result
Second graphics processing module
Digital content for displaying
Displaying module
Terminal device


FIG. 5a

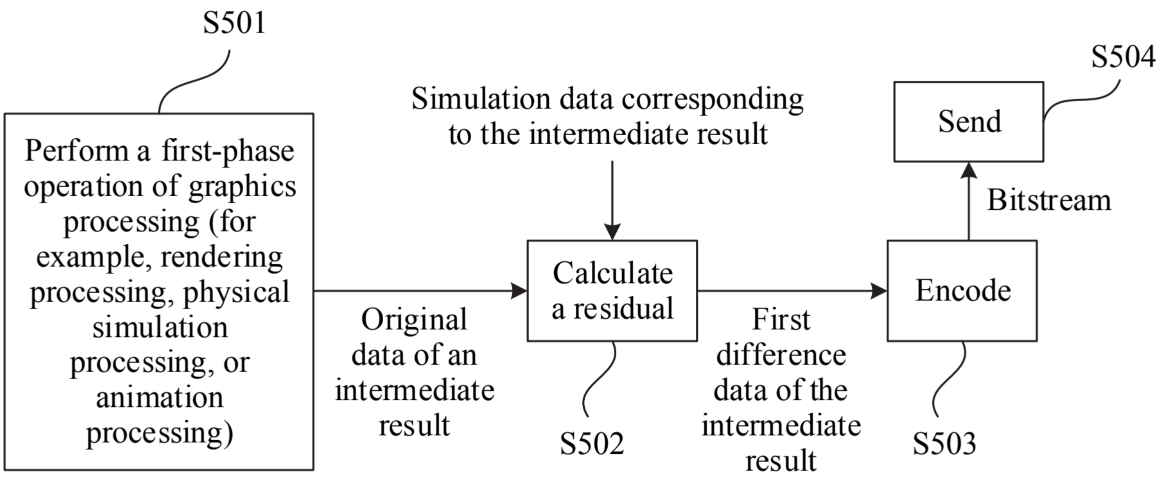
S501
Perform a first-phase operation of graphics processing (for example, rendering processing, physical simulation processing, or animation processing)
Original data of an intermediate result
Simulation data corresponding to the intermediate result
Calculate a residual
S502
First difference data of the intermediate result
Encode
S503
Bitstream
Send
S504

FIG. 5b

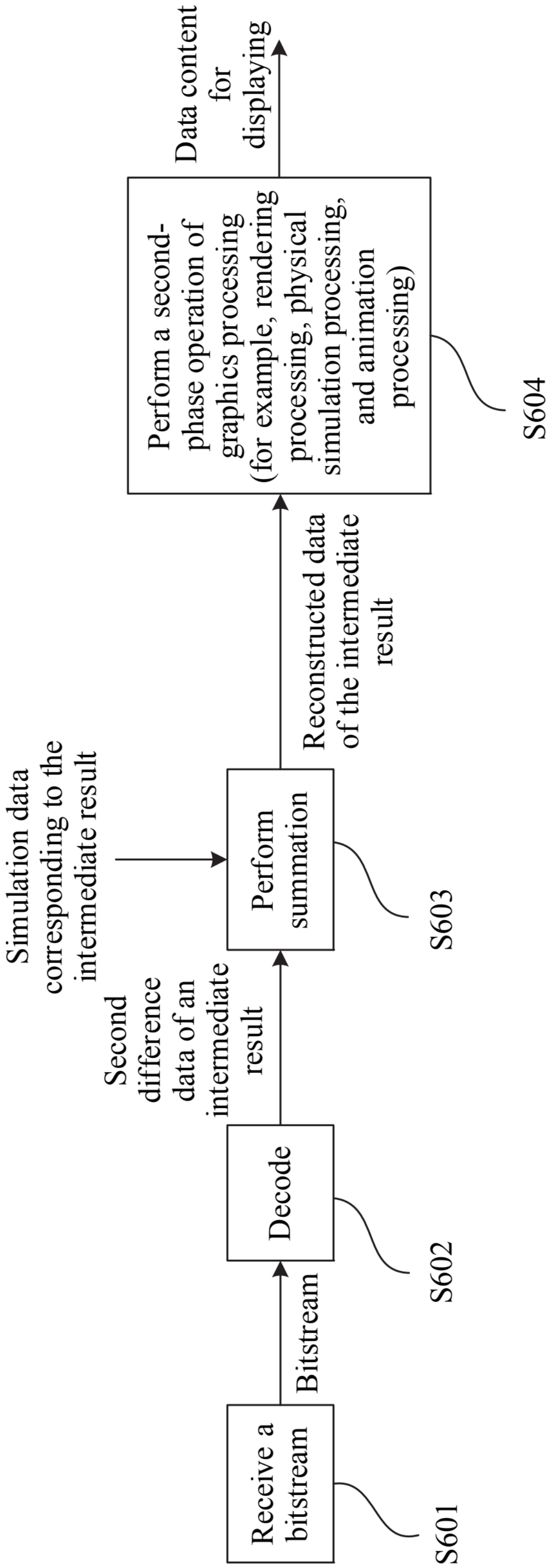
Receive a bitstream
S601
Bitstream
Decode
S602
Second difference data of an intermediate result
Simulation data corresponding to the intermediate result
Perform summation
S603
Reconstructed data of the intermediate result
Perform a second-phase operation of graphics processing (for example, rendering processing, physical simulation processing, and animation processing)
S604
Data content for displaying

FIG. 6

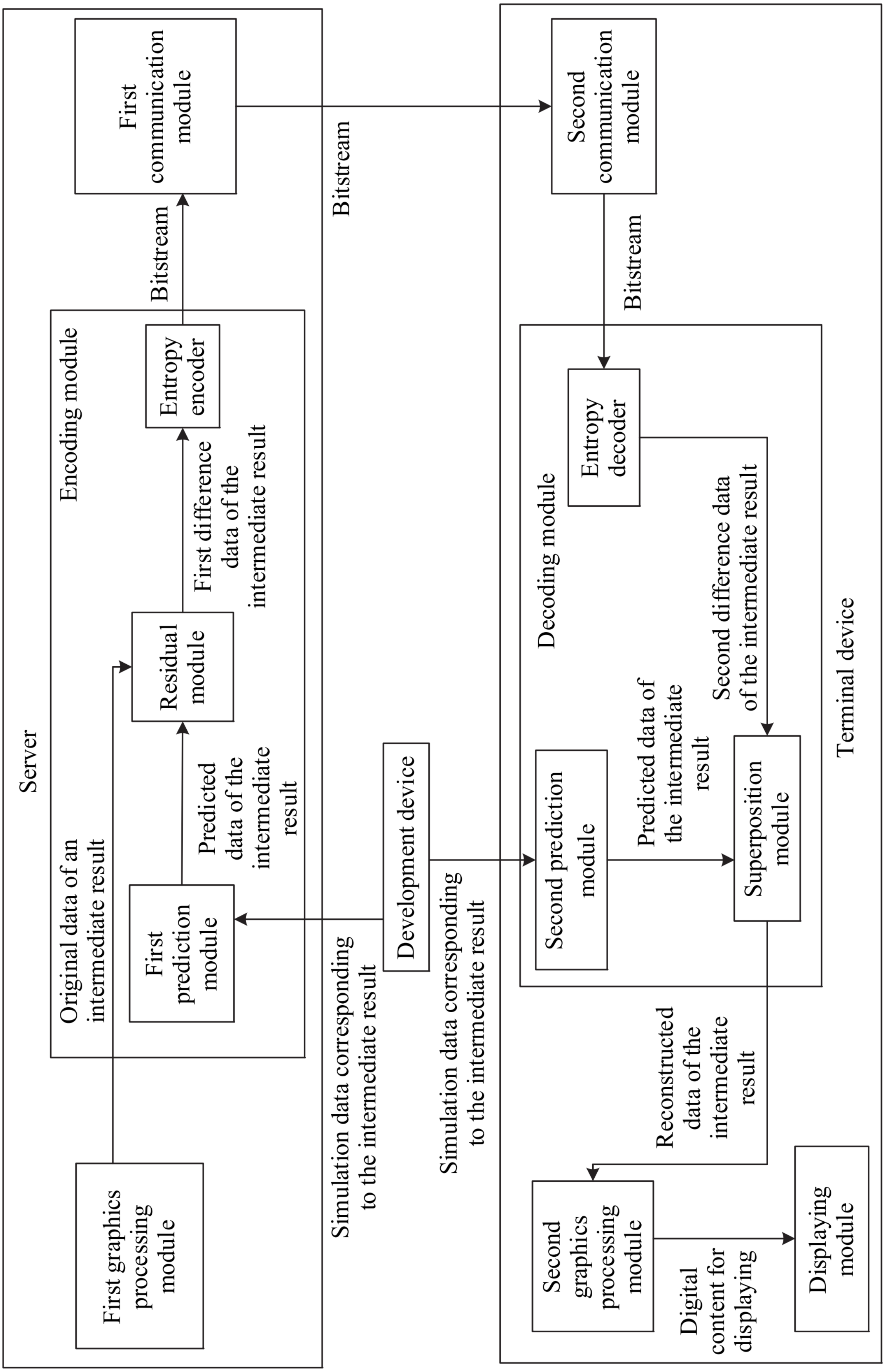
Server
First graphics processing module
Original data of an intermediate result
Encoding module
First prediction module
Predicted data of the intermediate result
Residual module
First difference data of the intermediate result
Entropy encoder
Bitstream
First communication module
Bitstream
Simulation data corresponding to the intermediate result
Development device
Simulation data corresponding to the intermediate result
Second communication module
Bitstream
Decoding module
Entropy decoder
Second difference data of the intermediate result
Second prediction module
Predicted data of the intermediate result
Superposition module
Reconstructed data of the intermediate result
Second graphics processing module
Digital content for displaying
Displaying module
Terminal device

FIG. 7a

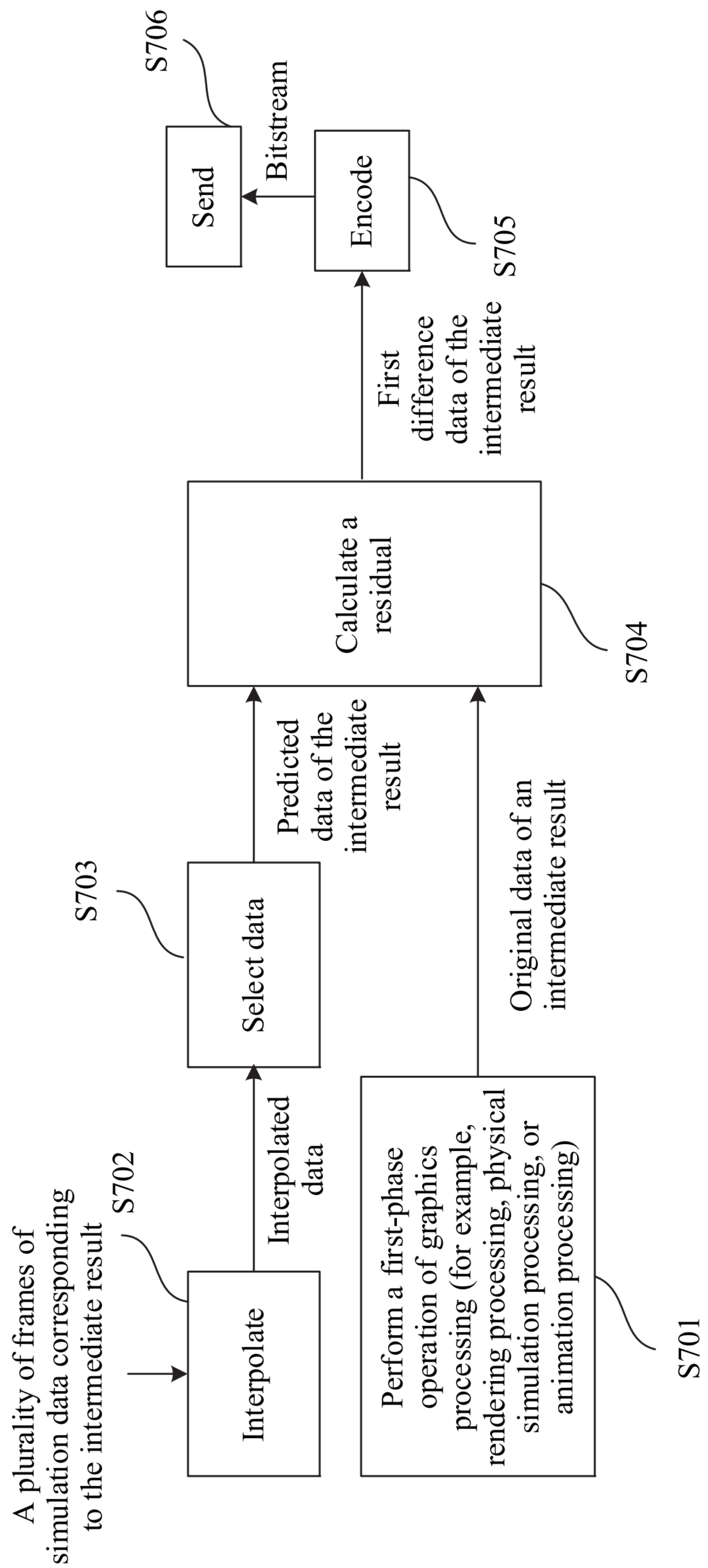
A plurality of frames of simulation data corresponding to the intermediate result
Interpolate
S702
Interpolated data
Select data
S703
Predicted data of the intermediate result
Perform a first-phase operation of graphics processing (for example, rendering processing, physical simulation processing, or animation processing)
S701
Original data of an intermediate result
Calculate a residual
S704
First difference data of the intermediate result
Encode
S705
Bitstream
Send
S706

FIG. 7b

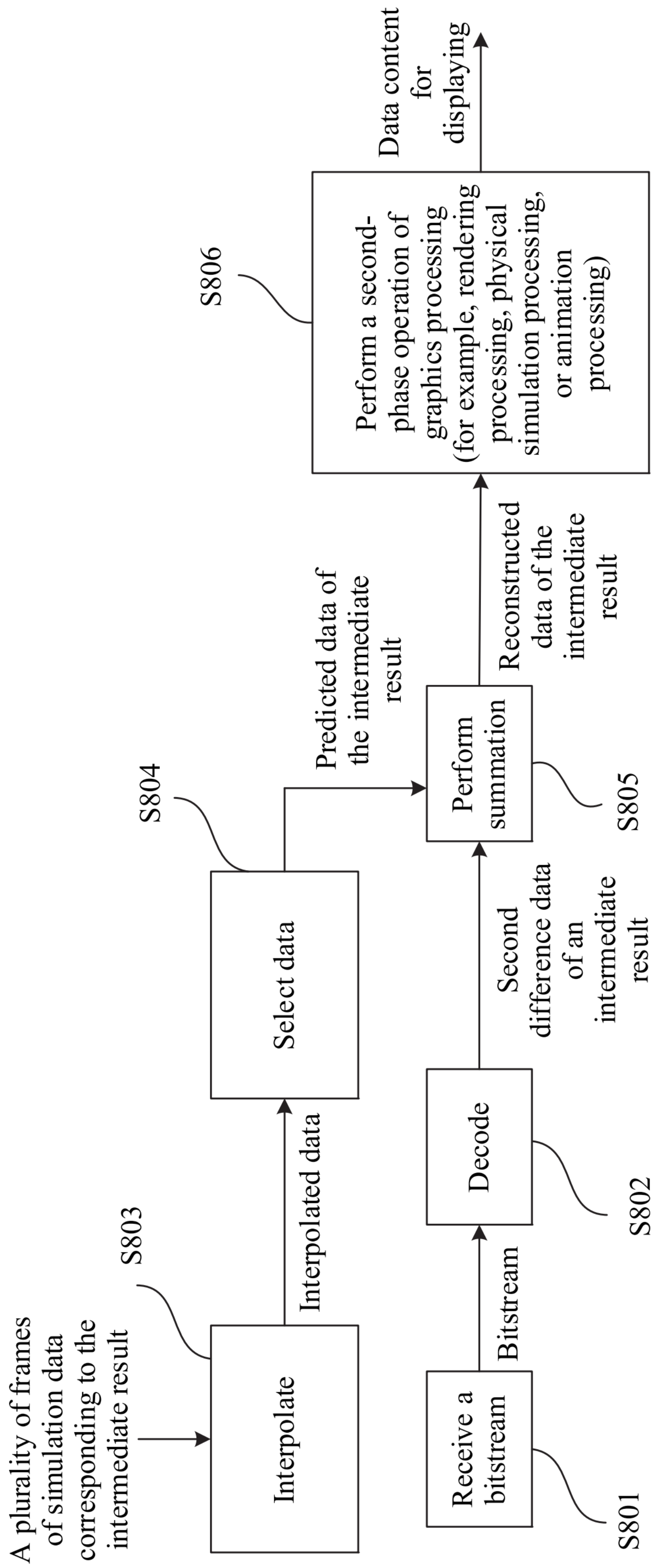
A plurality of frames of simulation data corresponding to the intermediate result
Interpolate
S803
Interpolated data
Select data
S804
Predicted data of the intermediate result
Receive a bitstream
S801
Bitstream
Decode
S802
Second difference data of an intermediate result
Perform summation
S805
Reconstructed data of the intermediate result
Perform a second-phase operation of graphics processing (for example, rendering processing, physical simulation processing, or animation processing)
S806
Data content for displaying

FIG. 8

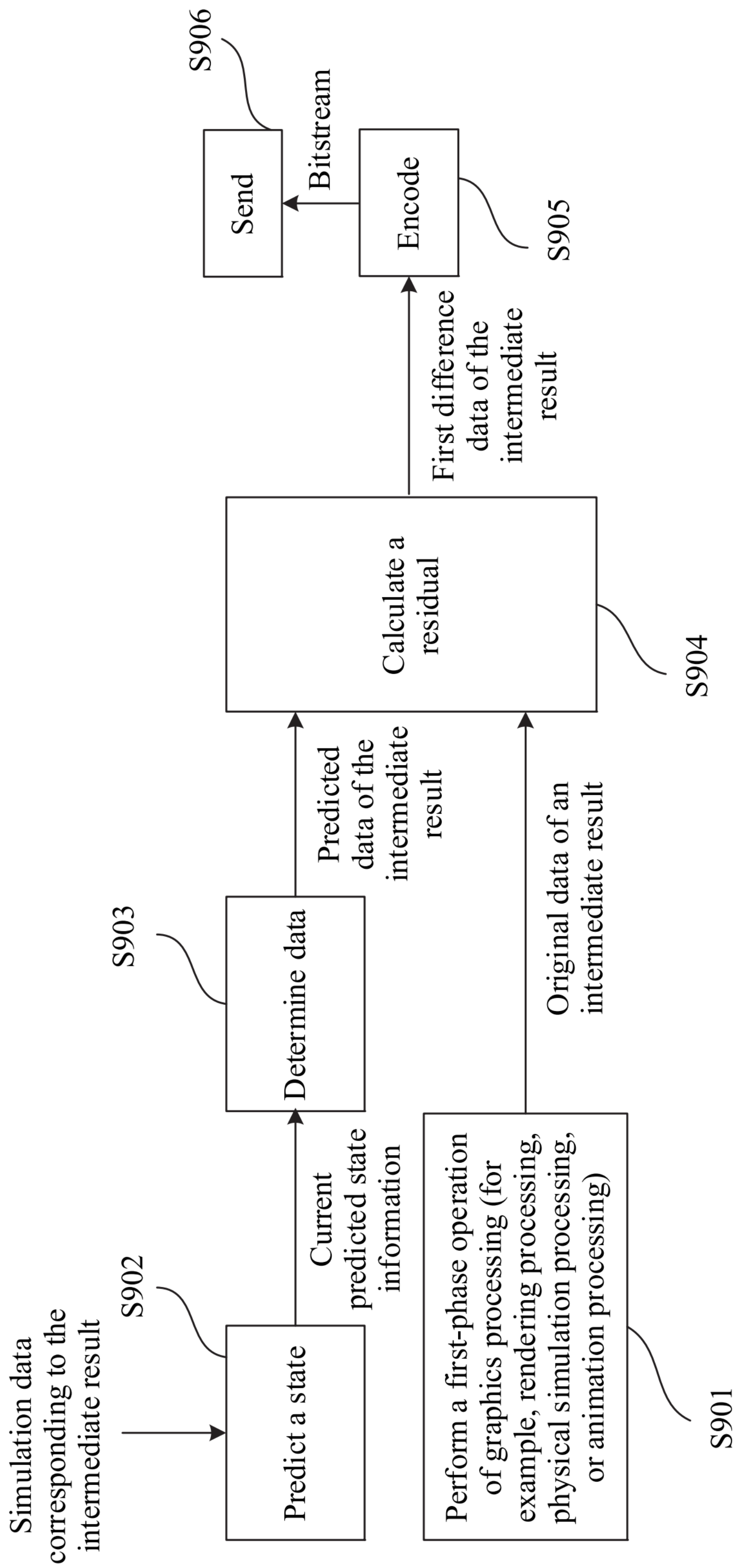
Simulation data corresponding to the intermediate result
Predict a state
S902
Current predicted state information
Determine data
S903
Predicted data of the intermediate result
Perform a first-phase operation of graphics processing (for example, rendering processing, physical simulation processing, or animation processing)
S901
Original data of an intermediate result
Calculate a residual
S904
First difference data of the intermediate result
Encode
S905
Bitstream
Send
S906

FIG. 9

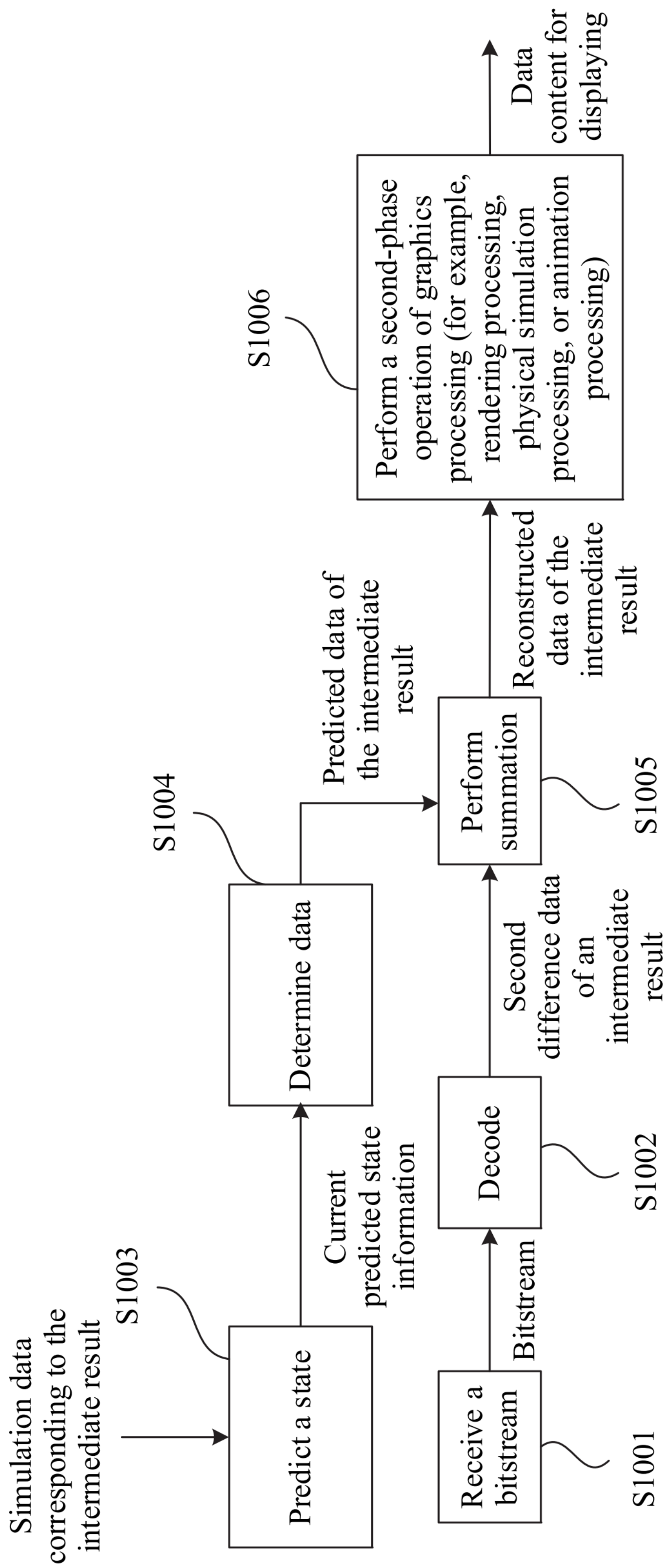
Simulation data corresponding to the intermediate result
Predict a state
S1003
Current predicted state information
Determine data
S1004
Predicted data of the intermediate result
Receive a bitstream
S1001
Bitstream
Decode
S1002
Second difference data of an intermediate result
Perform summation
S1005
Reconstructed data of the intermediate result
Perform a second-phase operation of graphics processing (for example, rendering processing, physical simulation processing, or animation processing)
S1006
Data content for displaying

FIG. 10

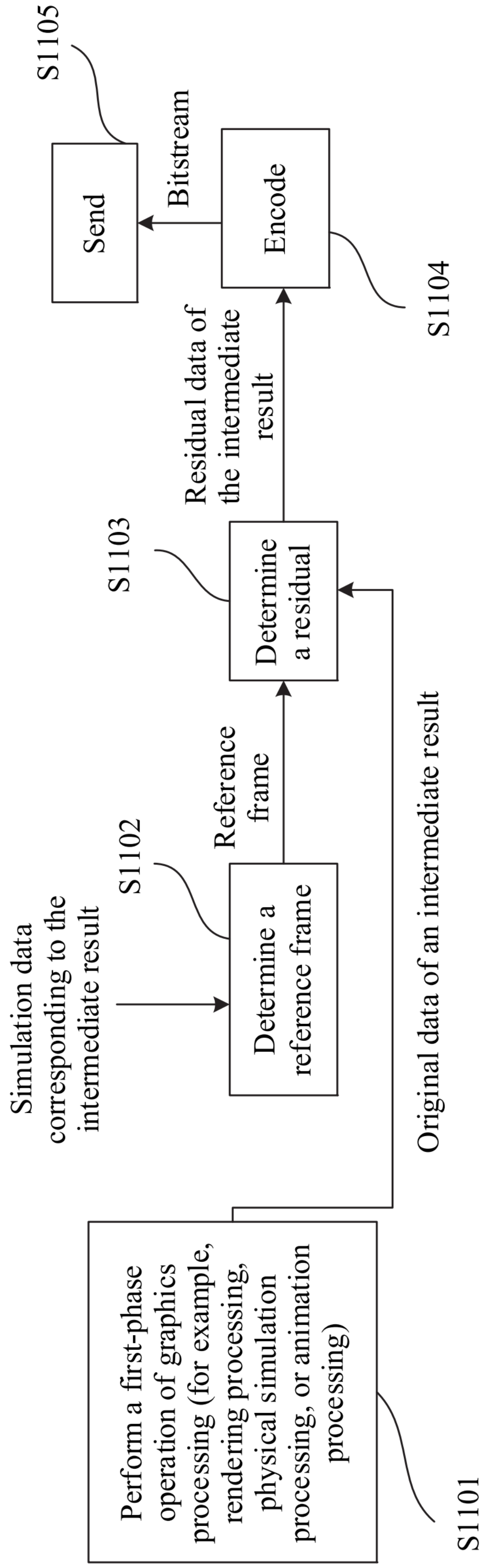
Perform a first-phase operation of graphics processing (for example, rendering processing, physical simulation processing, or animation processing)
S1101
Original data of an intermediate result
Simulation data corresponding to the intermediate result
Determine a reference frame
S1102
Reference frame
Determine a residual
S1103
Residual data of the intermediate result
Encode
S1104
Bitstream
Send
S1105

FIG. 11a

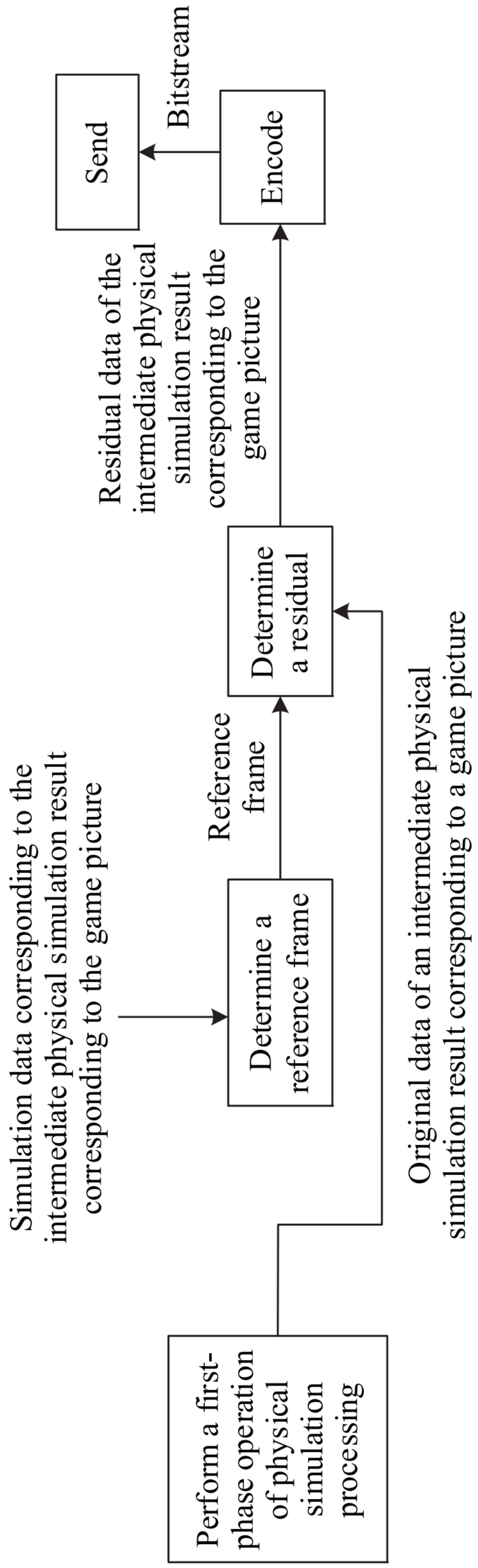

Perform a first-phase operation of physical simulation processing
Simulation data corresponding to the intermediate physical simulation result corresponding to the game picture
Determine a reference frame
Reference frame
Determine a residual
Original data of an intermediate physical simulation result corresponding to a game picture
Residual data of the intermediate physical simulation result corresponding to the game picture
Encode
Bitstream
Send


FIG. 11b

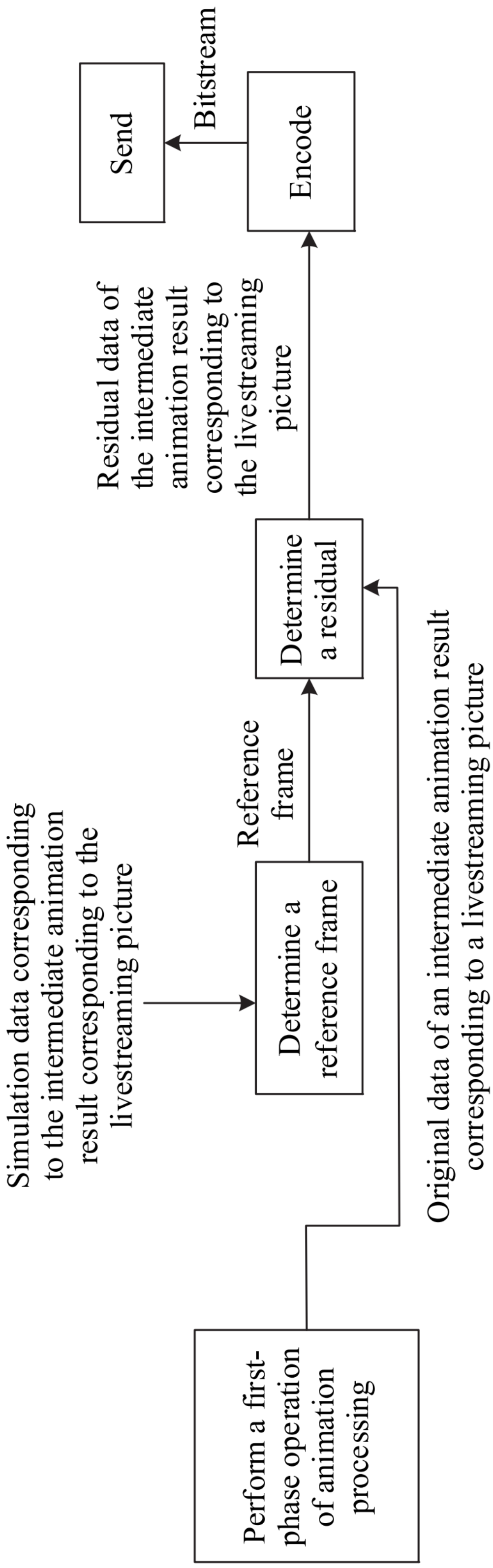
Perform a first-phase operation of animation processing
Original data of an intermediate animation result corresponding to a livestreaming picture
Simulation data corresponding to the intermediate animation result corresponding to the livestreaming picture
Determine a reference frame
Reference frame
Determine a residual
Residual data of the intermediate animation result corresponding to the livestreaming picture
Encode
Bitstream
Send

FIG. 11c

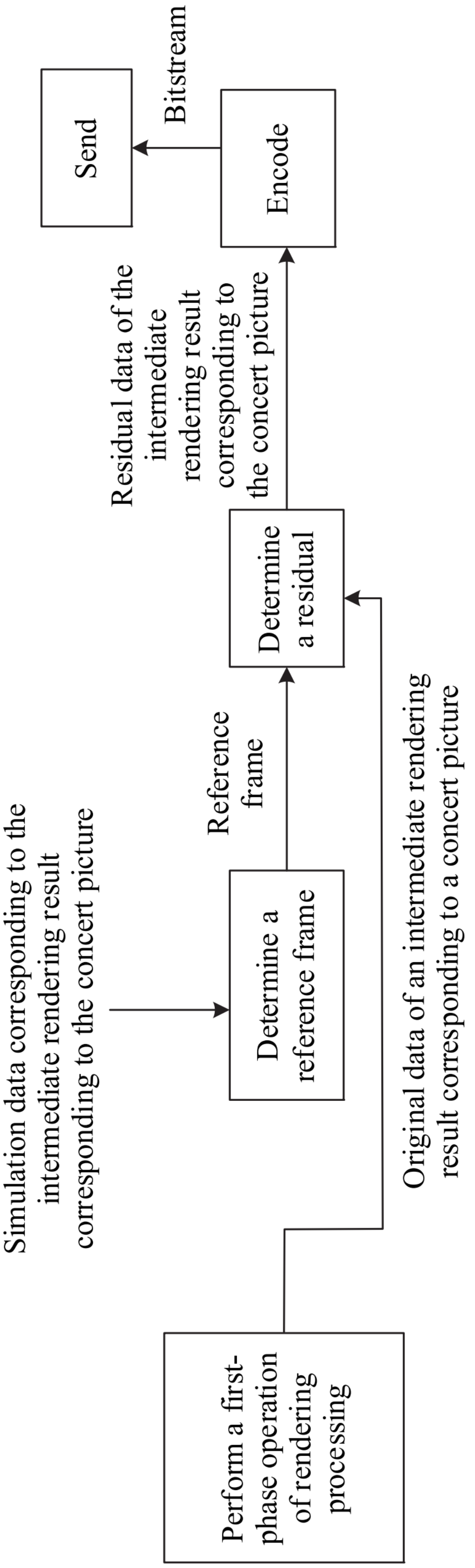
Perform a first-phase operation of rendering processing
Simulation data corresponding to the intermediate rendering result corresponding to the concert picture
Determine a reference frame
Reference frame
Original data of an intermediate rendering result corresponding to a concert picture
Determine a residual
Residual data of the intermediate rendering result corresponding to the concert picture
Encode
Bitstream
Send

FIG. 11d

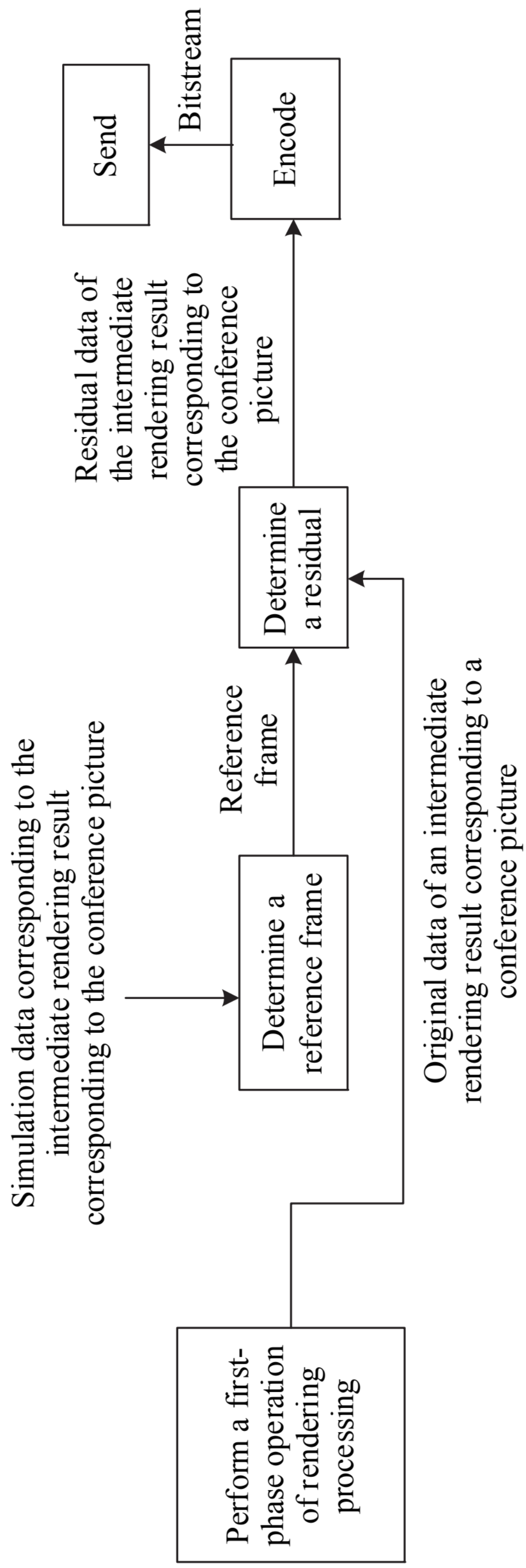

Perform a first-phase operation of rendering processing
Simulation data corresponding to the intermediate rendering result corresponding to the conference picture
Determine a reference frame
Reference frame
Original data of an intermediate rendering result corresponding to a conference picture
Determine a residual
Residual data of the intermediate rendering result corresponding to the conference picture
Encode
Bitstream
Send


FIG. 11e

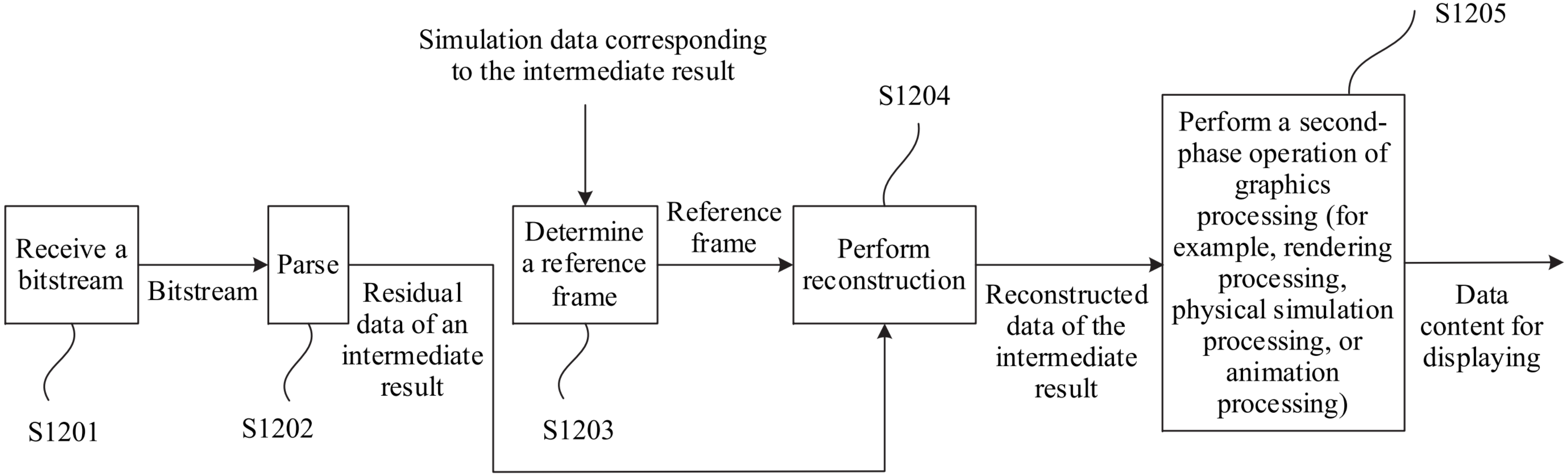
Receive a bitstream
S1201
Bitstream
Parse
S1202
Residual data of an intermediate result
Simulation data corresponding to the intermediate result
Determine a reference frame
S1203
Reference frame
Perform reconstruction
S1204
Reconstructed data of the intermediate result
Perform a second-phase operation of graphics processing (for example, rendering processing, physical simulation processing, or animation processing)
S1205
Data content for displaying

FIG. 12a

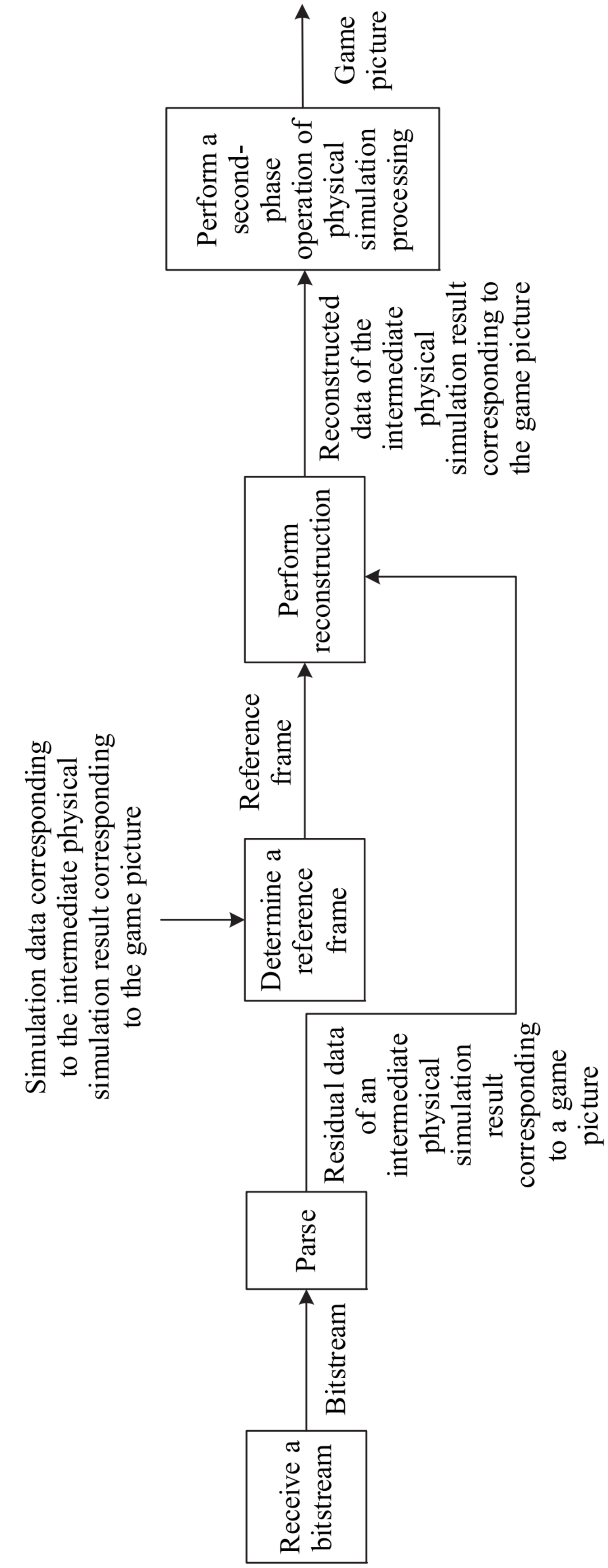
Receive a bitstream
Bitstream
Parse
Residual data of an intermediate physical simulation result corresponding to a game picture
Simulation data corresponding to the intermediate physical simulation result corresponding to the game picture
Determine a reference frame
Reference frame
Perform reconstruction
Reconstructed data of the intermediate physical simulation result corresponding to the game picture
Perform a second-phase operation of physical simulation processing
Game picture

FIG. 12b

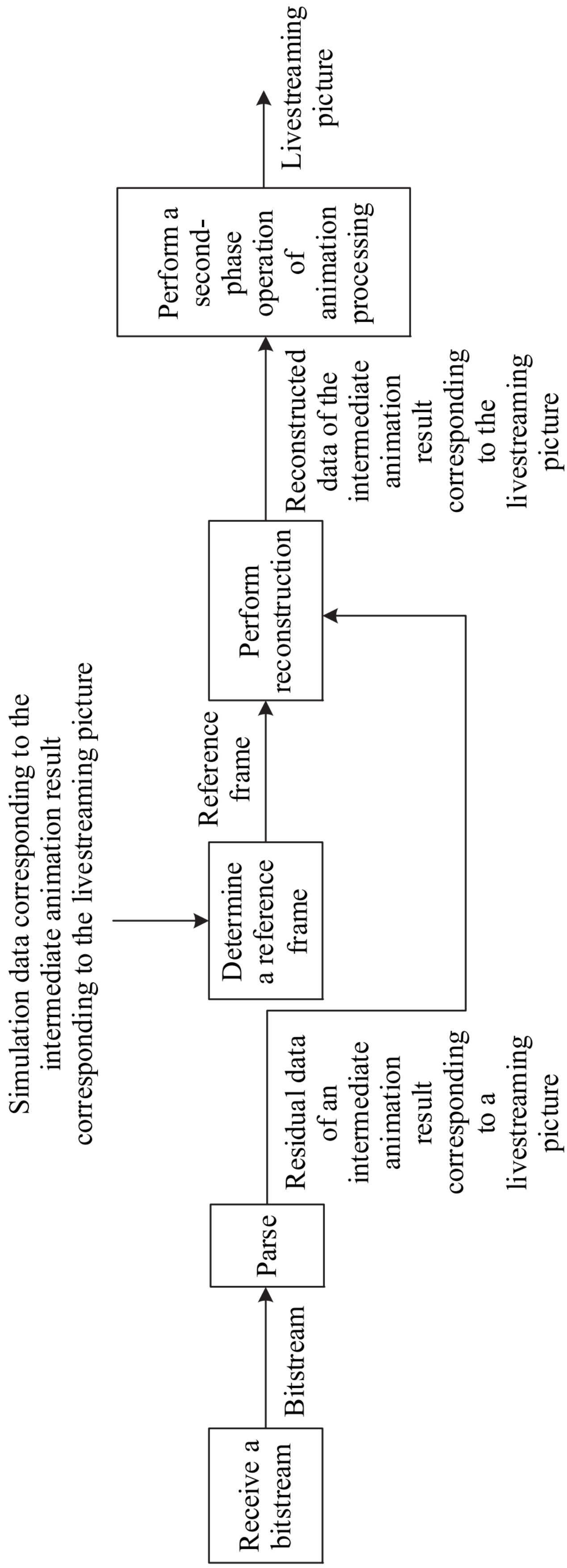
Receive a bitstream
Bitstream
Parse
Residual data of an intermediate animation result corresponding to a livestreaming picture
Simulation data corresponding to the intermediate animation result corresponding to the livestreaming picture
Determine a reference frame
Reference frame
Perform reconstruction
Reconstructed data of the intermediate animation result corresponding to the livestreaming picture
Perform a second-phase operation of animation processing
Livestreaming picture

FIG. 12c

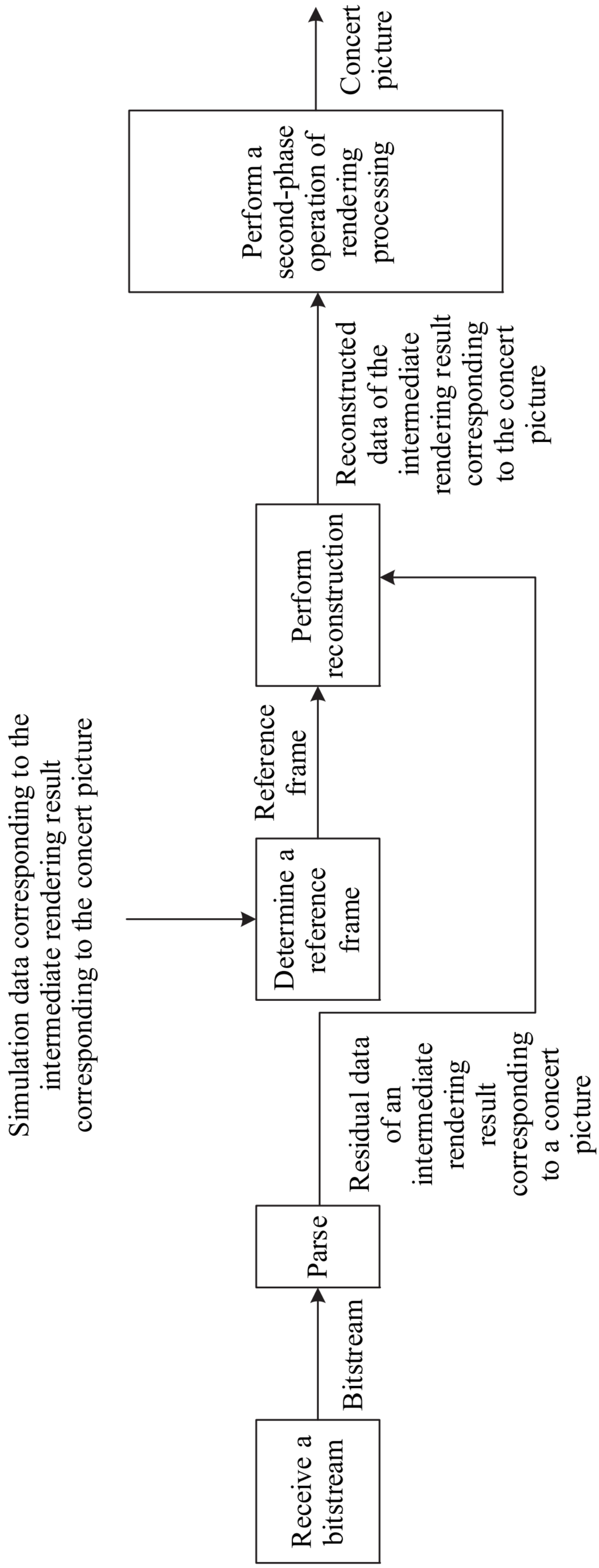
Receive a bitstream
Bitstream
Parse
Residual data of an intermediate rendering result corresponding to a concert picture
Simulation data corresponding to the intermediate rendering result corresponding to the concert picture
Determine a reference frame
Reference frame
Perform reconstruction
Reconstructed data of the intermediate rendering result corresponding to the concert picture
Perform a second-phase operation of rendering processing
Concert picture

FIG. 12d

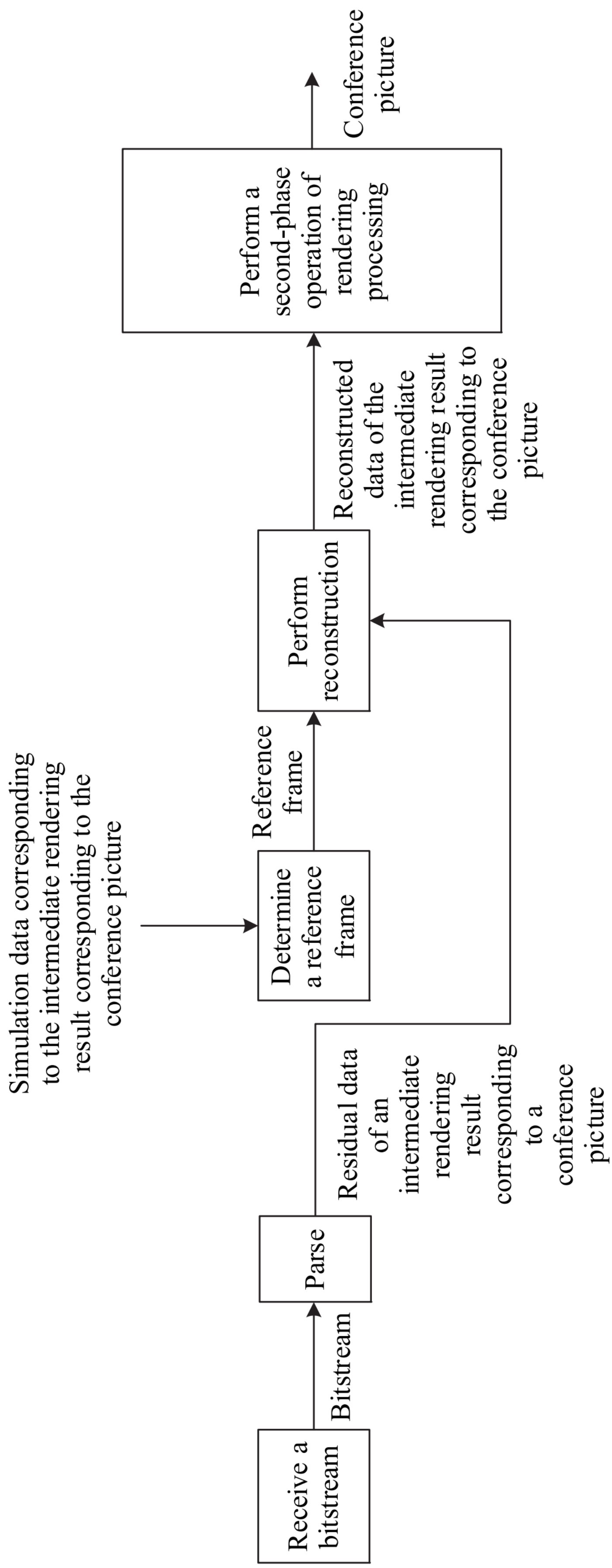
Receive a bitstream
Bitstream
Parse
Residual data of an intermediate rendering result corresponding to a conference picture
Simulation data corresponding to the intermediate rendering result corresponding to the conference picture
Determine a reference frame
Reference frame
Perform reconstruction
Reconstructed data of the intermediate rendering result corresponding to the conference picture
Perform a second-phase operation of rendering processing
Conference picture

FIG. 12e

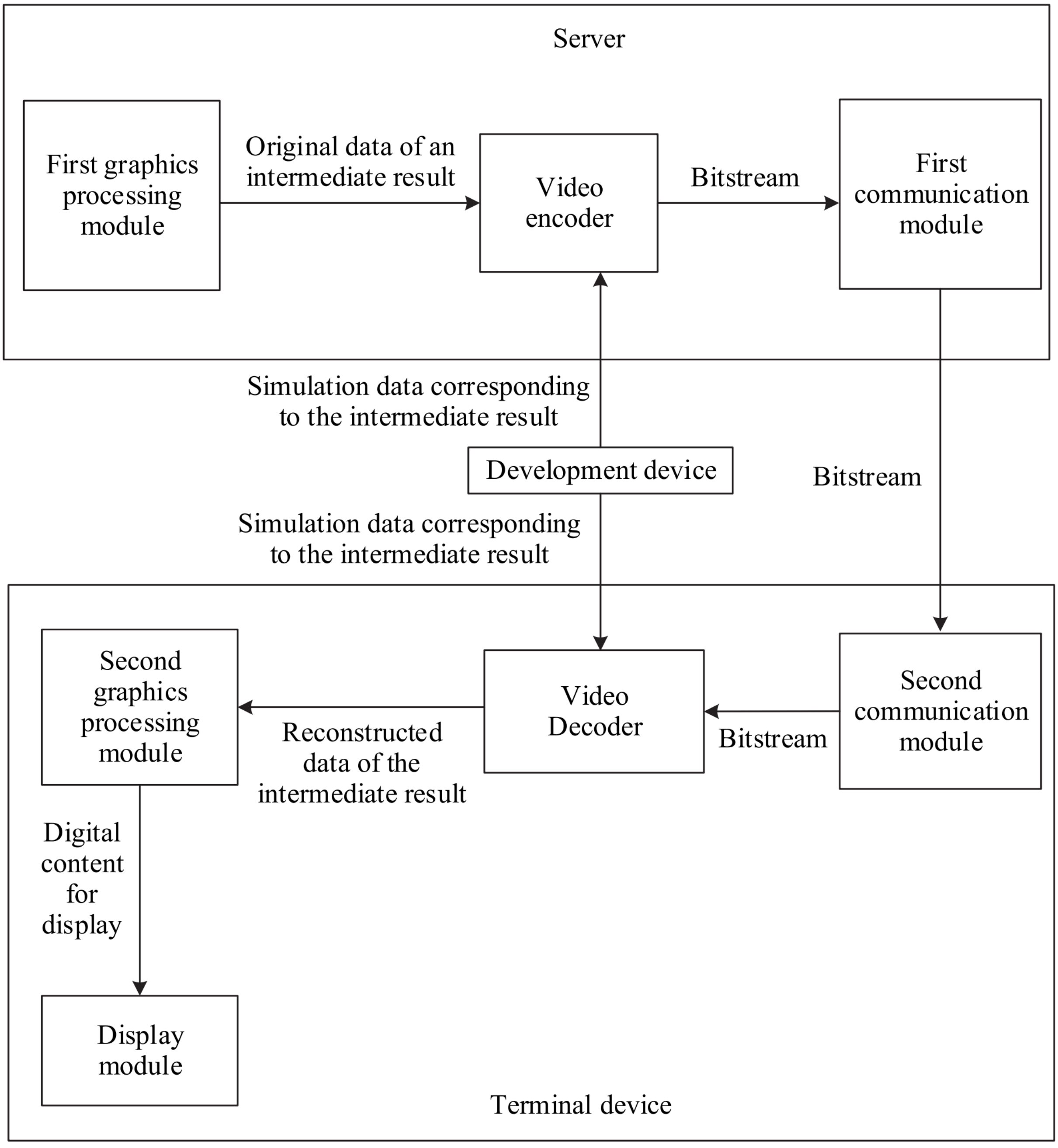
Server
First graphics processing module
Original data of an intermediate result
Video encoder
Bitstream
First communication module
Simulation data corresponding to the intermediate result
Development device
Bitstream
Simulation data corresponding to the intermediate result
Second graphics processing module
Video Decoder
Second communication module
Reconstructed data of the intermediate result
Bitstream
Digital content for display
Display module
Terminal device

FIG. 13a

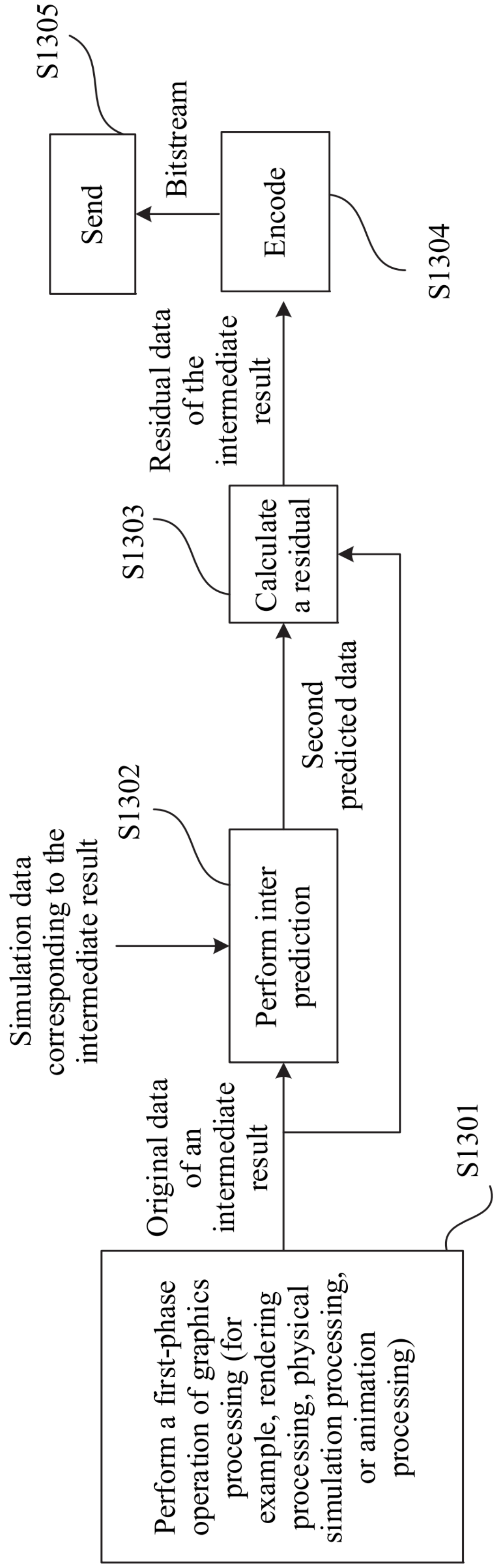
Perform a first-phase operation of graphics processing (for example, rendering processing, physical simulation processing, or animation processing)
S1301
Original data of an intermediate result
Simulation data corresponding to the intermediate result
Perform inter prediction
S1302
Second predicted data
Calculate a residual
S1303
Residual data of the intermediate result
Encode
S1304
Bitstream
Send
S1305

FIG. 13b

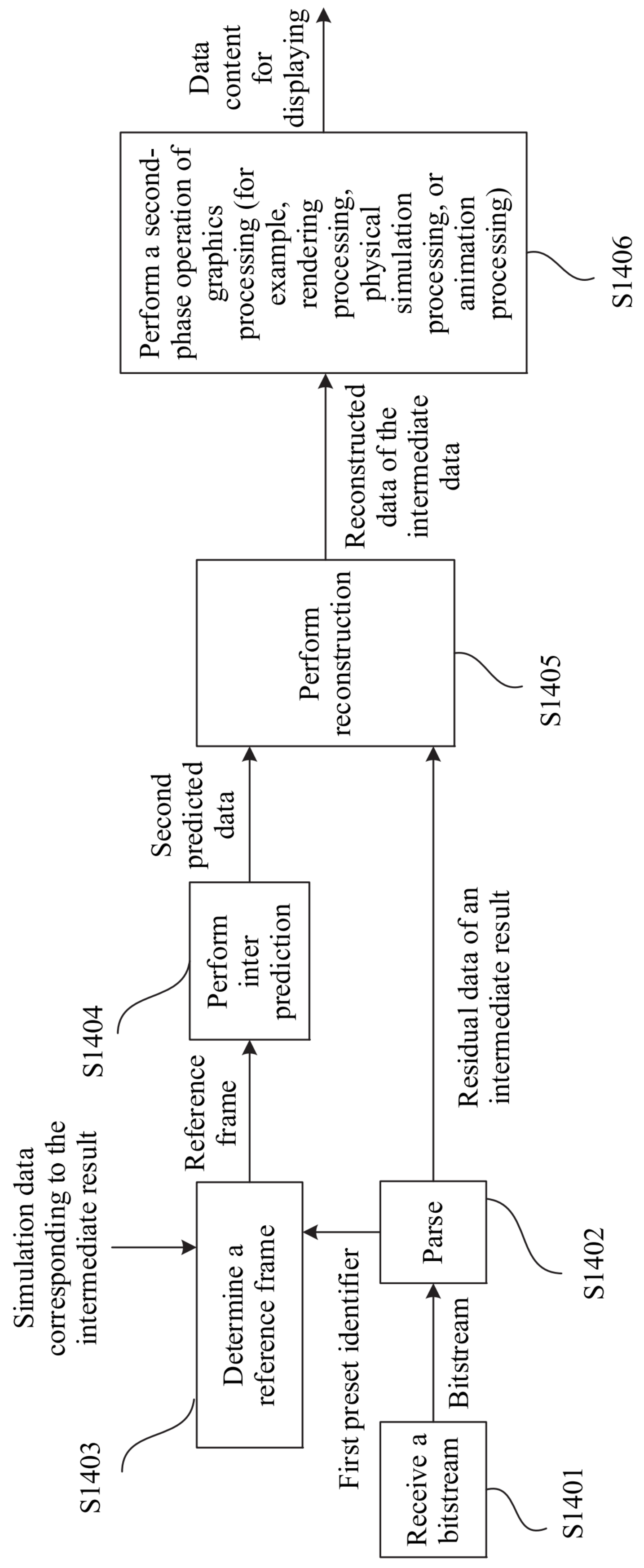
Receive a bitstream
S1401
Bitstream
Parse
S1402
First preset identifier
Residual data of an intermediate result
Simulation data corresponding to the intermediate result
Determine a reference frame
S1403
Reference frame
Perform inter prediction
S1404
Second predicted data
Perform reconstruction
S1405
Reconstructed data of the intermediate data
Perform a second-phase operation of graphics processing (for example, rendering processing, physical simulation processing, or animation processing)
S1406
Data content for displaying

FIG. 14

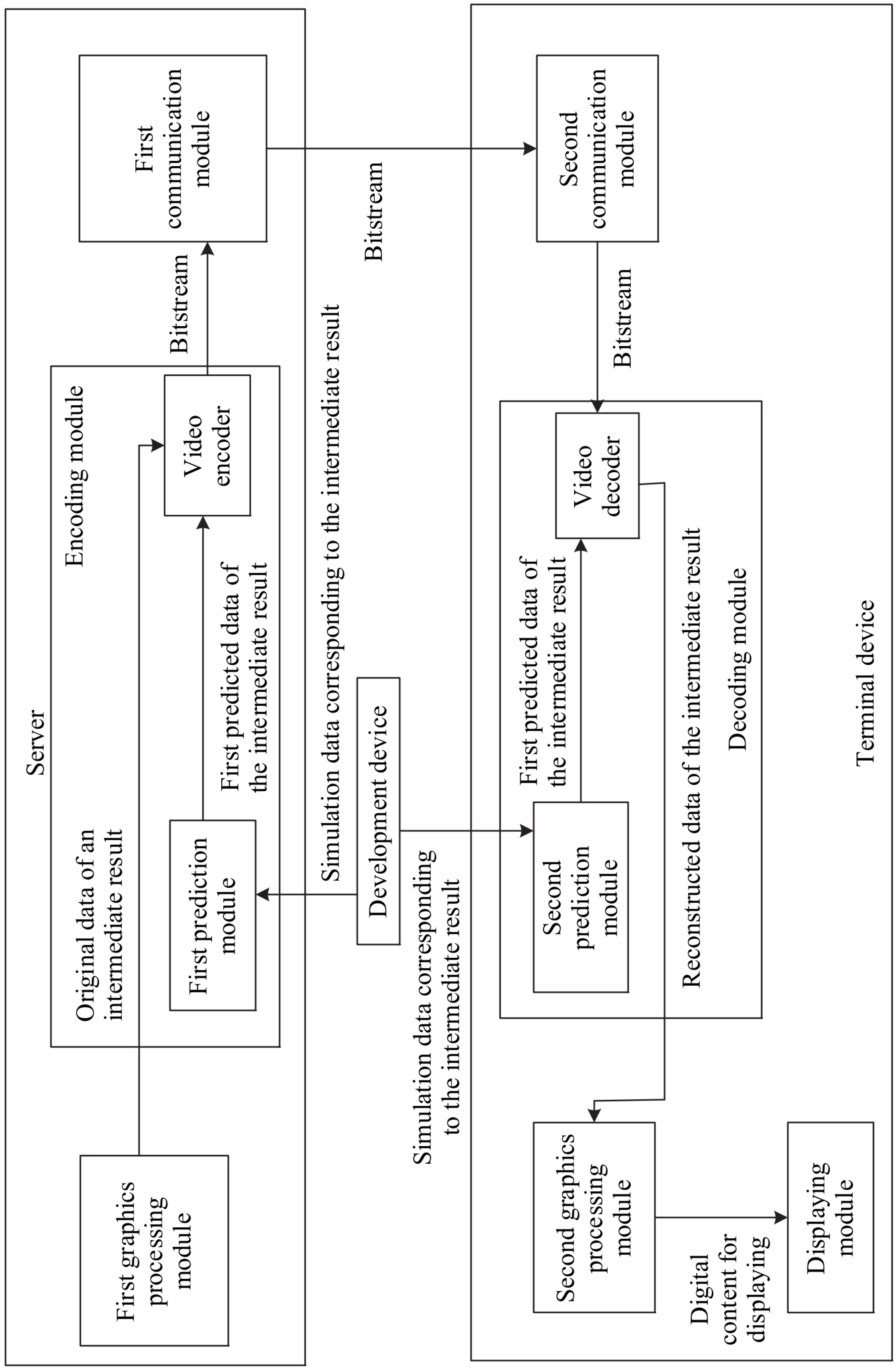
Server
First graphics processing module
Original data of an intermediate result
Encoding module
First prediction module
First predicted data of the intermediate result
Video encoder
Bitstream
First communication module
Simulation data corresponding to the intermediate result
Development device
Simulation data corresponding to the intermediate result
Bitstream
Terminal device
Second communication module
Bitstream
Video decoder
First predicted data of the intermediate result
Second prediction module
Reconstructed data of the intermediate result
Decoding module
Second graphics processing module
Digital content for displaying
Displaying module

FIG. 15a

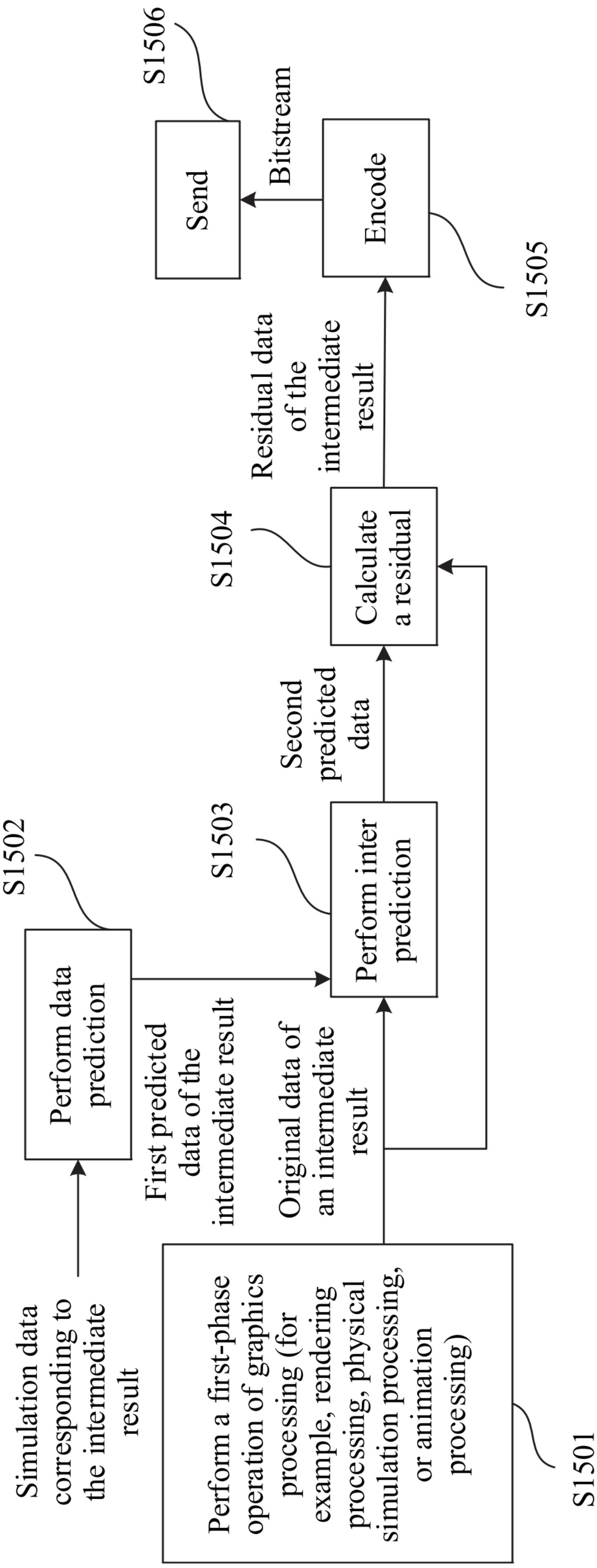
Simulation data corresponding to the intermediate result
Perform a first-phase operation of graphics processing (for example, rendering processing, physical simulation processing, or animation processing)
S1501
Perform data prediction
S1502
First predicted data of the intermediate result
Original data of an intermediate result
Perform inter prediction
S1503
Second predicted data
Calculate a residual
S1504
Residual data of the intermediate result
Encode
S1505
Bitstream
Send
S1506

FIG. 15b

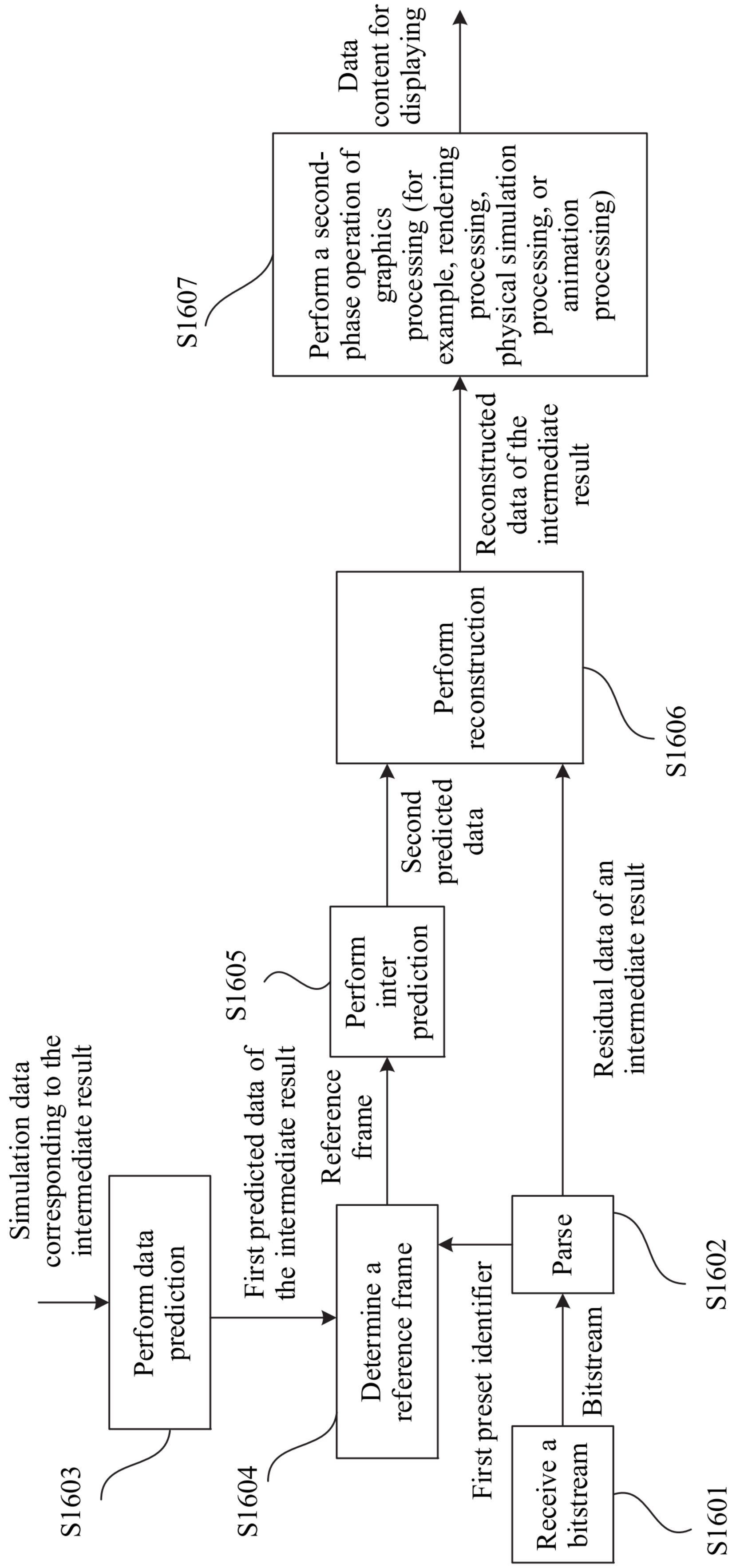
Simulation data corresponding to the intermediate result
Perform data prediction
S1603
First predicted data of the intermediate result
Determine a reference frame
S1604
Reference frame
Perform inter prediction
S1605
Second predicted data
Receive a bitstream
S1601
Bitstream
First preset identifier
Parse
S1602
Residual data of an intermediate result
Perform reconstruction
S1606
Reconstructed data of the intermediate result
Perform a second-phase operation of graphics processing (for example, rendering processing, physical simulation processing, or animation processing)
S1607
Data content for displaying

FIG. 16

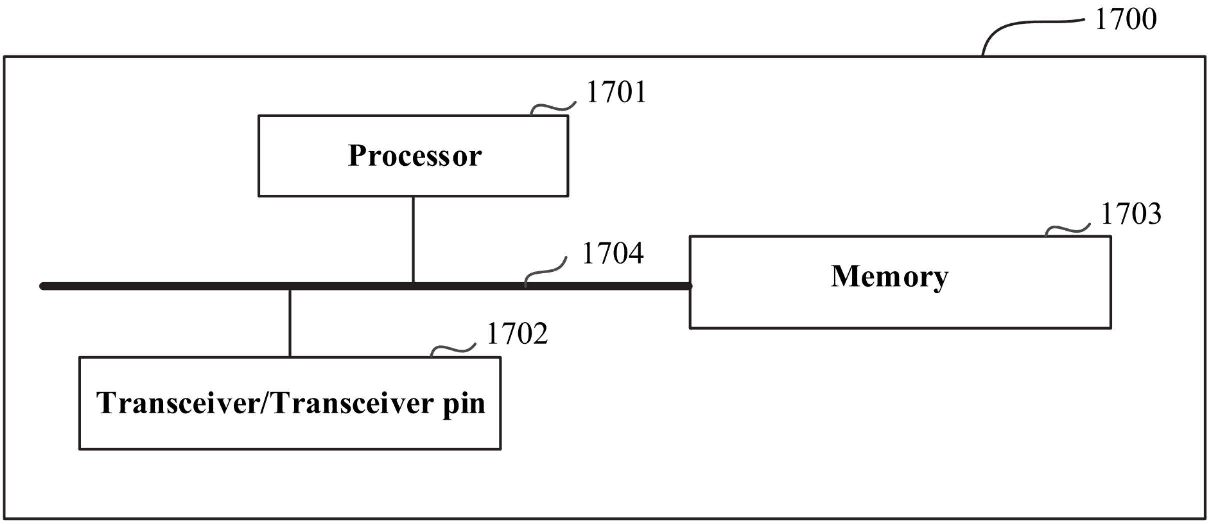
1700
1701
Processor
1703
1704
Memory
1702
Transceiver/Transceiver pin

FIG. 17

## INTERNATIONAL SEARCH REPORT

International application No.
**PCT/CN2024/071553**

**A. CLASSIFICATION OF SUBJECT MATTER**

H04L 65/60(2022.01)i

According to International Patent Classification (IPC) or to both national classification and IPC

**B. FIELDS SEARCHED**

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNTXT, ENTXT, WPABS, DWPI, VEN: 差异, 残差, 烘焙数据, 模拟数据, 原始数据, 参考帧, 预测, 重建, 编码, 解码, 中间, difference, residual, roaked data, simulated data, raw data, reference frame, prediction, reconstruction, encoding, decoding, intermediate

**C. DOCUMENTS CONSIDERED TO BE RELEVANT**

| Category* | Citation of document, with indication, where appropriate, of the relevant passages | Relevant to claim No. |
|---|---|---|
| X | US 2003076881 A1 (AKIYOSHI, Kozo et al.) 24 April 2003 (2003-04-24)<br>description, paragraphs 0006-0031 and 0257-0272 | 1-29, 45-48 |
| X | US 2022210435 A1 (HYUNDAI MOTOR COMPANY et al.) 30 June 2022 (2022-06-30)<br>description, paragraphs 0035-0078 | 30-48 |
| A | CN 114359021 A (NETEASE (HANGZHOU) NETWORK CO., LTD.) 15 April 2022 (2022-04-15)<br>entire document | 1-48 |
| A | WO 2022061563 A1 (SZ DJI TECHNOLOGY CO., LTD.) 31 March 2022 (2022-03-31)<br>entire document | 1-48 |
| A | WO 2022261838 A1 (GUANGDONG OPPO MOBILE TELECOMMUNICATIONS CORP., LTD.) 22 December 2022 (2022-12-22)<br>entire document | 1-48 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **25 March 2024** | **29 March 2024** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**
**Information on patent family members**

International application No.
**PCT/CN2024/071553**

| Patent document cited in search report | Publication date (day/month/year) | Patent family member(s) | Publication date (day/month/year) |
|---|---|---|---|
| US 2003076881 A1 | 24 April 2003 | JP 2003018602 A | 17 January 2003 |
| | | EP 1261212 A2 | 27 November 2002 |
| US 2022210435 A1 | 30 June 2022 | KR 20220097251 A | 07 July 2022 |
| CN 114359021 A | 15 April 2022 | None | |
| WO 2022061563 A1 | 31 March 2022 | None | |
| WO 2022261838 A1 | 22 December 2022 | CN 117480778 A | 30 January 2024 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202310084789